(19) Europäisches Patentamt
European Patent Office
Office européen des brevets

(11) **EP 4 683 319 A1**

(12) **EUROPEAN PATENT APPLICATION**
published in accordance with Art. 153(4) EPC

(43) Date of publication:
**21.01.2026 Bulletin 2026/04**

(21) Application number: **24770227.7**

(22) Date of filing: **25.01.2024**

(51) International Patent Classification (IPC):
*H04N 13/351* (2018.01)    *G02B 30/56* (2020.01)
*H04N 13/275* (2018.01)    *H04N 13/346* (2018.01)

(52) Cooperative Patent Classification (CPC):
**G02B 30/56; H04N 13/275; H04N 13/346;
H04N 13/351**

(86) International application number:
**PCT/JP2024/002277**

(87) International publication number:
**WO 2024/190107 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.03.2023 JP 2023042411**

(71) Applicant: **Maxell, Ltd.
Kyoto 618-8525 (JP)**

(72) Inventors:
• **SHIMIZU, Takuya**
**Otokuni-gun, Kyoto 618-8525 (JP)**
• **FUJITA, Koji**
**Otokuni-gun, Kyoto 618-8525 (JP)**
• **ASAKURA, Sho**
**Otokuni-gun, Kyoto 618-8525 (JP)**
• **SEO, Yoshiho**
**Otokuni-gun, Kyoto 618-8525 (JP)**

(74) Representative: **Mewburn Ellis LLP
Aurora Building
Counterslip
Bristol BS1 6BX (GB)**

(54) **AERIAL IMAGE DISPLAY DEVICE AND CHARACTER DISPLAY DEVICE**

(57) A more suitable aerial floating video display apparatus is provided. According to the present invention, it is possible to contribute to "Goal 3: Ensure healthy lives and promote well-being for all at all ages", "Goal 9: Build resilient infrastructure, promote inclusive and sustainable industrialization and foster innovation" and "Goal 11: Make cities and human settlements inclusive, safe, resilient and sustainable" in the Sustainable Development Goals (SDGs). The aerial floating video display apparatus is configured such that a video processor performs video processing on a video generated by rendering a virtual 3D space in which an object of a character is positioned, the rendering of the virtual 3D space is performed by capturing by a virtual 3D space camera set in the virtual 3D space and using a perspective drawing method, and the video generated by the rendering and displayed on the display is a video captured and rendered from the virtual 3D space in which the object of the character is positioned by setting an angle of view of the virtual 3D space camera so as to satisfy $Lf \geq Lm \times Fi/Pa$.

FIG. 3

## Description

TECHNICAL FIELD

The present invention relates to an aerial floating video display apparatus.

BACKGROUND ART

For example, Patent Document 1 discloses an aerial floating information display technology.

RELATED ART DOCUMENT

PATENT DOCUMENT

Patent Document 1: Japanese Patent Application Laid-open Publication No. 2019-128722

SUMMARY OF THE INVENTION

PROBLEMS TO BE SOLVED BY THE INVENTION

However, in the disclosure of Patent Document 1, sufficient consideration has not been given to the configuration for obtaining practical brightness and quality of an aerial floating video, the configuration for enabling a user to visually recognize an aerial floating video more enjoyably, and the like.

An object of the present invention is to provide a more suitable aerial floating video display apparatus.

MEANS FOR SOLVING THE PROBLEMS

In order to solve the problem described above, for example, the configuration described in claims is adopted. Although this application includes a plurality of means for solving the problem, one example thereof can be presented as an aerial floating video display apparatus including a video processor, a display configured to display a video that has been subjected to video processing by the video processor, and an optical system configured to generate an aerial floating video based on the video displayed on the display. The video processor is configured to perform video processing on a video generated by rendering a virtual 3D space in which an object of a character is positioned, the rendering of the virtual 3D space is performed by capturing by a virtual 3D space camera set in the virtual 3D space and using a perspective drawing method, and the video generated by the rendering and displayed on the display is a video captured and rendered from the virtual 3D space in which the object of the character is positioned by setting an angle of view of the virtual 3D space camera so as to satisfy $Lf \geq Lm \times Fi/Pa$, where $Lf$ is a focal length of a lens of the virtual 3D space camera for a 35 mm film equivalent, $Lm$ is a visual distance which is a visible distance of a user from the aerial floating video display apparatus to a display screen of the aerial floating video, $Fi$ is a diagonal length of the 35 mm film, and $Pa$ is a diagonal length of the display screen of the aerial floating video.

EFFECTS OF THE INVENTION

According to the present invention, it is possible to realize a more suitable aerial floating video display apparatus. Other problems, configurations, and effects will become apparent in the following description of the embodiments.

BRIEF DESCRIPTIONS OF THE DRAWINGS

[FIG. 1] A diagram showing an example of usage form of an air floating video display apparatus according to one embodiment of the present invention.
[FIG. 2A] A diagram showing examples of a configuration of a main part and a configuration of a retroreflection portion of the air floating video display apparatus according to one embodiment of the present invention.
[FIG. 2B] A diagram showing examples of a configuration of a main part and a configuration of a retroreflection portion of the air floating video display apparatus according to one embodiment of the present invention.
[FIG. 2C] A diagram showing examples of a configuration of a main part and a configuration of a retroreflection portion of the air floating video display apparatus according to one embodiment of the present invention.
[FIG. 2D] A diagram showing examples of a configuration of a main part and a configuration of a retroreflection portion of the aerial floating video display apparatus according to one embodiment of the present invention.
[FIG. 2E] A projection drawing of a retroreflection plate constituting the aerial floating video display apparatus according to one embodiment of the present invention.
[FIG. 2F] A top view of the retroreflection plate constituting the aerial floating video display apparatus according to one embodiment of the present invention.
[FIG. 2G] A perspective view showing a corner reflector constituting the retroreflection plate constituting the aerial floating video display apparatus according to one embodiment of the present invention.
[FIG. 2H] A top view showing the corner reflector constituting the retroreflection plate constituting the aerial floating video display apparatus according to one embodiment of the present invention.
[FIG. 2I] A side view showing the corner reflector constituting the retroreflection plate constituting the aerial floating video display apparatus according to one embodiment of the present invention.

[FIG. 3] A diagram showing a configuration example of an air floating video display apparatus according to one embodiment of the present invention.

[FIG. 4A] A diagram showing an example of the configuration of the air floating video display apparatus according to one embodiment of the present invention.

[FIG. 4B] A diagram showing an example of the configuration of the air floating video display apparatus according to one embodiment of the present invention.

[FIG. 4C] A diagram showing an example of the configuration of the air floating video display apparatus according to one embodiment of the present invention.

[FIG. 4D] A diagram showing an example of the configuration of the air floating video display apparatus according to one embodiment of the present invention.

[FIG. 4E] A diagram showing an example of the configuration of the air floating video display apparatus according to one embodiment of the present invention.

[FIG. 4F] A diagram showing an example of the configuration of the air floating video display apparatus according to one embodiment of the present invention.

[FIG. 4G] A diagram showing an example of the configuration of the air floating video display apparatus according to one embodiment of the present invention.

[FIG. 4H] A diagram showing an example of the configuration of the air floating video display apparatus according to one embodiment of the present invention.

[FIG. 4I] A diagram showing an example of the configuration of the air floating video display apparatus according to one embodiment of the present invention.

[FIG. 4J] A diagram showing an example of the configuration of the air floating video display apparatus according to one embodiment of the present invention.

[FIG. 4K] A diagram showing an example of the configuration of the air floating video display apparatus according to one embodiment of the present invention.

[FIG. 4L] A diagram showing an example of the configuration of the air floating video display apparatus according to one embodiment of the present invention.

[FIG. 4M] A diagram showing an example of the configuration of the air floating video display apparatus according to one embodiment of the present invention.

[FIG. 4N] A diagram showing an example of the configuration of the air floating video display apparatus according to one embodiment of the present invention.

[FIG. 4O] A diagram showing an example of the configuration of the air floating video display apparatus according to one embodiment of the present invention.

[FIG. 5] A cross-sectional view showing an example of a specific configuration of a light source apparatus according to one embodiment of the present invention.

[FIG. 6] A cross-sectional view showing an example of the specific configuration of the light source apparatus according to one embodiment of the present invention.

[FIG. 7] A cross-sectional view showing an example of the specific configuration of the light source apparatus according to one embodiment of the present invention.

[FIG. 8] A layout drawing showing a main part of the air floating video display apparatus according to one embodiment of the present invention.

[FIG. 9] A cross-sectional view showing a configuration of a display apparatus according to one embodiment of the present invention.

[FIG. 10] A cross-sectional view showing a configuration of the display apparatus according to one embodiment of the present invention.

[FIG. 11] An explanatory diagram for describing light source diffusion characteristics of the video display apparatus according to one embodiment of the present invention.

[FIG. 12] An explanatory diagram for describing diffusion characteristics of the video display apparatus according to one embodiment of the present invention.

[FIG. 13A] An explanatory diagram of an example of a problem to be solved by image processing according to one embodiment of the present invention.

[FIG. 13B] An explanatory diagram of an example of image processing according to one embodiment of the present invention.

[FIG. 13C] An explanatory diagram of an example of video display processing according to one embodiment of the present invention.

[FIG. 13D] An explanatory diagram of an example of video display processing according to one embodiment of the present invention.

[FIG. 14] A diagram showing an example of a configuration of a main part and a configuration of a retroreflection portion of the air floating video display apparatus according to one embodiment of the present invention.

[FIG. 15A] An explanatory diagram showing a display example of the air floating video display apparatus according to one embodiment of the present invention.

[FIG. 15B] An explanatory diagram showing a display example of the air floating video display apparatus according to one embodiment of the present invention.

[FIG. 15C] An explanatory diagram showing a display example of the air floating video display apparatus.

[FIG. 15D] An explanatory diagram showing an example of user recognition with respect to the display of the air floating video display apparatus.

[FIG. 16A] An explanatory diagram showing an example of a method of generating a rendered video of a 3D model of a character in a virtual 3D space.

[FIG. 16B] An explanatory diagram showing an example of display processing of the rendered video of the air floating video display apparatus according to one embodiment of the present invention.

[FIG. 16C] An explanatory diagram showing an example of a visual distance of a user of the air floating video display apparatus according to one embodiment of the present invention.

[FIG. 16D] An explanatory diagram showing an example of calculation results for arm length based on study results.

[FIG. 16E] An explanatory diagram of an example of a focal length of a virtual 3D space camera used for rendering according to one embodiment of the present invention.

[FIG. 16F] An explanatory diagram of an example of the focal length of the virtual 3D space camera used for rendering according to one embodiment of the present invention.

[FIG. 17A] An explanatory diagram of a display example of the air floating video display apparatus according to one embodiment of the present invention.

[FIG. 17B] An explanatory diagram of an example of user recognition of the display of the air floating video display apparatus according to one embodiment of the present invention.

[FIG. 18] An explanatory diagram of an example of the air floating video display apparatus according to one embodiment of a predetermined region in the air floating video of the present invention.

[FIG. 19A] An explanatory diagram of an example of a character conversation apparatus and the character conversation system according to one embodiment of the present invention.

[FIG. 19B] An explanatory diagram of an example of an operation of the character conversation apparatus and the character conversation system according to one embodiment of the present invention.

[FIG. 19C] An explanatory diagram of an example of an operation of the character conversation apparatus and the character conversation system according to one embodiment of the present invention.

[FIG. 19D] An explanatory diagram of an example of a conversation in the character conversation apparatus and the character conversation system according to one embodiment of the present invention.

[FIG. 19E] An explanatory diagram of an example of an operation of the character conversation apparatus and the character conversation system according to one embodiment of the present invention.

[FIG. 19F] An explanatory diagram of an example of an operation of the character conversation apparatus and the character conversation system according to one embodiment of the present invention.

[FIG. 19G] An explanatory diagram of an example of an operation of the character conversation apparatus and the character conversation system according to one embodiment of the present invention.

[FIG. 19H] An explanatory diagram of an example of an operation of the character conversation apparatus and the character conversation system according to one embodiment of the present invention.

[FIG. 19I] An explanatory diagram of an example of an operation of the character conversation apparatus and the character conversation system according to one embodiment of the present invention.

[FIG. 19J] An explanatory diagram of an example of an operation of the character conversation apparatus and the character conversation system according to one embodiment of the present invention.

[FIG. 20A] An explanatory diagram of an example of the character conversation apparatus and the character conversation system according to one embodiment of the present invention.

[FIG. 20B] An explanatory diagram of an example of an operation of the character conversation apparatus and the character conversation system according to one embodiment of the present invention.

[FIG. 20C] An explanatory diagram of an example of an operation of the character conversation apparatus and the character conversation system according to one embodiment of the present invention.

[FIG. 20D] An explanatory diagram of an example of a conversation in the character conversation apparatus and the character conversation system according to one embodiment of the present invention.

[FIG. 20E] An explanatory diagram of an example of an operation of the character conversation apparatus and the character conversation system according to one embodiment of the present invention.

[FIG. 20F] An explanatory diagram of an example of an operation of the character conversation apparatus and the character conversation system according to one embodiment of the present invention.

[FIG. 20G] An explanatory diagram of an example of an operation of the character conversation apparatus and the character conversation system according to one embodiment of the present invention.

[FIG. 20H] An explanatory diagram of an example of an operation of the character conversation apparatus and the character conversation system according to one embodiment of the present invention.

DETAILED DESCRIPTION OF THE INVENTION

Hereinafter, embodiments of the present invention will be described in detail with reference to the drawings. Note that the present invention is not limited to the described embodiments, and various changes and modifications can be made by those skilled in the art within the scope of the technical idea disclosed in this specification. Further, in all the drawings for describing the present invention, components having the same function are denoted by the same reference characters, and the repetitive descriptions will be omitted in some cases.

The following embodiments relate to a video display apparatus capable of transmitting a video by video light from a video light emitting source through a transparent member that partitions a space such as a glass and displaying the video as an air floating video outside the transparent member. In the following description of the embodiments, a video floating in the air is expressed by the term "air floating video". Instead of this term, expressions such as "aerial image", "space image", "aerial floating video", "air floating optical image of a display image", "aerial floating optical image of a display image", etc. may be used. The term "air floating video" mainly used in the description of the embodiments is used as a representative example of these terms.

According to the following embodiments, for example, it is possible to realize a video display apparatus suitable for an ATM of a bank, a ticket vending machine of a station, a digital signage, or the like. For example, though a touch panel is generally used in an ATM of a bank, a ticket vending machine of a station, or the like at present, it becomes possible to display high-resolution video information above a transparent glass surface or a light-transmitting plate material in a state of floating in the air. At this time, by making the divergence angle of the emitted video light small, that is, an acute angle, and further aligning the video light with a specific polarized wave, only the normal reflected light is efficiently reflected with respect to the retroreflection plate, so that the light utilization efficiency can be increased, the ghost image which is generated in addition to the main air floating image and is a problem in the conventional retroreflective system can be suppressed, and a clear air floating video can be obtained. Also, with the apparatus including the light source of the present embodiment, it is possible to provide a novel and highly usable air floating video display apparatus (air floating video display system) capable of significantly reducing power consumption. Further, it is also possible to provide an in-vehicle air floating video display apparatus capable of displaying a so-called unidirectional air floating video which can be visually recognized inside and/or outside the vehicle.

<First Embodiment>

<Example of Usage Form of Air Floating Video Display Apparatus>

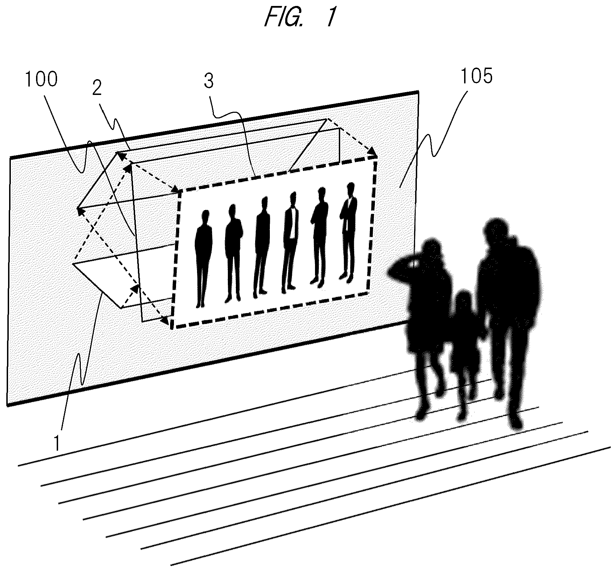

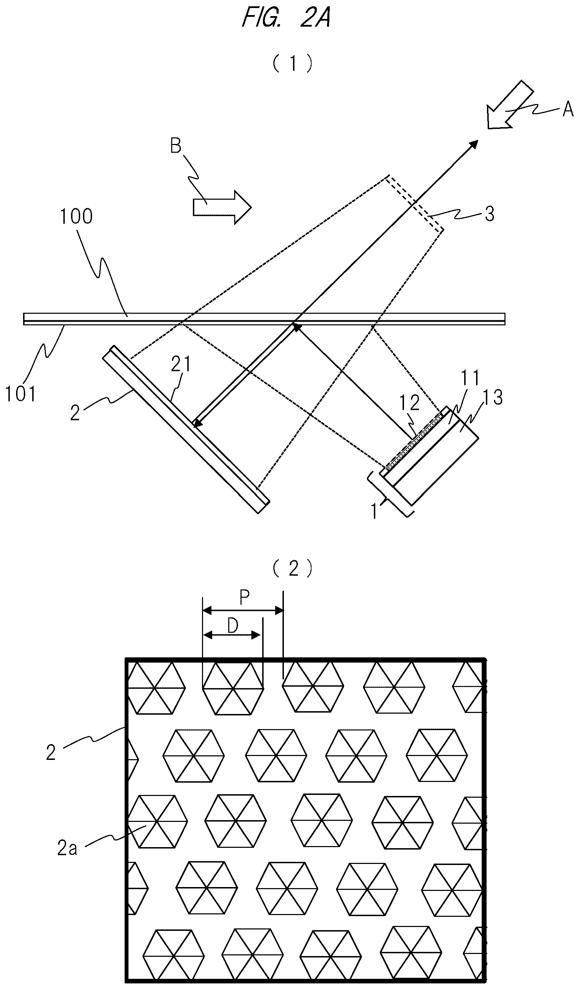

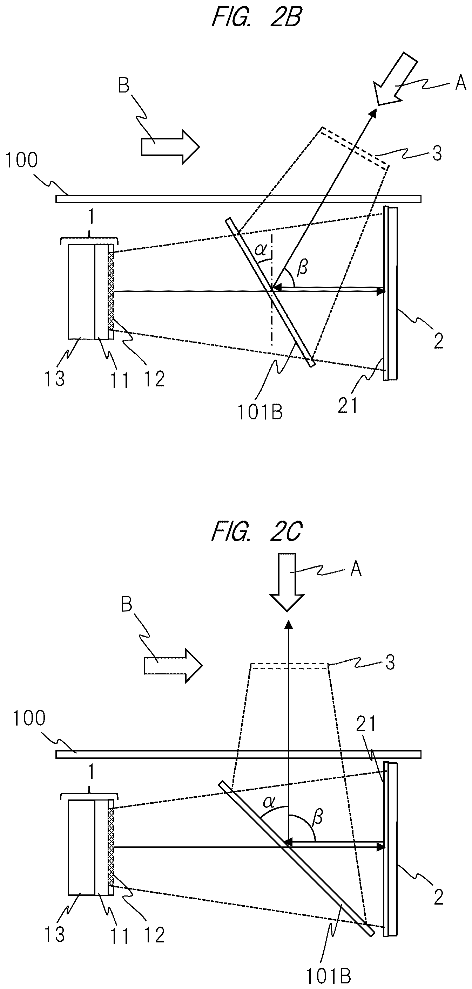

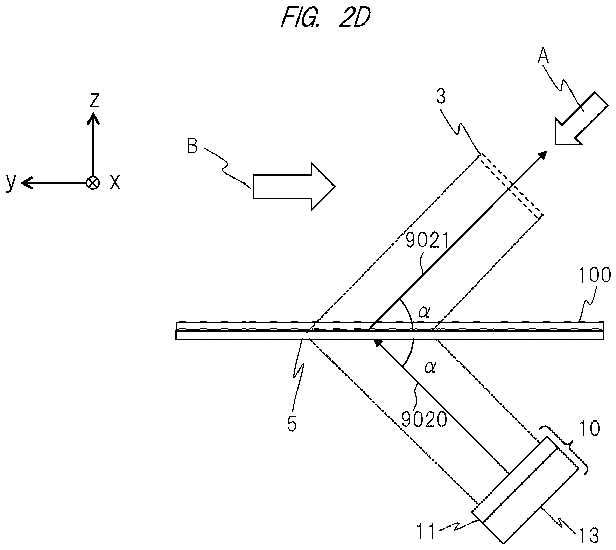

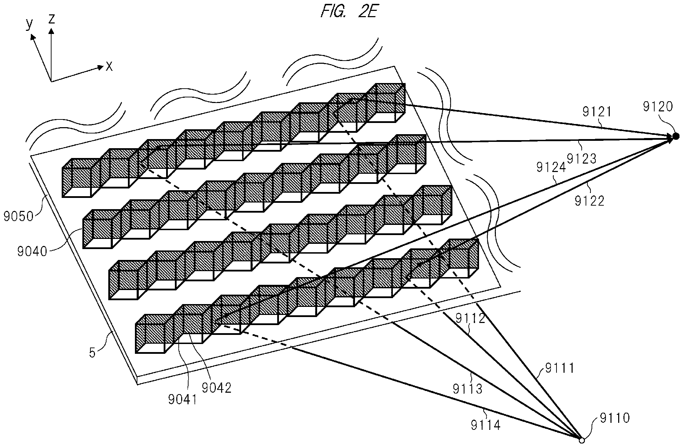

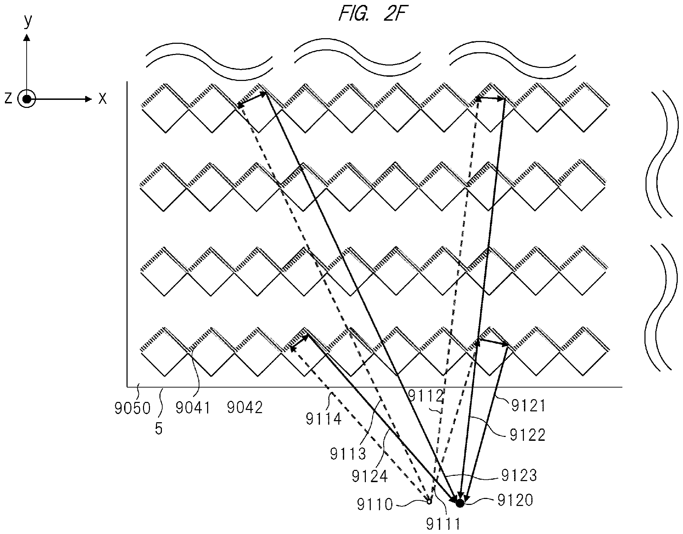

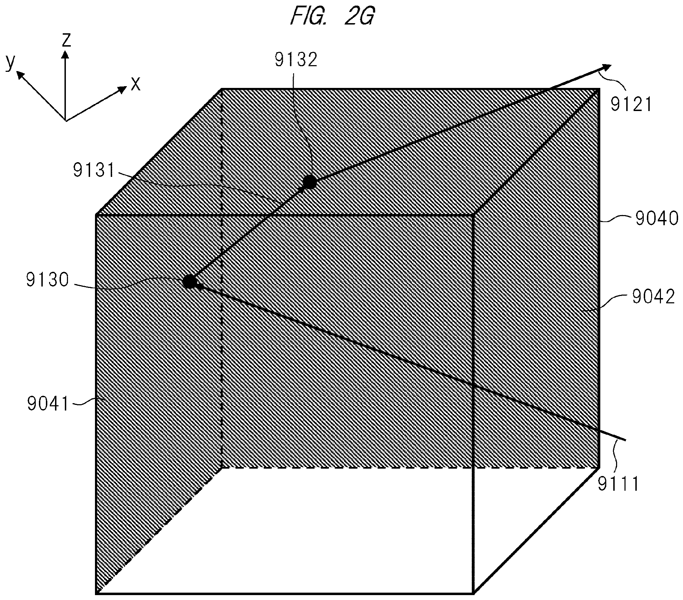

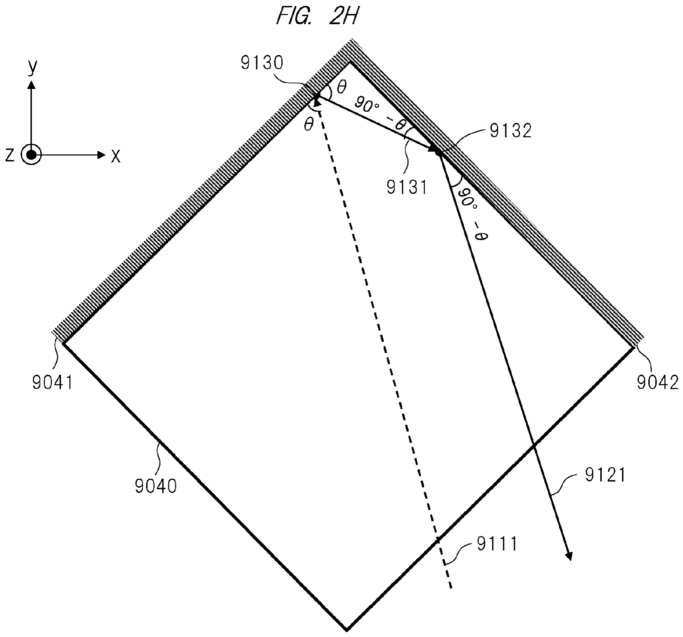

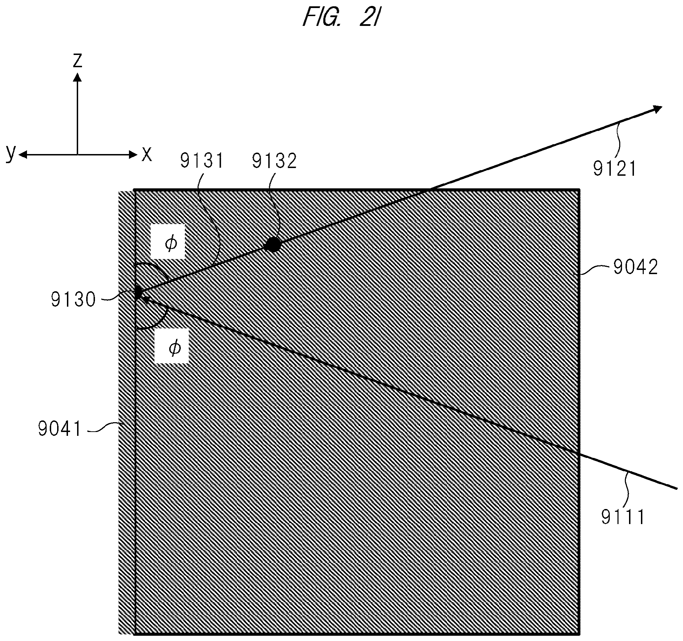

FIG. 1 is a diagram showing an example of usage form of an air floating video display apparatus according to one embodiment of the present invention, and is a diagram showing an entire configuration of the air floating video display apparatus according to the present embodiment. Although a specific configuration of the air floating video display apparatus will be described in detail with reference to FIG. 2 and the like, light of a specific polarized wave with narrow-angle directional characteristics is emitted from a video display apparatus 1 as a video light flux, once enters a retroreflection plate 2 thorough reflection or the like on an optical system in the air floating video display apparatus, is retroreflected and passes through a transparent member 100 (glass or the like), thereby forming an aerial image (air floating video 3) which is a real image on the outside of the glass surface. In the following description of the embodiments, the retroreflection plate 2 (retroreflective plate) will be used as an example of a retroreflector. However, the retroreflection plate 2 of the present invention is not limited to a planar plate, and is used as an example of a concept including a sheet-like retroreflector attached to a planar or non-planar member or an entire assembly in which a sheet-like retroreflector is attached to a planar or non-planar member. In addition, since the light ray reflected by the retroreflection plate 2 has optical properties that allow it to form an image, the retroreflection plate 2 may also be referred to as an imaging optical member or an imaging optical plate.

In a store or the like, a space is partitioned by a show window (referred to also as "window glass") 105 which is a translucent member such as glass. With the air floating video display apparatus of the present embodiment, the floating video can be displayed in one direction to the outside and/or the inside of the store (space) through such a transparent member.

In FIG. 1, the inner side of the window glass 105 (the inside of the store) is shown on the far side in the depth direction, and the outer side thereof (e.g., a sidewalk) is shown on the near side. On the other hand, it is also possible to form an aerial image at a desired position in the store by providing a reflector configured to reflect a specific polarized wave on the window glass 105 and reflecting the light by the reflector.

<Configuration Example of Optical System of Air Floating Video Display Apparatus>

FIG. 2A is a diagram showing an example of a configuration of an optical system of the air floating video display apparatus according to one embodiment of the present invention. The configuration of the air floating video display apparatus will be described more specifically with reference to FIG. 2A. As shown in FIG. 2A(1), the display apparatus 1 which diverges video light of a specific polarized wave at a narrow angle is provided in the oblique direction of the transparent member 100 such as glass. The display apparatus 1 includes a liquid crystal display panel 11 and a light source apparatus 13 configured to generate light of a specific polarized wave having narrow-angle diffusion characteristics.

The video light of a specific polarized wave from the display apparatus 1 is reflected by a polarization separator 101 having a film selectively reflecting the video light of a specific polarized wave and provided on the transparent member 100 (in the drawing, the polarization separator 101 is formed in a sheet shape and is adhered to the transparent member 100), and enters the retroreflection plate 2. A λ/4 plate 21 is provided on the video light incident surface of the retroreflection plate 2. The video light passes through the λ/4 plate 21 twice at the time when the video light enters the retroreflection plate 2 and at the time when the video light is emitted from the retroreflection plate 2, whereby the video light is subjected to polarization conversion from a specific polarized wave to the other polarized wave. Here, since the polarization separator 101 which selectively reflects the video light of a specific polarized wave has a property of transmitting the polarized light of the other polarized wave subjected to the polarization conversion, the video light of the specific polarized wave after the polarization conversion passes through the polarization separator 101. The video light that has passed through the polarization separator 101 forms the air floating video 3, which is a real image, on the outside of the transparent member 100. Note that the main light ray of the video light that enters the retroreflection plate 2 is shown in FIG. 2A as an example in which it enters at an angle of 90° with respect to the retroreflection plate 2. However, the angle at which the main light ray of the video light enters the retroreflection plate 2 is not limited to 90°, and may enter at angles of, for example, 90°±15°.

Here, a first example of a polarization design in the optical system in FIG. 2A will be described. For example, the configuration in which the video light of S polarization is emitted from the display apparatus 1 to the polarization separator 101 and the polarization separator 101 has the property of reflecting S polarization and transmitting P polarization is also possible. In this case, the video light of S polarization that has reached the polarization separator 101 from the display apparatus 1 is reflected by the polarization separator 101 and is directed toward the retroreflection plate 2. Since the video light passes through the λ/4 plate 21 provided on the incident surface of the retroreflection plate 2 twice when the video light is reflected by the retroreflection plate 2, the video light is converted from S-polarized light into P-polarized light. The video light converted into P-polarized light is directed toward the polarization separator 101 again. Here, since the polarization separator 101 has the property of reflecting S polarization and transmitting P polarization, the video light of P polarization passes through the polarization separator 101 and then passes through the transparent member 100. Since the video light that has passed through the transparent member 100 is the light generated by the retroreflection plate 2, the air floating video 3 which is an optical image of the displayed video of the display apparatus 1 is formed at a position having a mirror relationship with the displayed video of the display apparatus 1 with respect to the polarization separator 101. With the polarization design described above, the air floating video 3 can be suitably formed.

Next, a second example of the polarization design in the optical system in FIG. 2A will be described. For example, the configuration in which the video light of P polarization is emitted from the display apparatus 1 to the polarization separator 101 and the polarization separator 101 has the property of reflecting P polarization and transmitting S polarization is also possible. In this case, the video light of P polarization that has reached the polarization separator 101 from the display apparatus 1 is reflected by the polarization separator 101 and is directed toward the retroreflection plate 2. Since the video light passes through the λ/4 plate 21 provided on the incident surface of the retroreflection plate 2 twice when the video light is reflected by the retroreflection plate 2, the video light is converted from P-polarized light into S-polarized light. The video light converted into S-polarized light is directed toward the polarization separator 101 again. Here, since the polarization separator 101 has the property of reflecting P polarization and transmitting S polarization, the video light of S polarization passes through the polarization separator 101 and then passes through the transparent member 100. Since the video light that has passed through the transparent member 100 is the light generated by the retroreflection plate 2, the air floating video 3 which is an optical image of the displayed video of the display apparatus 1 is formed at a position having a mirror relationship with the displayed video of the display apparatus 1 with respect to the polarization separator 101. With the polarization design described above, the air floating video 3 can be suitably formed.

Note that the light that forms the air floating video 3 is a set of light rays converging from the retroreflection plate 2 to the optical image of the air floating video 3, and these light rays go straight even after passing through the optical image of the air floating video 3. Therefore, the air floating video 3 is a video having high directivity, unlike diffused video light formed on a screen by a general projector or the like. Therefore, in the configuration of FIG. 2A, when the user visually recognizes the air floating video 3 from the direction of an arrow A, the air floating video 3 is visually recognized as a bright video. However, when another person visually recognizes the video from the direction of an arrow B, the air floating video 3 cannot be visually recognized as a video at all. These characteristics are very suitable for use in a system that displays a video requiring high security or a highly confidential video that is desired to be kept secret from a person facing the user.

Note that, depending on the performance of the retroreflection plate 2, the polarization axes of the video light after the reflection may become uneven, and the reflection angles may also become uneven. Such uneven light does not maintain the polarization state and traveling angle assumed in design in some cases. For example, such light with the polarization state and traveling angle that are not assumed in design may directly enter the video display surface of the liquid crystal display panel 11 again from the position of the retroreflection plate 2 without passing through the polarization separator. Also, such light with the polarization state and traveling angle that are not assumed in design may enter the video display surface of the liquid crystal display panel 11 again after being reflected by components in the air floating video display apparatus. The light that has entered the video display surface of the liquid crystal display panel 11 again is reflected again on the video display surface of the liquid crystal display panel 11 constituting the display apparatus 1, so that a ghost image is generated and the image quality of the air floating image is deteriorated in some cases. Thus, in the present embodiment, an absorptive polarization plate 12 may be provided on the video display surface of the display apparatus 1. The video light emitted from the display apparatus 1 is transmitted through the absorptive polarization plate 12, and the reflected light returning from the polarization separator 101 is absorbed by the absorptive polarization plate 12, whereby the re-reflection described above can be suppressed. In this way, it is possible to prevent deterioration in image quality due to a ghost image of an air floating image. Specifically, in the configuration in which the video light of S polarization is emitted from the display apparatus 1 to the polarization separator 101, the polarization plate that absorbs P-polarized light can be used as the absorptive polarization plate 12. Also, in the configuration in which the video light of P polarization is emitted from the display apparatus 1 to the polarization separator 101, the polarization plate that absorbs S-polarized light can be used as the absorptive polarization plate 12.

The polarization separator 101 described above may be formed of, for example, a reflective polarization plate or a metal multilayer film that reflects a specific polarized wave.

Next, FIG. 2A(2) shows an example of a surface shape of a retroreflection plate as the typical retroreflection plate 2. The light ray that enters regularly arranged hexagonal columns is reflected by the wall surfaces and bottom surfaces of the hexagonal columns and emitted as retroreflected light in a direction corresponding to the incident light, and an air floating video which is a real image is displayed based on the video displayed on the display apparatus 1.

The resolution of the air floating image largely depends on the outer shape D and pitch P of the retroreflection portions of the retroreflection plate 2 shown in FIG. 2A(2), in addition to the resolution of the liquid crystal display panel 11. For example, when a 7-inch WUXGA (1920 × 1200 pixels) liquid crystal display panel is used, even if one pixel (one triplet) is about 80 $\mu$m, one pixel of the air floating image is about 300 $\mu$m if the diameter D of the retroreflection portion is 240 $\mu$m and the pitch is 300 $\mu$m, for example. Therefore, the effective resolution of the air floating video is reduced to about 1/3.

Therefore, in order to make the resolution of the air floating video equal to the resolution of the display apparatus 1, it is desired that the diameter and the pitch of the retroreflection portions are close to one pixel of the liquid crystal display panel. On the other hand, in order to suppress the occurrence of moire caused by the retroreflection plate and the pixels of the liquid crystal display panel, it is preferable to design each pitch ratio so as not to be an integral multiple of one pixel. Further, the shape is preferably arranged such that any one side of the retroreflection portion does not overlap with any one side of one pixel of the liquid crystal display panel.

Note that the surface shape of the retroreflection plate according to the present embodiment is not limited to the above example, and the retroreflection plate may have a variety of surface shapes to realize the retroreflection. Specifically, a retroreflective element in which triangular pyramidal prisms, hexagonal pyramidal prisms, other polygonal prisms, or combinations thereof are regularly arranged may be provided on the surface of the retroreflection plate of the present embodiment. Alternatively, a retroreflective element in which these prisms are regularly arranged to form cube corners may be provided on the surface of the retroreflection plate of the present embodiment. These can also be referred to as corner reflector arrays or multi-faceted reflector arrays. Moreover, a capsule-lens retroreflection element in which glass beads are regularly arranged may be provided on the surface of the retroreflection plate of the present embodiment. Since existing techniques can be used for the detailed configurations of these retroreflective elements, detailed description thereof will be omitted. Specifically, it is possible to use the techniques disclosed in Japanese Unexamined Patent Application Publications No. 2001-33609, No. 2001-264525, No. 2005-181555, No. 2008-70898, No. 2009-229942, and others.

<Another Configuration Example (1) of Optical System of Air Floating Video Display Apparatus>

Another configuration example of the optical system of the air floating video display apparatus will be described with reference to FIG. 2B. Note that it is assumed that components in FIG. 2B denoted by the same reference characters as those in FIG. 2A have the same functions and configurations as those in FIG. 2A. The repetitive descriptions for such components will be omitted to simplify the description.

In the optical system in FIG. 2B, video light of a specific polarized wave is output from the display apparatus 1 as in FIG. 2A. The video light of a specific polarized wave output from the display apparatus 1 is input to a polarization separator 101B. The polarization separator 101B is a member that selectively transmits video light of a specific polarized wave. Unlike the polarization separator 101 inFIG. 2A the polarization separator 101B is not integrated with the transparent member 100 but has a plate-like shape independently. Therefore, the polarization separator 101B may be expressed as a polarization separation plate. For example, the polarization separator 101B may be configured as a reflective polarization plate obtained by attaching a polarization separation sheet on a transparent member. Alternatively, the polarization separator 101B may be formed by attaching a metal multilayer film that selectively transmits a specific polarized wave and reflects the other specific polarized wave, on a transparent member. In FIG. 2B, the polarization separator 101B is configured so as to transmit the video light of a specific polarized wave output from the display apparatus 1.

The video light that has passed through the polarization separator 101B enters the retroreflection plate 2. The $\lambda/4$ plate 21 is provided on the video light incident surface of the retroreflection plate. The video light is subjected to polarization conversion from a specific polarized wave to the other polarized wave by passing through the $\lambda/4$ plate 21 twice at the time when it enters the retroreflection plate and at the time when it is emitted therefrom. Here, since the polarization separator 101B has a property of reflecting the light of the other polarized wave that has been subjected to the polarization conversion by the $\lambda/4$ plate 21, the video light after the polarization conversion is reflected by the polarization separator 101B. The video light reflected by the polarization separator 101B passes through the transparent member 100, and forms the air floating video 3 which is a real image outside the transparent member 100.

Here, a first example of polarization design in the optical system in FIG. 2B will be described. For example, the configuration in which the video light of P polarization is emitted from the display apparatus 1 to the polarization separator 101B and the polarization separator 101B has a property of reflecting S polarization and transmitting P polarization is also possible. In this case, the video light of P polarization that has reached the polarization separator 101B from the display apparatus 1 passes through the polarization separator 101B and travels toward the retroreflection plate 2. Since the video light passes through the $\lambda/4$ plate 21 provided on the incident surface of the retroreflection plate 2 twice when it is reflected by the retroreflection plate 2, the video light is converted from P-polarized light into S-polarized light. The video light converted into S-polarized light is directed to the polarization separator 101B again. Here, since the polarization separator 101B has a property of reflecting S polarization and transmitting P polarization, the video light of S polarization is reflected by the polarization separator 101 and passes through the transparent member 100. Since the video light that has passed through the transparent member 100 is the light generated by the retroreflection plate 2, the air floating video 3 which is an optical image of the displayed video of the display apparatus 1 is formed at a position having a mirror relationship with the displayed image of the display apparatus 1 with respect to the polarization separator 101B. With the polarization design described above, the air floating video 3 can be suitably formed.

Next, a second example of a polarization design in the optical system in FIG. 2B will be described. For example, the configuration in which the video light of S polarization is emitted from the display apparatus 1 to the polarization separator 101B and the polarization separator 101B has the property of reflecting P polarization and transmitting S polarization is also possible. In this case, the video light of S polarization that has reached the polarization separator 101B from the display apparatus 1 passes through the polarization separator 101B and is directed toward the retroreflection plate 2. Since the video light passes through the $\lambda/4$ plate 21 provided on the incident surface of the retroreflection plate 2 twice when the video light is reflected by the retroreflection plate 2, the video light is converted from S-polarized light into P-polarized light. The video light converted into P-polarized light is directed toward the polarization separator 101B again. Here, since the polarization separator 101B has the property of reflecting P polarization and transmitting S polarization, the video light of P polarization is reflected by the polarization separator 101 and then passes through the transparent member 100. Since the video light that has passed through the transparent member 100 is the light generated by the retroreflection plate 2, the air floating video 3 which is an optical image of the displayed video of the display apparatus 1 is formed at a position having a mirror relationship with the displayed video of the display apparatus 1 with respect to the polarization separator 101B. With the polarization design described above, the air floating video 3 can be suitably formed.

In FIG. 2B, the video display surface of the display apparatus 1 and the surface of the retroreflection plate 2 are arranged parallel to each other. The polarization separator 101B is arranged so as to be inclined at an angle $\alpha$ (for example, 30°) with respect to the video display surface of the display apparatus 1 and the surface of the retroreflection plate 2. Then, in the reflection by the polarization separator 101B, the traveling direction of the video light reflected by the polarization separator 101B (direction of principal light ray of the video light) differs by an angle $\beta$ (for example, 60°) from the traveling direction of the video light emitted from the retroreflection plate 2 (direction of principal light ray of the video light). With this configuration, in the optical system in FIG. 2B, the video light is output at a predetermined angle shown in the drawing toward the outside of the transparent member 100, and the air floating video 3 which is a real image is formed. In the configuration of FIG. 2B, when the user visually recognizes the air floating video 3 from the direction of an arrow A, the air floating video 3 is visually recognized as a bright video. However, when another person visually recognizes the video from the direction of an arrow B, the air floating video 3 cannot be visually recognized as a video at all. These characteristics are particularly suitable for use in a system that displays a video requiring high security or a highly confidential video that is desired to be kept secret from a person facing the user.

As described above, although the optical system in FIG. 2B has a different configuration from the optical system inFIG. 2A, it is possible to form a suitable air floating video like the optical system in FIG. 2A.

Note that it is also possible to provide an absorptive polarization plate on the surface of the transparent member 100 on the side closer to the polarization separator 101B. As the absorptive polarization plate, an absorptive polarization plate that transmits the polarized wave of the video light from the polarization separator 101B and absorbs the polarized wave whose phase is different by 90° from the polarized wave of the video light from the polarization separator 101B can be provided. In this way, the external light that enters the transparent member 100 from the side of the air floating video 3 can be reduced by about 50%, while sufficiently transmitting the video light for forming the air floating video 3. As a result, it is possible to reduce stray light in the optical system in FIG. 2B due to external light entering the transparent member 100 from the side of the air floating video 3.

<Another Configuration Example (2) of Optical System of Air Floating Video Display Apparatus>

Another configuration example of the optical system of the air floating video display apparatus will be described with reference to FIG. 2C. Note that it is assumed that components in FIG. 2C denoted by the same reference characters as those in FIG. 2B have the same functions and configurations as those in FIG. 2B. The repetitive descriptions for such components will be omitted to simplify the description.

The optical system in FIG. 2C is different from the optical system in FIG. 2B only in the arrangement angle of the polarization separator 101B with respect to the video display surface of the display apparatus 1 and the surface of the retroreflection plate 2. All of the other configurations are the same as those of the optical system in FIG. 2B, and thus the repetitive descriptions will be omitted. The polarization design of the optical system in FIG. 2C is also similar to the polarization design of the optical system in FIG. 2B, and thus the repetitive descriptions will be omitted.

In the optical system in FIG. 2C, the polarization separator 101B is arranged so as to be inclined at an angle α with respect to the video display surface of the display apparatus 1 and the surface of the retroreflection plate 2. In FIG. 2C, the angle α is 45°. With this configuration, in the reflection of the polarization separator 101B, the angle β formed by the traveling direction of the video light reflected by the polarization separator 101B (direction of principal light ray of the video light) with respect to the traveling direction of the video light entering from the retroreflection plate 2 (direction of principal light ray of the video light) is 90°. As a result, the video display surface of the display apparatus 1 and the surface of the retroreflection plate 2 are in a perpendicular relationship with the traveling direction of the video light reflected by the polarization separator 101B, and the angular relationship of the surfaces constituting the optical system can be simplified. The angular relationship of the surfaces constituting the optical system can be more simplified if the surface of the transparent member 100 is arranged so as to be orthogonal to the traveling direction of the video light reflected by the polarization separator 101B. In the configuration in FIG. 2C, when the user visually recognizes the air floating video 3 from the direction of an arrow A, the air floating video 3 is visually recognized as a bright video. However, when another person visually recognizes the video from the direction of an arrow B, the air floating video 3 cannot be visually recognized as a video at all. These characteristics are particularly suitable for use in a system that displays a video requiring high security or a highly confidential video that is desired to be kept secret from a person facing the user.

As described above, although the optical system in FIG. 2C has a different configuration from the optical systems in FIG. 2Aand FIG. 2B, it is possible to form a suitable air floating video like the optical systems inFIG. 2A and FIG. 2B. Furthermore, the angles of the surfaces constituting the optical system can be simplified.

Note that it is also possible to provide an absorptive polarization plate on the surface of the transparent member 100 on the side closer to the polarization separator 101B. As the absorptive polarization plate, an absorptive polarization plate that transmits the polarized wave of the video light from the polarization separator 101B and absorbs the polarized wave whose phase is different by 90° from the polarized wave of the video light from the polarization separator 101B can be provided. In this way, the external light that enters the transparent member 100 from the side of the air floating video 3 can be reduced by about 50%, while sufficiently transmitting the video light for forming the air floating video 3. As a result, it is possible to reduce stray light in the optical system in FIG. 2C due to external light entering the transparent member 100 from the side of the air floating video 3.

<Another Configuration Example (3) of Optical System of Air Floating Video Display Apparatus>

Another configuration example of the optical system of the air floating video display apparatus will be described with reference to FIG. 2D. The optical system in FIG.2D is an optical system using a retroreflection plate 5 that differs from the retroreflection plate 2 used in FIG. 2A to FIG. 2C. Hereinafter, the third configuration example of the optical system will be described in detail with reference to FIG. 2D to FIG. 2I. Note that it is assumed that components in FIG. 2D denoted by the same reference characters as those in FIG. 2A to FIG. 2C have the same functions and configurations as those in FIG. 2A to FIG. 2C. The repetitive descriptions for such components will be omitted to simplify the description.

FIG. 2D is a diagram showing examples of a configuration of a main part and a configuration of a retroreflection portion of the air floating video display apparatus according to one embodiment of the present invention. In the oblique direction of the transparent member 100 such as glass, there is provided a display apparatus 10 configured to emit video light. The display apparatus 10 includes a liquid crystal display panel 11 and the light source apparatus 13 configured to generate light.

A light ray 9020 representing the light flux emitted from the display apparatus 10 travels toward the retroreflection plate 5 and enters the retroreflection plate 5 at an incident angle $\alpha$. The incident angle $\alpha$ may be, for example, 45° or the like. However, the incident angle $\alpha$ is not limited to 45°, and may be within a range of, for example, 45°±15°.

The retroreflection plate 5 is an optical member having optical properties that allow it to retroreflect at least a light ray in a certain direction. In addition, since the reflected light ray has image-forming optical properties, the retroreflection plate 5 may also be referred to as an imaging optical member or an imaging optical plate.

Although a specific configuration of the retroreflection plate 5 will be described in detail with reference to FIG. 2E,

FIG. 2F, and the like, the principal light ray 9020 is retroreflected by the retroreflection plate 5 with respect to the x and y directions while travelling in the z direction. As a result, the reflected light ray 9021 travels along an optical path that is mirror-symmetric to the principal light ray 9020 with respect to the retroreflection plate 5, proceeds in a direction away from the retroreflection plate 5, and passes through the transparent member 100, thereby forming the air floating video 3 which is a real image on the image-forming surface.

The light flux that forms the air floating video 3 is a set of light rays converging from the retroreflection plate 5 to the optical image of the air floating video 3, and these light rays go straight even after passing through the optical image of the air floating video 3. Therefore, the air floating video 3 is a video having high directivity, unlike diffused video light formed on a screen by a general projector or the like. Therefore, in the configuration of FIG. 2, when the user visually recognizes the air floating video 3 from the direction of the arrow A, the air floating video 3 is visually recognized as a bright video. However, when another person visually recognizes the video from the direction of the arrow B, the air floating video 3 cannot be visually recognized as a video at all. These characteristics are very suitable for use in a system that displays a video requiring high security or a highly confidential video that is desired to be kept secret from a person facing the user.

A configuration example of the retroreflection plate 5 will be described with reference to FIG. 2E and FIG. 2F. The retroreflection plate 5 has a configuration in which a plurality of corner reflectors 9040 are arranged in an array on a surface of a transparent member 50. This can also be referred to as a corner reflector array or a multi-faceted reflector array. Although a specific configuration of the corner reflector 9040 will be described in detail with reference to FIG. 2G, FIG. 2H, and FIG. 2I, the light rays 9111, 9112, 9113, and 9114 emitted from a light source 9110 are reflected twice by two mirror surfaces 9041 and 9042 of the corner reflector 9040, thereby forming reflected light rays 9121, 9122, 9123, and 9124. These two reflections constitute retroreflection with respect to the x and y directions, where the light rays are returned in the same direction as the incident direction (travels in a 180°-rotated direction), and constitute regular reflection with respect to the z direction, where total reflection causes the incident angle and the reflected angle to be equal.

Namely, the light rays 9111 to 9114 generate the reflected light rays 9121 to 9124 in a straight line symmetric about the z direction with respect to the corner reflector 9040, thereby forming an aerial real image 9120. Note that the light rays 9111 to 9114 emitted from the light source 9110 are four representative light rays of diffused light from the light source 9110. Depending on diffusion characteristics of the light source 9110, the light rays that enter the retroreflection plate 5 are not limited to these four rays. However, any such incident light ray undergoes the same type of reflection, thereby forming the aerial real image 9120. Note that, for clarity of the drawings, the position of the light source 9110 and the position of the aerial real image 9120 in the x direction are depicted as being offset, but in practice, the position of the light source 9110 and the position of the aerial real image 9120 in the x direction are at the same position and overlap each other when viewed from the z direction.

Next, a configuration and effects of the corner reflectors 9040 constituting the retroreflection plate 5 will be described with reference to FIG. 2G, FIG. 2H, and FIG. 2I. Each corner reflector 9040 is a cuboid in which only two certain surfaces serve as the mirror surfaces 9041 and 9042, while the remaining four surfaces are formed of a transparent member. The retroreflection plate 5 has a configuration in which these corner reflectors 9040 are arranged in an array such that the corresponding mirror surfaces face the same direction.

When viewed from above (+z direction), the light ray 9111 emitted from the light source 9110 enters the mirror surface 9041 (or mirror surface 9042) at a certain incident angle, is totally reflected at a reflection point 9130, and then is totally reflected again at a reflection point 9132 on the mirror surface 9042 (or mirror surface 9041).

When the incident angle of the light ray 9111 with respect to the mirror surface 9041 (or mirror surface 9042) is θ, the incident angle of a first reflected light ray 9131 with respect to the mirror surface 9042 (or mirror surface 9041) and reflected by the mirror surface 9041 (or mirror surface 9042) can be expressed as 90°-θ. Therefore, the second reflected light ray 9121 undergoes a rotation of 2θ for the first reflection and $2\times(90°$-θ) for the second reflection with respect to the light ray 9111, resulting in a total optical path reversal of 180°. On the other hand, when viewed from the side (intermediate direction between -x and -y), only one total reflection occurs in the z direction. Therefore, when the incident angle with respect to the mirror surface 9041 or the mirror surface 9042 is ϕ, the reflected light ray 9121 undergoes a rotation of $2\times\phi$ with respect to the light ray 9111 for a single reflection.

From the above, it is clear that the light ray that enters the corner reflector 9040 undergo retroreflection resulting in a reversed optical path in the x and y directions, and regular reflection caused by total reflection in the z direction. Considering the retroreflection plate 5 as a whole, since the same type of reflection occurs in each optical path, the image is formed at a point symmetric about a z-axis direction by a reverse optical path with convergence in the x and y directions.

Here, in the optical system shown in FIG. 2A to FIG. 2C, the retroreflection plate 2 has retroreflection properties in three axial directions. As a result, when a diffusive incident light flux enters the retroreflection plate 2, the reflected light flux with convergence travels toward a side of the light source of the incident light ray with respect to the retroreflection plate 2. The reflected light flux with convergence forms an image in midair, thereby forming the air floating video 3. The traveling direction of the principal light ray of the reflected light flux with convergence reflected by the retroreflection plate 2 is opposite to the traveling direction of the principal light ray of the diffusive incident light flux that enters the retroreflection plate 2.

In contrast, in the optical system of FIG. 2D, the retroreflection plate 5 has retroreflection properties in two axial directions and undergoes regular reflection in the remaining one axial direction. As a result, when the diffusive incident light flux enters the retroreflection plate 5, the reflected light flux with convergence reflected by the corner reflector array travels toward a side opposite to the side where the light source of the incident light ray with respect to the retroreflection plate 5 is located. The reflected light flux with convergence forms an image in midair, thereby forming the air floating video 3.

The traveling direction of the principal light ray of the reflected light flux with convergence reflected by the corner reflector array of the retroreflection plate 5 is not opposite to the traveling direction of the principal light ray of the diffusive incident light flux that enters the retroreflection plate 5. A normal component of a plate-like surface of the retroreflection plate 5 with respect to the traveling direction of the principal light ray of the diffusive incident light flux that enters the retroreflection plate 5 and a normal component of the plate-like surface of the retroreflection plate 5 with respect to the traveling direction of the principal light ray after being reflected by the retroreflection plate 5 and becoming the reflected light flux with convergence remain unchanged before and after reflection by the corner reflector array, and the continues to travel in a straight line.

Namely, the diffusive incident light flux is converted into the reflected light flux with convergence by reflection at the retroreflection plate 5, whereas the light flux proceeds through the retroreflection plate 5 in a direction normal to the plate-like surface of the retroreflection plate 5. Here, the diffusive incident light flux that enters the retroreflection plate 5 and the reflected light flux with convergence emitted from the retroreflection plate 5 are geometrically symmetric about the plate-like surface of the retroreflection plate 5.

The resolution of the air floating image formed by the light ray from a video output unit 10 largely depends on the diameter D and pitch P (not shown) of the retroreflection portions of the retroreflection plate 5 shown in FIG. 2E and FIG. 2F, in addition to the resolution of the liquid crystal display panel 11. For example, when a 7-inch WUXGA (1920 × 1200 pixels) liquid crystal display panel is used, even if one pixel (one triplet) is about 80 μm, one pixel of the air floating image is about 300 μm if, for example, the diameter D of the retroreflection portion is 240 μm and the pitch is 300 μm. Therefore, the effective resolution of the air floating video is reduced to about 1/3.

Therefore, in order to make the resolution of the air floating video equal to the resolution of the display apparatus 1, it is desired that the diameter D and the pitch P of the retroreflection portions are close to one pixel of the liquid crystal display panel. On the other hand, in order to suppress the occurrence of moire caused by the retroreflection plate and the pixels of the liquid crystal display panel, it is preferable to design each pitch ratio so as not to be an integral multiple of one pixel. Further, the shape is preferably arranged such that any one side of the retroreflection portion does not overlap with any one side of one pixel of the liquid crystal display panel.

Note that the shape of the retroreflection plate (imaging optical plate) according to the present embodiment is not limited to the above example, and the retroreflection plate may have a variety of shapes to realize the retroreflection. Specifically, it may have various cubic corners or a corner reflector array, or may have a shape in which a slit mirror array, a double-faceted corner reflector array, a multi-faceted reflector array, or a combination of such reflection surfaces are regularly arranged. Alternatively, a capsule-lens retroreflection element in which glass beads are regularly arranged may be provided on the surface of the retroreflection plate of the present embodiment. Since existing techniques can be used for the detailed configurations of these retroreflective elements, detailed description thereof will be omitted. Specifically, it is possible to use the techniques disclosed in Japanese Patent Application Laid-Open Publication No. 2017-33005, Japanese Patent Application Laid-Open Publication No. 2019-133110, Japanese Patent Application Laid-Open Publication No. 2017-67933, WO2009/131128, and others.

Note that, in the optical system of FIG. 2D, the video light emitted from the display apparatus 10 may have any polarization state. Either S-polarized light or P-polarized light may be used without any issue.

As described above, although the optical system of FIG. 2D is an optical system using a retroreflection plate that differs from the retroreflection plate used in FIG. 2A to FIG. 2C, it is possible to form a suitable air floating video like the optical systems in FIG. 2A and FIG. 2C.

According to the optical systems in FIG. 2A, FIG. 2B, FIG. 2C, and FIG. 2D described above, it is possible to provide a brighter higher-quality air floating video.

<<Block Diagram of Internal Configuration of Air Floating Video Display Apparatus>>

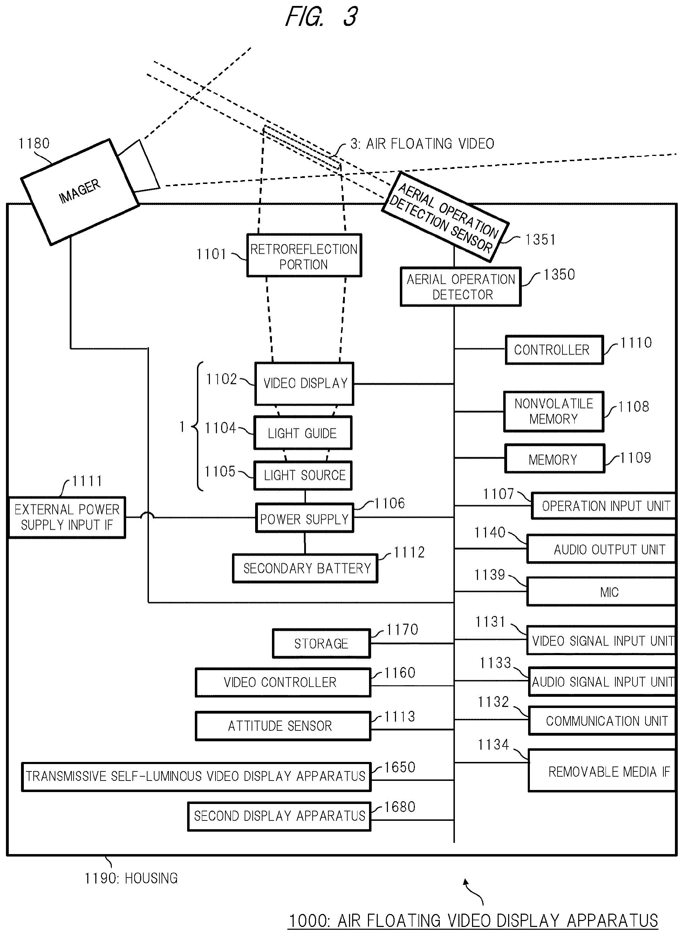

Next, a block diagram of an internal configuration of an air floating video display apparatus 1000 will be described. FIG. 3 is a block diagram showing an example of an internal configuration of the air floating video display apparatus 1000.

The air floating video display apparatus 1000 includes a retroreflection portion 1101, a video display 1102, a light guide 1104, a light source 1105, a power supply 1106, an external power supply input interface 1111, an operation input unit 1107, a nonvolatile memory 1108, a memory 1109, a controller 1110, a video signal input unit 1131, an audio signal input unit 1133, a communication unit 1132, an aerial operation detection sensor 1351, an aerial operation detector 1350, an audio output unit 1140, a microphone 1139, a video controller 1160, a storage 1170, an imager 1180, and the like. Note that the air floating video display apparatus 1000 may include a removable media interface 1134, an attitude sensor 1113, a transmissive self-luminous video display apparatus 1650, a second display apparatus 1680, a secondary battery 1112, and the like.

Each component of the air floating video display apparatus 1000 is arranged in a housing 1190. Note that the imager 1180 and the aerial operation detection sensor 1351 shown in FIG. 3 may be provided outside the housing 1190.

The retroreflection portion 1101 in FIG. 3 corresponds to the retroreflection plate 2 in FIG. 2A, FIG. 2B, and FIG. 2C. The retroreflection portion 1101 retroreflects the light modulated by the video display 1102. Of the reflected light from the retroreflection portion 1101, the light output to the outside of the air floating video display apparatus 1000 forms the air floating video 3.

The video display 1102 in FIG. 3 corresponds to the liquid crystal display panel 11 in FIG. 2A FIG. 2B, and FIG. 2C. The light source 1105 in FIG. 3 corresponds to the light source apparatus 13 in FIG. 2A, FIG. 2B, and FIG. 2C. Further, the video display 1102, the light guide 1104, and the light source 1105 in FIG. 3 correspond to the display apparatus 1 in FIG. 2A, FIG. 2B, and FIG. 2C.

The video display 1102 is a display that generates a video by modulating transmitted light based on a video signal input under the control of the video controller 1160 to be described below. The video display 1102 corresponds to the liquid crystal display panel 11 in FIG. 2A, FIG. 2B, and FIG. 2C. As the video display 1102, for example, a transmissive liquid crystal panel is used. Alternatively, as the video display 1102, for example, a reflective liquid crystal panel using a method of modulating reflected light, a DMD (Digital Micromirror Device: registered trademark) panel, or the like may be used.

The light source 1105 is configured to generate light for the video display 1102, and is a solid-state light source such as an LED light source or a laser light source. The power supply 1106 converts an AC current input from the outside through the external power supply input interface 1111 into a DC current, and supplies power to the light source 1105. Further, the power supply 1106 supplies a necessary DC current to each unit in the air floating video display apparatus 1000. The secondary battery 1112 stores power supplied from the power supply 1106. Also, the secondary battery 1112 supplies power to the light source 1105 and other configurations that require power when power is not supplied from outside via the external power supply input interface 1111. In other words, when the air floating video display apparatus 1000 includes the secondary battery 1112, the user can use the air floating video display apparatus 1000 even when power is not supplied from outside.

The light guide 1104 guides the light generated by the light source 1105 and irradiates the video display 1102 with the light. A combination of the light guide 1104 and the light source 1105 may be referred to also as a backlight of the video display 1102. The light guide 1104 may have a configuration mainly made of glass. The light guide 1104 may have a configuration mainly made of plastic. The light guide 1104 may have a configuration using a mirror. Various configurations are possible as the combination of the light guide 1104 and the light source 1105. A specific configuration example of the combination of the light guide 1104 and the light source 1105 will be described later in detail.

The aerial operation detection sensor 1351 is a sensor that detects an operation on the air floating video 3 by a finger of a user 230. For example, the aerial operation detection sensor 1351 senses a range overlapping with the entire display range of the air floating video 3. Note that the aerial operation detection sensor 1351 may sense only a range overlapping with at least a part of the display range of the air floating video 3.

Specific examples of the aerial operation detection sensor 1351 include a distance sensor using invisible light such as infrared light, an invisible light laser, an ultrasonic wave, or the like. Also, the aerial operation detection sensor 1351 may be configured to be able to detect coordinates on a two-dimensional plane by combining a plurality of sensors. Further, the aerial operation detection sensor 1351 may be composed of a ToF (Time of Flight) type LiDAR (Light Detection and Ranging) or an image sensor.

The aerial operation detection sensor 1351 is not particularly limited as long as it can perform sensing for detecting a touch operation or the like on an object displayed as the air floating video 3 by a finger of the user. Such sensing can be performed by using an existing technique.

The aerial operation detector 1350 acquires a sensing signal from the aerial operation detection sensor 1351, and determines whether or not the finger of the user 230 has touched an object in the air floating video 3 and calculates the position (touch position) where the finger of the user 230 has touched the object, based on the sensing signal. The aerial operation detector 1350 is composed of, for example, a circuit such as a FPGA (Field Programmable Gate Array). Also, a part of the functions of the aerial operation detector 1350 may be implemented by software, for example, by a program for aerial operation detection executed by the controller 1110.

The aerial operation detection sensor 1351 and the aerial operation detector 1350 may be built in the air floating video display apparatus 1000, or may be provided outside separately from the air floating video display apparatus 1000. When provided separately from the air floating video display apparatus 1000, the aerial operation detection sensor 1351 and the aerial operation detector 1350 are configured to be able to transmit information and signals to the air floating video display apparatus 1000 via a wired or wireless communication connection path or video signal transmission path.

Also, the aerial operation detection sensor 1351 and the aerial operation detector 1350 may be provided separately. In this way, it is possible to construct a system in which the air floating video display apparatus 1000 without the aerial operation detection function is provided as a main body and only the aerial operation detection function can be added as an option. Further, the configuration in which only the aerial operation detection sensor 1351 is provided separately and the aerial operation detector 1350 is built in the air floating video display apparatus 1000 is also possible. In a case such as when it is desired to arrange the aerial operation detection sensor 1351 more freely with respect to the installation position of the air floating video display apparatus 1000, the configuration in which only the aerial operation detection sensor 1351 is provided separately is advantageous.

The imager 1180 is a camera having an image sensor, and is configured to capture the image of the space near the air floating video 3 and/or the face, arms, fingers, and the like of the user 230. A plurality of imagers 1180 may be provided. By using a plurality of imagers 1180 or by using an imager with a depth sensor, it is possible to assist the aerial operation detector 1350 in the detection processing of the touch operation on the air floating video 3 by the user 230. The imager 1180 may be provided separately from the air floating video display apparatus 1000. When the imager 1180 is provided separately from the air floating video display apparatus 1000, the imager 1180 may be configured to be able to transmit imaging signals to the air floating video display apparatus 1000 via a wired or wireless communication connection path or the like.

For example, when the aerial operation detection sensor 1351 is configured as an object intrusion sensor that detects whether or not an object has intruded a plane (intrusion detection plane) including the display plane of the air floating video 3, the aerial operation detection sensor 1351 may not be able to detect information indicating how far an object (e.g., a finger of the user) that has not intruded the intrusion detection plane is away from the intrusion detection plane or how close the object is to the intrusion detection plane.

In such a case, it is possible to calculate the distance between the object and the intrusion detection plane by using information such as depth calculation information of the object based on the captured images of the plurality of imagers 1180 or depth information of the object by the depth sensor. Further, these pieces of information and various kinds of information such as the distance between the object and the intrusion detection plane are used for various kinds of display control for the air floating video 3.

Alternatively, the aerial operation detector 1350 may detect a touch operation on the air floating video 3 by the user 230 based on the image captured by the imager 1180 without using the aerial operation detection sensor 1351.

Further, the imager 1180 may capture an image of the face of the user 230 who operates the air floating video 3, and the controller 1110 may perform the identification processing of the user 230. Also, in order to determine whether or not another person is standing around or behind the user 230 who operates the air floating video 3 and the person is peeking at the operation of the user 230 on the air floating video 3, the imager 1180 may capture an image of a range including the user 230 who operates the air floating video 3 and the surrounding region of the user 230.

The operation input unit 1107 is, for example, an operation button or a signal receiver or an infrared receiver such as a remote controller, and receives an input of a signal regarding an operation different from the aerial operation (touch operation) by the user 230. The operation input unit 1107 may be used by, for example, an administrator to operate the air floating video display apparatus 1000 apart from the above-described user 230 who performs the touch operation on the air floating video 3.

The video signal input unit 1131 is connected to an external video output unit and receives an input of video data. Various digital video input interfaces may be used as the video signal input unit 1131. For example, the video signal input unit 1131 can be configured by a video input interface of the HDMI (High-Definition Multimedia Interface (registered trademark)) standard, a video input interface of the DVI (Digital Visual Interface) standard, or a video input interface of the DisplayPort standard.

Alternatively, an analog video input interface such as analog RGB or composite video may be provided. The audio signal input unit 1133 is connected to an external audio output unit and receives an input of audio data. The audio signal input unit 1133 can be configured by an audio input interface of the HDMI standard, an optical digital terminal interface, a coaxial digital terminal interface, or the like. In the case of the interface of the HDMI standard, the video signal input unit 1131 and the audio signal input unit 1133 may be configured as an interface having integrated terminal and cable. The audio output unit 1140 can output audio based on the audio data input to the audio signal input unit 1133. The audio output unit 1140 may be configured by a speaker.

Also, the audio output unit 1140 may output a built-in operation sound or error warning sound. Alternatively, a configuration to output a digital signal to an external device like the Audio Return Channel function specified in the HDMI standard may be adopted as the audio output unit 1140. The microphone 1139 is configured to capture sound in the vicinity of the air floating video display apparatus 1000 and converts it into a signal to generate an audio signal. There may be provided a configuration in which the microphone records a human voice such as the user's voice, and the controller 1110 described below performs audio recognition processing on the generated audio signal to acquire text information from the audio signal.

The nonvolatile memory 1108 stores various kinds of data used in the air floating video display apparatus 1000. The data stored in the nonvolatile memory 1108 include, for example, data for various operations to be displayed in the air floating video 3, display icons, data of objects to be operated by user, layout information, and the like. The memory 1109 stores video data to be displayed as the air floating video 3, data for controlling the apparatus, and the like.

The controller 1110 controls the operation of each unit connected thereto. Also, the controller 1110 may perform arithmetic operation based on information acquired from each unit in the air floating video display apparatus 1000 in cooperation with a program stored in the memory 1109.

The communication unit 1132 communicates with an external device, an external server, or the like via a wired or wireless communication interface. When the communication unit 1132 has a wired communication interface, the wired communication interface may be configured by, for example, the LAN interface of the Ethernet standard. When the communication unit 1132 has a wireless communication interface, the wireless communication interface may be configured by, for example, the communication interface of the Wi-Fi standard, the communication interface of the Bluetooth standard, or the 4G or 5G mobile communication interface. Various kinds of data such as video data, image data, and audio data are transmitted and received through communication via the communication unit 1132.

Further, the removable media interface 1134 is an interface configured to connect removable recording media (removable media). The removable recording media (removable media) may be configured by a semiconductor memory such as solid state drive (SSD), a magnetic recording storage device such as hard disk drive (HDD), or an optical recording media such as an optical disc. The removable media interface 1134 can read various kinds of information such as video data, image data, audio data, and others recorded in the removable recording media. The video data, image data, and others recorded in the removable recording media are output as the air floating video 3 via the video display 1102 and retroreflection portion 1101.

The storage 1170 is a storage device that records various kinds of information, for example, various kinds of data such as video data, image data, and audio data. The storage 1170 may be configured by a magnetic recording storage device such as a hard disk drive (HDD), a semiconductor element memory such as a solid state drive (SSD), or the like. In the storage 1170, for example, various kinds of information, for example, various kinds of data such as video data, image data, and audio data may be recorded in advance at the time of product shipment. In addition, the storage 1170 may record various kinds of information, for example, various kinds of data such as video data, image data, and audio data acquired from an external device, an external server, or the like via the communication unit 1132.

The video data, the image data, and the like recorded in the storage 1170 are output as the air floating video 3 via the video display 1102 and the retroreflection portion 1101. Video data, image data, and the like of display icons, an object to be operated by a user, and the like which are displayed as the air floating video 3 are also recorded in the storage 1170.

Layout information of display icons, an object, and the like displayed as the air floating video 3, information of various kinds of metadata related to the object, and the like are also recorded in the storage 1170. The audio data recorded in the storage 1170 is output as audio from, for example, the audio output unit 1140.

The video controller 1160 performs various kinds of control related to a video signal to be input to the video display 1102. The video controller 1160 may be referred to as a video processing circuit, and may be configured by hardware such as ASIC, FPGA, or video processor. Note that the video controller 1160 may be referred to also as a video processing unit or an image processing unit. For example, the video controller 1160 performs the control of video switching for determining which of a video signal stored in the memory 1109 or a video signal (video data) input to the video signal input unit 1131 is to be input to the video display 1102.

Also, the video controller 1160 may perform the control to form a composite video as the air floating video 3 by generating a superimposed video signal obtained by superimposing the video signal stored in the memory 1109 and the video signal input from the video signal input unit 1131 and inputting the superimposed video signal to the video display 1102.

Further, the video controller 1160 may perform the control to perform image processing on the video signal input from the video signal input unit 1131, the video signal to be stored in the memory 1109, or the like. Examples of the image processing include scaling processing for enlarging, reducing, and deforming an image, brightness adjustment processing for changing luminance, contrast adjustment processing for changing a contrast curve of an image, and retinex processing for decomposing an image into light components and changing weighting for each component.

In addition, the video controller 1160 may perform special effect video processing or the like for assisting an aerial operation (touch operation) of the user 230 to the video signal to be input to the video display 1102. The special effect video processing is performed based on, for example, the detection result of the touch operation of the user 230 by the aerial operation detector 1350 and the captured image of the user 230 by the imager 1180.

The attitude sensor 1113 is a sensor configured by a gravity sensor, an acceleration sensor, or a combination thereof, and can detect the attitude with which the air floating video display apparatus 1000 is installed. Based on the attitude detection result of the attitude sensor 1113, the controller 1110 may control the operation of each connected unit. For example, when an unfavorable attitude as the usage state of the user is detected, control to stop the display of the video displayed on the video display 1102 and display an error message to the user may be performed. Alternatively, when the attitude sensor 1113 detects that the installation attitude of the air floating video display apparatus 1000 has changed, control to rotate the display direction of the video displayed on the video display 1102 may be performed.

As described above, the air floating video display apparatus 1000 is provided with various functions. However, the air floating video display apparatus 1000 does not need to have all of these functions, and may have any configuration as long as the apparatus has a function of forming the air floating video 3.

<Configuration Example of Air Floating Video Display Apparatus>

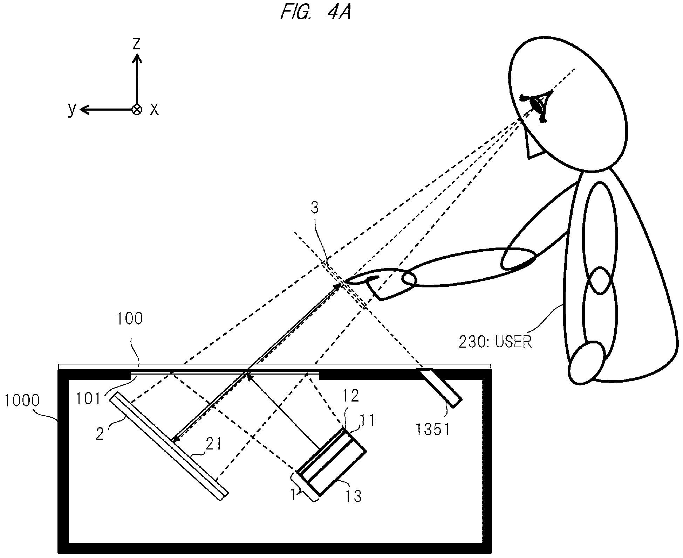

Next, the configuration example of the air floating video display apparatus will be described. As the layout of the components of the air floating video display apparatus according to the present embodiment, various layouts are possible depending on the usage form. Each layout in FIG. 4A to FIG. 4M will be described below. Note that, in any of the examples in FIG. 4A to FIG. 4M, a thick line surrounding the air floating video display apparatus 1000 indicates an example of the housing structure of the air floating video display apparatus 1000.

FIG. 4A is a diagram showing an example of the configuration of the air floating video display apparatus. The air floating video display apparatus 1000 shown in FIG. 4A is mounted with an optical system corresponding to the optical system shown inFIG. 2A. The air floating video display apparatus 1000 shown in FIG. 4A is installed horizontally such that the surface on the side where the air floating video 3 is formed faces upward. Namely, in FIG. 4A, the air floating video display apparatus 1000 has the transparent member 100 placed on an upper surface of the apparatus. The air floating video 3 is formed above the surface of the transparent member 100 of the air floating video display apparatus 1000. The light of the air floating video 3 travels obliquely upward. When the aerial operation detection sensor 1351 is provided as shown in the drawing, it is possible to detect the operation on the air floating video 3 by the finger of the user 230. Note that the x direction is the left-right direction when viewed from the user, the y direction is the front-rear direction (depth direction) when viewed from the user, and the z direction is the up-down direction (vertical direction). Hereinafter, since the definitions of the x direction, y direction, and z direction are the same in each drawing of FIG. 4A to FIG. 4M, repetitive description will be omitted.

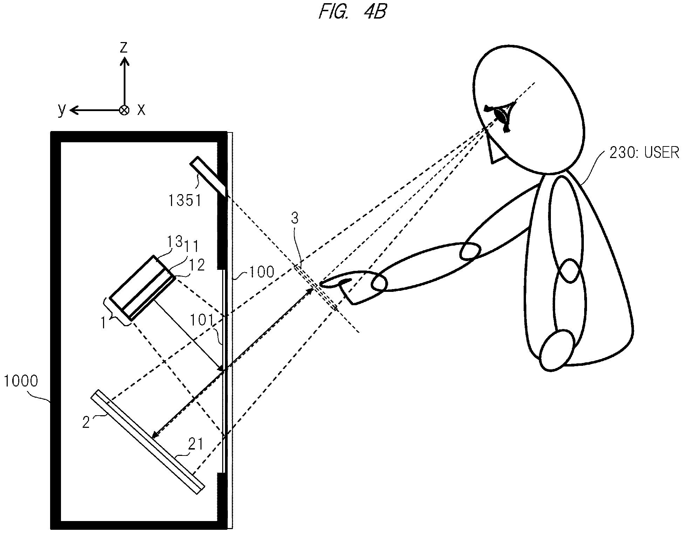

FIG. 4B is a diagram showing an example of the configuration of the air floating video display apparatus. The air floating video display apparatus 1000 shown in FIG. 4B is mounted with an optical system corresponding to the optical system shown in FIG. 2A. The air floating video display apparatus 1000 shown in FIG. 4B is installed vertically such that the surface on the side where the air floating video 3 is formed is located on the front side of the air floating video display apparatus 1000 (faces the user 230). Namely, in FIG. 4B, the air floating video display apparatus 1000 has the transparent member 100 placed on the front side of the apparatus (on the side of the user 230). The air floating video 3 is formed on the side of the user 230 with respect to the surface of the transparent member 100 of the air floating video display apparatus 1000. The light of the air floating video 3 travels obliquely upward. When the aerial operation detection sensor 1351 is provided as shown in the drawing, it is possible to detect the operation on the air floating video 3 by the finger of the user 230. Here, as shown in FIG. 4B, the aerial operation detection sensor 1351 can utilize the reflection of the sensing light by the nail of the user for touch detection by sensing the finger of the user 230 from above. Since a nail generally has a higher reflectance than a pad of a finger, this configuration can improve the accuracy of touch detection.

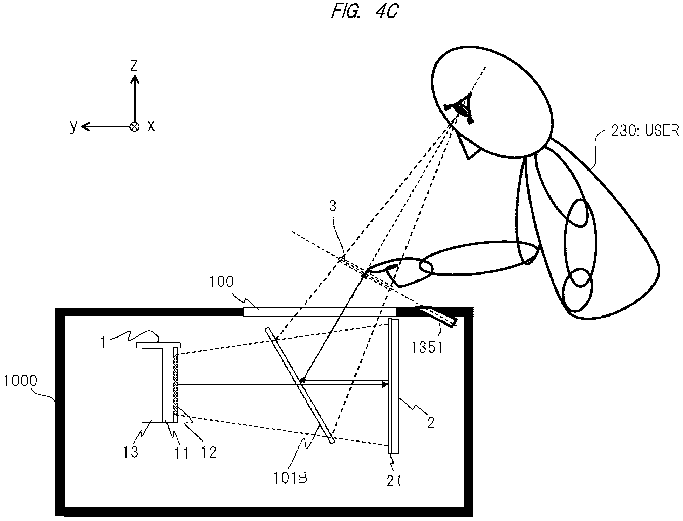

FIG. 4C is a diagram showing an example of the configuration of the air floating video display apparatus. The air floating video display apparatus 1000 shown in FIG. 4C is mounted with an optical system corresponding to the optical system shown in FIG. 2B. The air floating video display apparatus 1000 shown in FIG. 4C is installed horizontally such that the surface on the side where the air floating video 3 is formed faces upward. Namely, in FIG. 4C, the air floating video display apparatus 1000 has the transparent member 100 placed on the upper surface of the apparatus. The air floating video 3 is formed above the surface of the transparent member 100 of the air floating video display apparatus 1000. The light of the air floating video 3 travels obliquely upward. When the aerial operation detection sensor 1351 is provided as shown in the drawing, it is possible to detect the operation on the air floating video 3 by the finger of the user 230.

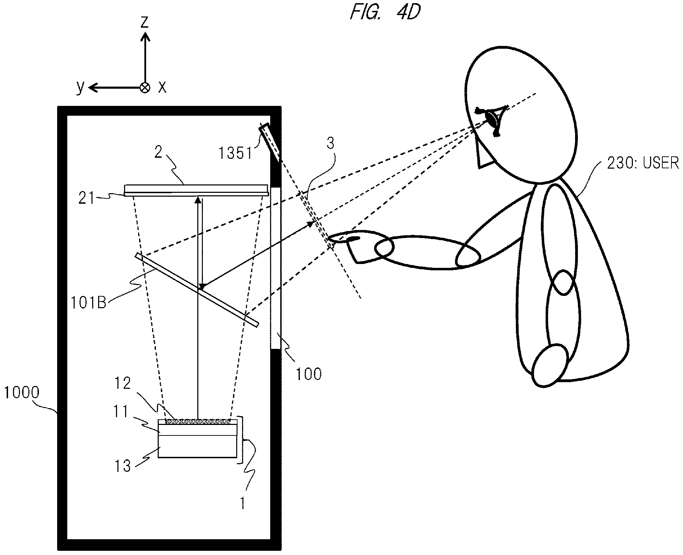

FIG. 4D is a diagram showing an example of the configuration of the air floating video display apparatus. The air floating video display apparatus 1000 shown in FIG. 4D is mounted with an optical system corresponding to the optical system shown in FIG. 2B. The air floating video display apparatus 1000 shown in FIG. 4D is installed vertically such that the surface on the side where the air floating video 3 is formed is located on the front side of the air floating video display apparatus 1000 (faces the user 230). Namely, in FIG. 4D, the air floating video display apparatus 1000 has the transparent member 100 placed on the front side of the apparatus (on the side of the user 230). The air floating video 3 is formed on the side of the user 230 with respect to the surface of the transparent member 100 of the air floating video display apparatus 1000. The light of the air floating video 3 travels obliquely upward. When the aerial operation detection sensor 1351 is provided as shown in the drawing, it is possible to detect the operation on the air floating video 3 by the finger of the user 230. Here, as shown in FIG. 4D, the aerial operation detection sensor 1351 can utilize the reflection of the sensing light by the nail of the user for touch detection by sensing the finger of the user 230 from above. Since a nail generally has a higher reflectance than a pad of a finger, this configuration can improve the accuracy of touch detection.

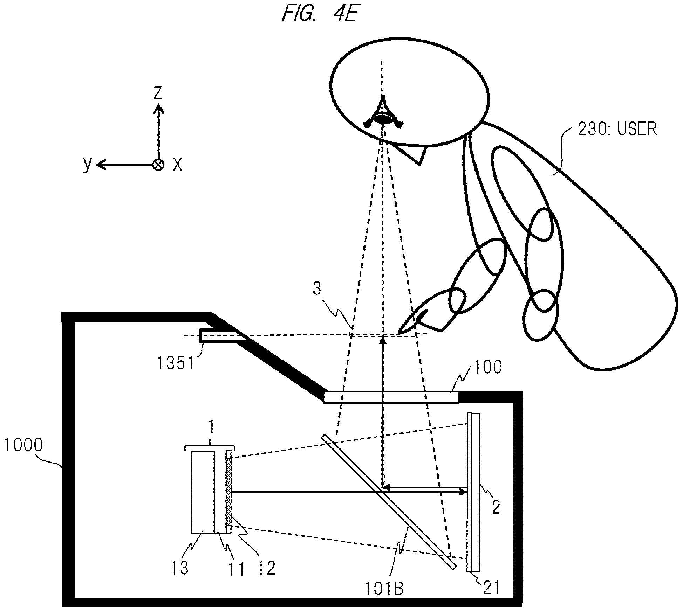

FIG. 4E is a diagram showing an example of the configuration of the air floating video display apparatus. The air floating video display apparatus 1000 shown in FIG. 4E is mounted with an optical system corresponding to the optical system shown in FIG. 2C. The air floating video display apparatus 1000 shown in FIG. 4E is installed horizontally such that the surface on the side where the air floating video 3 is formed faces upward. Namely, in FIG. 4E, the air floating video display apparatus 1000 has the transparent member 100 placed on the upper surface of the apparatus. The air floating video 3 is formed above the surface of the transparent member 100 of the air floating video display apparatus 1000. The light of the air floating video 3 travels directly upward. When the aerial operation detection sensor 1351 is provided as shown in the drawing, it is possible to detect the operation on the air floating video 3 by the finger of the user 230.

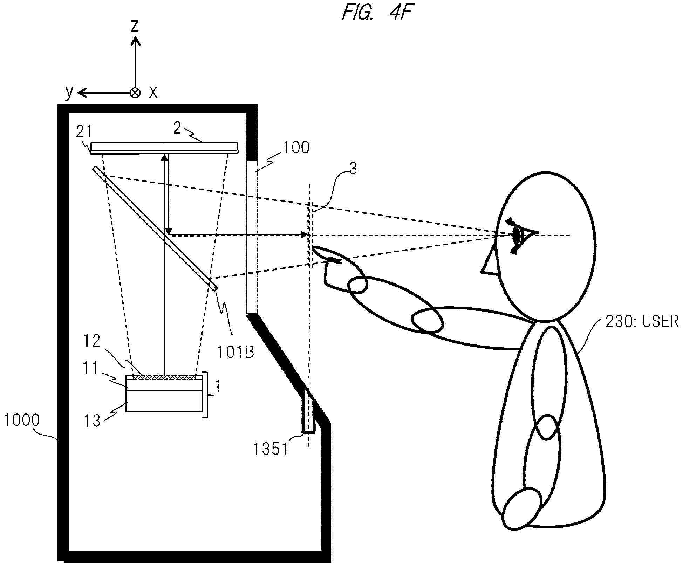

FIG. 4F is a diagram showing an example of the configuration of the air floating video display apparatus. The air floating video display apparatus 1000 shown in FIG. 4F is mounted with an optical system corresponding to the optical system shown in FIG. 2C. The air floating video display apparatus 1000 shown in FIG. 4F is installed vertically such that the surface on the side where the air floating video 3 is formed is located on the front side of the air floating video display apparatus 1000 (faces the user 230). Namely, in FIG. 4F, the air floating video display apparatus 1000 has the transparent member 100 placed on the front side of the apparatus (on the side of the user 230). The air floating video 3 is formed on the side of the user 230 with respect to the surface of the transparent member 100 of the air floating video display apparatus 1000. The light of the air floating video 3 travels toward the user. When the aerial operation detection sensor 1351 is provided as shown in the drawing, it is possible to detect the operation on the air floating video 3 by the finger of the user 230.

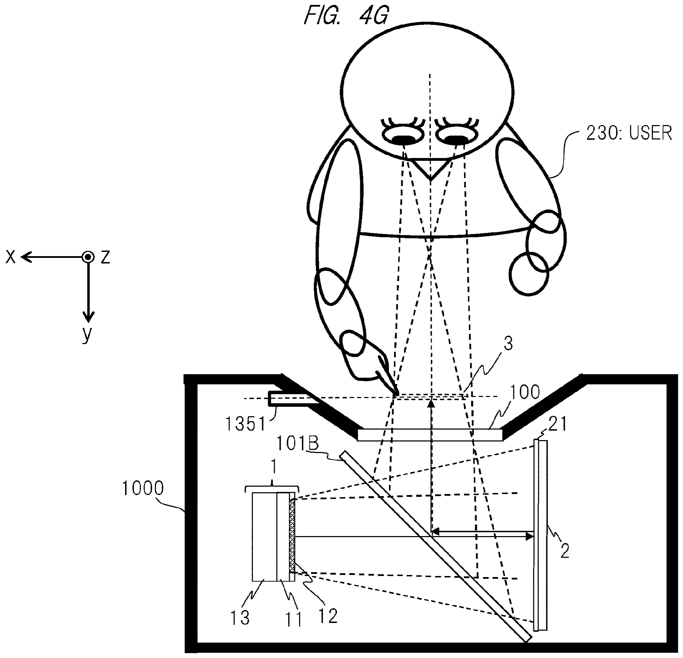

FIG. 4G is a diagram showing an example of the configuration of the air floating video display apparatus. The air floating video display apparatus 1000 shown in FIG. 4G is mounted with an optical system corresponding to the optical system shown in FIG. 2C. In the optical system of each air floating video display apparatus shown in FIG. 4A to FIG. 4F, the central optical path of the video light emitted from the display apparatus 1 is on the y-z plane. Namely, in the optical system of each air floating video display apparatus shown in FIG. 4A to FIG. 4F, the video light travels in the front-rear direction and the up-down direction when viewed from the user. On the other hand, in the optical system of the air floating video display apparatus shown in FIG. 4G, the central optical path of the video light emitted from the display apparatus 1 is on the x-y plane. Namely, in the optical system of the air floating video display apparatus shown in FIG. 4G, video light travels in the left-right direction and front-rear direction when viewed from the user. The air floating video display apparatus 1000 shown in FIG. 4G is installed such that the surface on the side where the air floating video 3 is formed is located on the front side of the apparatus (faces the user 230). Namely, in FIG. 4G, the air floating video display apparatus 1000 has the transparent member 100 placed on the front side of the apparatus (on the side of the user 230). The air floating video 3 is formed on the side of the user 230 with respect to the surface of the transparent member 100 of the air floating video display apparatus 1000. The light of the air floating video 3 travels toward the user. When the aerial operation detection sensor 1351 is provided as shown in the drawing, it is possible to detect the operation on the air floating video 3 by the finger of the user 230.

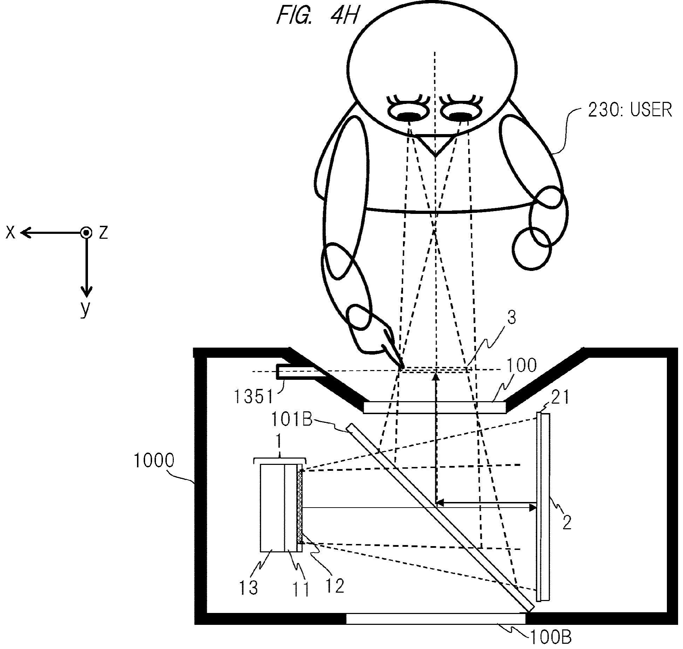

FIG. 4H is a diagram showing an example of the configuration of the air floating video display apparatus. The air floating video display apparatus 1000 in FIG. 4H is different from the air floating video display apparatus 1000 in FIG. 4G in that a window having a transparent plate 100B such as glass or plastic is provided on the rear side of the apparatus (on the opposite side of the position where the user 230 visually recognizes the air floating video 3, that is, on the opposite side of the traveling direction of the video light of the air floating video 3 toward the user 230). Since the other configuration is the same as that of the air floating video display apparatus in FIG. 4G, the repetitive description will be omitted. The air floating video display apparatus 1000 in FIG. 4H includes a window having the transparent plate 100B at a position on the opposite side of the traveling direction of the video light of the air floating video 3 with respect to the air floating video 3. Therefore, when the user 230 visually recognizes the air floating video 3, the user 230 can recognize the scenery behind the air floating video display apparatus 1000 as the background of the air floating video 3. Accordingly, the user 230 can perceive the air floating video 3 as if it is floating in the air in front of the scenery behind the air floating video display apparatus 1000. In this way, it is possible to further emphasize the sense of floating in the air of the air floating video 3.

Note that, depending on the polarization distribution of the video light output from the display apparatus 1 and the performance of the polarization separator 101B, there is a possibility that a part of the video light output from the display apparatus 1 is reflected by the polarization separator 101B and travels toward the transparent plate 100B. Depending on the coating property of the surface of the transparent plate 100B, the light may be reflected again on the surface of the transparent plate 100B and visually recognized by the user as stray light. Therefore, in order to prevent the stray light, the configuration in which the transparent plate 100B is not provided in the window on the rear side of the air floating video display apparatus 1000 is also possible.

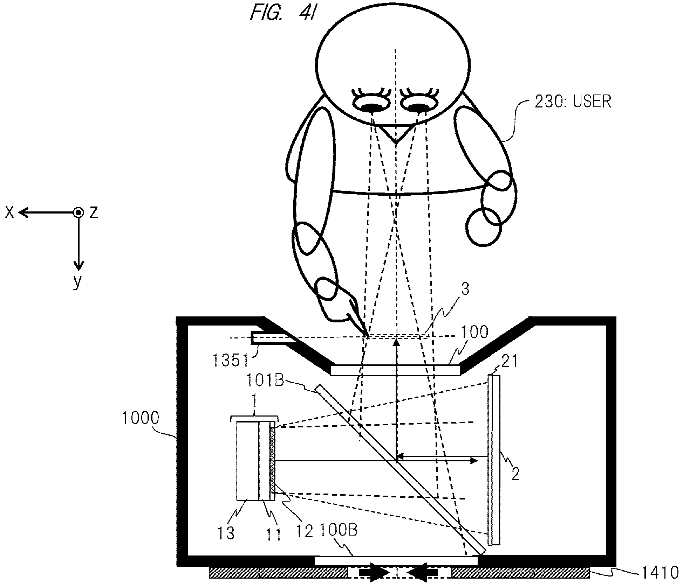

FIG. 4I is a diagram showing an example of the configuration of the air floating video display apparatus. The air floating video display apparatus 1000 in FIG. 4I is different from the air floating video display apparatus 1000 in FIG. 4H in that an opening/closing door 1410 for blocking light is provided on the window of the transparent plate 100B provided on the rear side of the apparatus (on the opposite side of the position where the user 230 visually recognizes the air floating video 3). Since the other configuration is the same as that of the air floating video display apparatus in FIG. 4H, the repetitive description will be omitted.

The opening/closing door 1410 of the air floating video display apparatus 1000 in FIG. 4I includes, for example, a light-shielding plate and a mechanism for moving (sliding), rotating, or attaching/detaching the light-shielding plate, so that the state of the window (rear-side window) of the transparent plate 100B located on the rear side of the air floating video display apparatus 1000 can be switched between an open state and a light-shielding state. The movement (sliding) or rotation of the light-shielding plate of the opening/closing door 1410 may be electrically driven by a motor (not shown). The motor may be controlled by the controller 1110 in FIG. 3. Note that, in the example in FIG. 4I, the case in which the light-shielding plate of the opening/closing door 1410 is composed of two plate members is disclosed. On the other hand, the light-shielding plate of the opening/closing door 1410 may be composed of one plate member.

For example, when the scenery seen behind the window of the transparent plate 100B of the air floating video display apparatus 1000 is outdoors, the brightness of sunlight varies depending on the weather. If the sunlight outside is strong, the background of the air floating video 3 may become too bright, and the visibility of the air floating video 3 for the user 230 may be lowered. In such a case, if the rear-side window can be brought into the light-shielding state by moving (sliding), rotating, or attaching the light-shielding plate of the opening/closing door 1410, the background of the air floating video 3 becomes dark and the visibility of the air floating video 3 can be increased relatively. The shielding action by the light-shielding plate of the opening/closing door 1410 may be performed manually by the hand of the user 230. Alternatively, the shielding action by the light-shielding plate of the opening/closing door 1410 may be performed by a motor (not shown) under the control of the controller 1110 in response to the operation input via the operation input unit 1107 in FIG. 3.

Note that it is also possible to measure the brightness of the space beyond the rear-side window by providing an illuminance sensor on the back side of the air floating video display apparatus 1000 (the side opposite to the user 230), for example, near the rear-side window. In this case, the opening/closing action of the light-shielding plate of the opening/closing door 1410 may be performed by a motor (not shown) under the control of the controller 1110 in FIG. 3 based on the detection result of the illuminance sensor. By controlling the opening/closing action of the light-shielding plate of the opening/closing door 1410 in this manner, the visibility of the air floating video 3 can be suitably maintained even if the user 230 does not manually open and close the light-shielding plate of the opening/closing door 1410.

Further, the light-shielding plate of the opening/closing door 1410 may be configured to be manually attachable/detachable. Depending on the purpose of use and installation environment of the air floating video display apparatus 1000, the user can select whether the rear-side window is brought into an open state or a light-shielding state. If it is planned to use the air floating video display apparatus 1000 while keeping the rear-side window in the light-shieling state for a long period of time, the attachable/detachable light-shielding plate may be fixed in the light-shielding state. Meanwhile, if it is planned to use the air floating video display apparatus 1000 while keeping the rear-side window in the open state for a long period of time, the attachable/detachable light-shielding plate may be detached. The light-shielding plate may be attached and detached using screws, a hook structure, or a fitting structure.

Note that, even in the example of the air floating video display apparatus 1000 in FIG. 4I, depending on the polarization distribution of the video light output from the display apparatus 1 and the performance of the polarization separator 101B, there is a possibility that a part of the video light output from the display apparatus 1 is reflected by the polarization separator 101B and travels toward the transparent plate 100B. Depending on the coating property of the surface of the transparent plate 100B, the light may be reflected again on the surface of the transparent plate 100B and visually recognized by the user as stray light. Therefore, in order to prevent the stray light, the configuration in which the transparent plate 100B is not provided in the window on the rear side of the air floating video display apparatus 1000 is also possible. The above-described opening/closing door 1410 may be provided on the window that is not provided with the transparent plate 100B. In order to prevent the stray light, it is desirable that the inner surface of the light-shielding plate 1410 inside the housing has a coating or a material with low light reflectance.

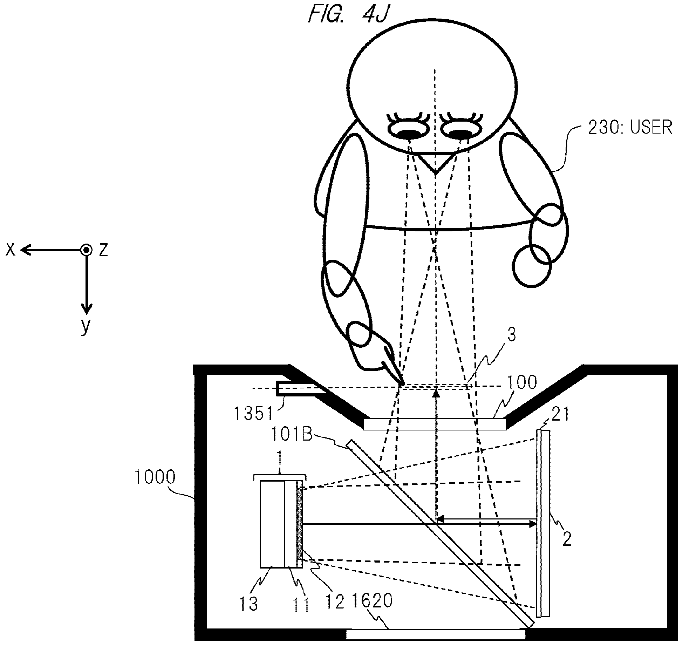

FIG. 4J is a diagram showing an example of the configuration of the air floating video display apparatus. The air floating video display apparatus 1000 in FIG. 4J is different from the air floating video display apparatus in FIG. 4H in that an electronically-controlled transmittance variable unit 1620 is arranged on the rear-side window instead of arranging the transparent plate 100B made of glass or plastic. Since the other configuration is the same as that of the air floating video display apparatus in FIG. 4H, the repetitive description will be omitted. An example of the electronically-controlled transmittance variable unit 1620 is a liquid crystal shutter or the like.

Namely, the liquid crystal shutter can control the light transmittance by controlling the voltage applied to the liquid crystal element sandwiched between two polarization plates. Therefore, by controlling the liquid crystal shutter to increase the transmittance, the scenery beyond the rear-side window can be seen through the air floating video 3 on the background. Meanwhile, by controlling the liquid crystal shutter to reduce the transmittance, the scenery beyond the rear-side window cannot be seen through the air floating video 3 on the background.

Further, since the halftone control is possible in the liquid crystal shutter, it can be set to, for example, a state of transmittance of 50%. For example, the controller 1110 can control the transmittance of the electronically-controlled transmittance variable unit 1620 in response to the operation input via the operation input unit 1107 in FIG. 3. With this configuration, in such a case where it is desired to see the scenery beyond the rear-side window as the background of the air floating video 3, but the scenery beyond the rear-side window on the background is too bright and the visibility of the air floating video 3 is lowered, the visibility of the air floating video 3 can be adjusted by controlling the transmittance of the electronically-controlled transmittance variable unit 1620.

Note that it is also possible to measure the brightness of the space beyond the rear-side window by providing an illuminance sensor on the back side of the air floating video display apparatus 1000 (the side opposite to the user 230), for example, near the rear-side window. In this case, the controller 1110 in FIG. 3 can control the transmittance of the electronically-controlled transmittance variable unit 1620 based on the detection result of the illuminance sensor. In this way, since the transmittance of the electronically-controlled transmittance variable unit 1620 can be adjusted based on the brightness of the space beyond the rear-side window even if the user 230 does not perform the operation input via the operation input unit 1107 in FIG. 3, it is possible to suitably maintain the visibility of the air floating video 3.

Furthermore, in the above example, the case where a liquid crystal shutter is used as the electronically-controlled transmittance variable unit 1620 has been described. Alternatively, electronic paper may be used as another example of the electronically-controlled transmittance variable unit 1620. Even in the case where electronic paper is used, the same effect as that described above can be obtained. Moreover, power consumption required to maintain the halftone state is very small in the electronic paper. Therefore, it is possible to realize the air floating video display apparatus with lower power consumption as compared with the case where a liquid crystal shutter is adopted.

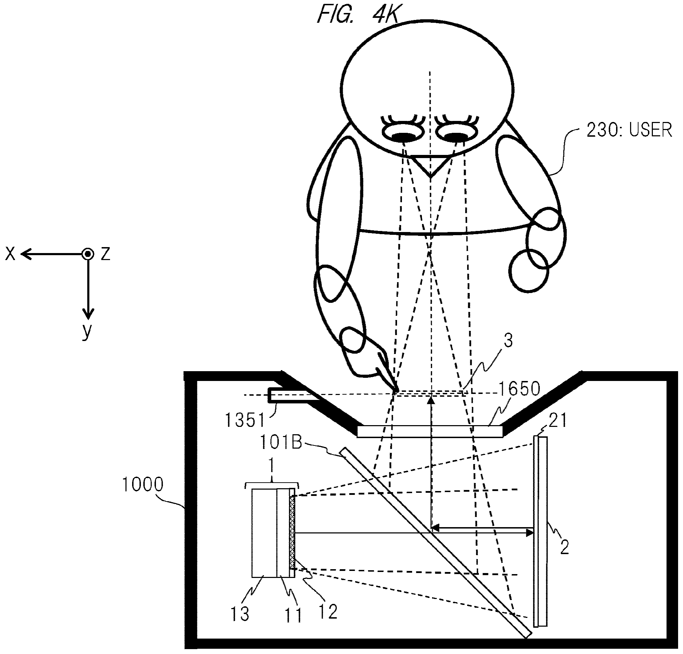

FIG. 4K is a diagram showing an example of the configuration of the air floating video display apparatus. The air floating video display apparatus 1000 in FIG. 4K is different from the air floating video display apparatus in FIG. 4G in that a transmissive self-luminous video display apparatus 1650 is provided instead of the transparent member 100. Since the other configuration is the same as that of the air floating video display apparatus in FIG. 4G, the repetitive description will be omitted.

In the air floating video display apparatus 1000 in FIG. 4K, after the video light flux passes through the display surface of the transmissive self-luminous video display apparatus 1650, the air floating video 3 is formed outside the air floating video display apparatus 1000. Namely, when a video is being displayed on the transmissive self-luminous video display apparatus 1650 which is a two-dimensional flat display, the air floating video 3 can be displayed as a projected video on the front side of the user with respect to the video on the transmissive self-luminous video display apparatus 1650. At this time, the user 230 can visually recognize two videos at different depth positions at the same time. The transmissive self-luminous video display apparatus 1650 can be configured using existing techniques of a transmissive organic EL panel disclosed in, for example, Japanese Unexamined Patent Application Publication No. 2014-216761. Although the transmissive self-luminous video display apparatus 1650 is not shown in FIG. 3, it can be configured as a component of the air floating video display apparatus 1000 in FIG. 3 so as to be connected to the other processing units such as the controller 1110.

Here, for example, if the performance that both the background and objects such as characters are displayed on the transmissive self-luminous video display apparatus 1650 and then the objects such as characters only are moved to the air floating video 3 on the front side is executed, it is possible to provide the user 230 with a more effective video experience with surprising effects.

Further, if the inside of the air floating video display apparatus 1000 is set to the light-shielding state, the background of the transmissive self-luminous video display apparatus 1650 becomes sufficiently dark. Therefore, in the case where no video is displayed on the display apparatus 1 or the light source of the display apparatus 1 is turned off and the video is displayed only on the transmissive self-luminous video display apparatus 1650, the transmissive self-luminous video display apparatus 1650 appears to the user 230 as if it is an ordinary two-dimensional flat display rather than a transmissive display (since the air floating video 3 in the embodiment of the present invention is displayed as a real optical image in a space without a screen, the position where the air floating video 3 is to be displayed becomes an empty space when the light source of the display apparatus 1 is turned off). Therefore, if the characters and objects are suddenly displayed in the air as the air floating video 3 when the video is being displayed using the transmissive self-luminous video display apparatus 1650 as a general two-dimensional flat display, it is possible to provide the user 230 with a more effective video experience with surprising effects.

Note that the darker the inside of the air floating video display apparatus 1000 becomes, the more the transmissive self-luminous video display apparatus 1650 appears like a two-dimensional flat display. Therefore, an absorptive polarization plate (not shown) that transmits the polarized wave of the video light reflected by the polarization separator 101B and absorbs the polarized wave whose phase is different by 90° from this polarized wave may be provided on the inner surface of the transmissive self-luminous video display apparatus 1650 inside the air floating video display apparatus 1000 (the incident surface of the video light reflected by the polarization separator 101B to the transmissive self-luminous video display apparatus 1650, that is, the surface of the transmissive self-luminous video display apparatus 1650 on the side opposite to the air floating video 3). In this way, although the influence on the video light that forms the air floating video 3 is not so great, the light that enters the interior of the air floating video display apparatus 1000 from the outside via the transmissive self-luminous video display apparatus 1650 can be significantly reduced, and the interior of the air floating video display apparatus 1000 can be suitably made darker.

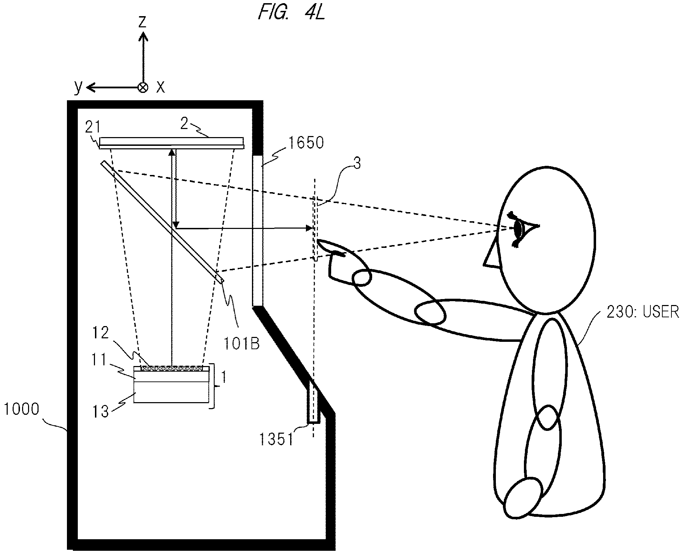

FIG. 4L is a diagram showing an example of the configuration of the air floating video display apparatus. The air floating video display apparatus 1000 in FIG. 4L is a modification of the air floating video display apparatus in FIG. 4K. The arrangement direction of the configuration in the air floating video display apparatus 1000 is different from that of the air floating video display apparatus shown in FIG. 4K, and is similar to that of the air floating video display apparatus shown in FIG. 4F. Since the functions, operations, and the like of each configuration are the same as those of the air floating video display apparatus in FIG. 4K, the repetitive description will be omitted.

In the air floating video display apparatus in FIG. 4L as well, after the light flux of the video light passes through the transmissive self-luminous video display apparatus 1650, the air floating video 3 is formed on the side of the user 230 with respect to the transmissive self-luminous video display apparatus 1650.

In both the example of the air floating video display apparatus in FIG. 4K and the example of the air floating video display apparatus in FIG. 4L, the air floating video 3 is displayed to be overlapped in front of the video of the transmissive self-luminous video display apparatus 1650 when viewed from the user 230. Here, the position of the air floating video 3 and the position of the video of the transmissive self-luminous video display apparatus 1650 are designed to be different in the depth direction. Therefore, when the user moves his or her head (position of the viewpoint), the depth of the two videos can be recognized based on the parallax. Therefore, by displaying two videos with different depth positions, a three-dimensional video experience can be more suitably provided to the user with naked eyes without the need for stereoscopic glasses or the like.

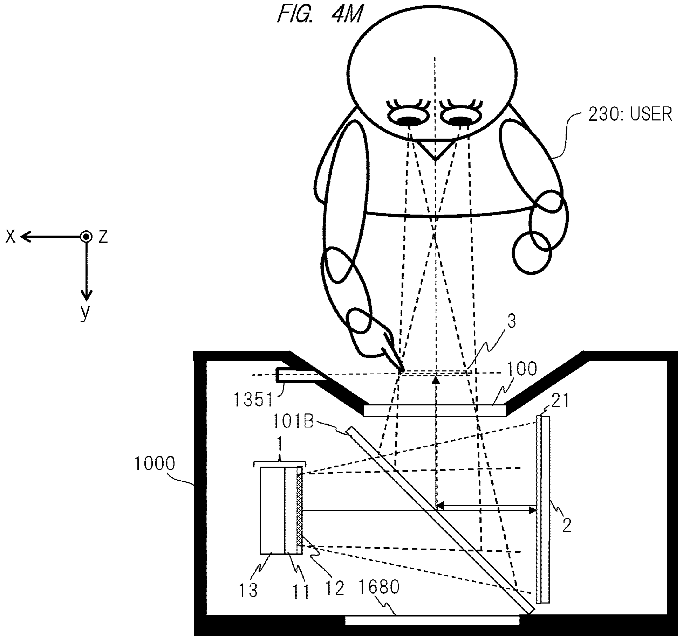

FIG. 4M is a diagram showing an example of the configuration of the air floating video display apparatus. In the air floating video display apparatus 1000 in FIG. 4M, a second display apparatus 1680 is provided on the rear side when viewed from the user with respect to the polarization separator 101B of the air floating video display apparatus in FIG. 4G. Since the other configuration is the same as that of the air floating video display apparatus in FIG. 4G, the repetitive description will be omitted.

In the configuration example shown in FIG. 4M, the second display apparatus 1680 is provided on the rear side of the display position of the air floating video 3, and the video display surface is directed toward the air floating video 3. With this configuration, when viewed from the user 230, two videos such as the video of the second display apparatus 1680 and the air floating video 3 which are displayed at two different depth positions can be visually recognized to be overlapped with each other. Namely, it can be said that the second display apparatus 1680 is arranged so as to display the video in the direction toward the user 230 who visually recognizes the air floating video 3. Although not shown in FIG. 3, the second display apparatus 1680 can be configured as a component of the air floating video display apparatus 1000 in FIG. 3 so as to be connected to other processors such as the controller 1110.

Note that the video light from the second display apparatus 1680 of the air floating video display apparatus 1000 in FIG. 4M is visually recognized by the user 230 after passing through the polarization separator 101B. Therefore, in order for the video light of the second display apparatus 1680 to pass through the polarization separator 101B more suitably, the video light output from the second display apparatus 1680 is desirably the light of a polarized wave having a vibration direction capable of passing through the polarization separator 101B more suitably. Namely, it is desirably the light of a polarized wave having the same vibration direction as the polarized wave of the video light output from the display apparatus 1. For example, when the video light output from the display apparatus 1 is S-polarized light, it is desirable that the video light output from the second display apparatus 1680 is also S-polarized light. Also, when the video light output from the display apparatus 1 is P-polarized light, it is desirable that the video light output from the second display apparatus 1680 is also P-polarized light.

The example of the air floating video display apparatus in FIG. 4M also has the same effect as those of the example of the air floating video display apparatus in FIG. 4K and the example of the air floating video display apparatus in FIG. 4L in that the second video is displayed behind the air floating video 3. However, unlike the example of the air floating video display apparatus in FIG. 4K and the example of the air floating video display apparatus in FIG. 4L, the light flux of the video light for forming the air floating video 3 does not pass through the second display apparatus 1680 in the example of the air floating video display apparatus in FIG. 4M. Therefore, the second display apparatus 1680 does not need to be a transmissive self-luminous video display apparatus, and may be a liquid crystal display that is a two-dimensional flat display. The second display apparatus 1680 may also be an organic EL display. Therefore, in the example of the air floating video display apparatus in FIG. 4M, the air floating video display apparatus 1000 can be realized at a lower cost than those in the example of the air floating video display apparatus in FIG. 4K and the example of the air floating video display apparatus in FIG. 4L.

Here, depending on the polarization distribution of the video light output from the display apparatus 1 and the performance of the polarization separator 101B, there is a possibility that a part of the video light output from the display apparatus 1 is reflected by the polarization separator 101B and travels toward the second apparatus 1680. This light (part of video light) may be reflected again on the surface of the second display apparatus 1680 and visually recognized by the user as stray light.

Therefore, in order to prevent the stray light, an absorptive polarization plate may be provided on the surface of the second display apparatus 1680. In this case, as the absorptive polarization plate, an absorptive polarization plate that transmits the polarized wave of the video light output from the second display apparatus 1680 and absorbs the polarized wave whose phase is different by 90° from the polarized wave of the video light output from the second display apparatus 1680 can be provided. Note that, when the second display apparatus 1680 is a liquid crystal display, an absorptive polarization plate is present also on the video emission side inside the liquid crystal display. However, when a cover glass (cover glass on the video display side) is present on the emission surface of the absorptive polarization plate on the video output side inside the liquid crystal display, it is not possible to prevent the stray light generated by the reflection of the cover glass by the light from outside of the liquid crystal display. Therefore, it is necessary to separately provide the above-mentioned absorptive polarization plate on the surface of the cover glass.

Note that, when a video is being displayed on the second display apparatus 1680 which is a two-dimensional flat display, the air floating video 3 can be displayed as a video on the front side of the user with respect to the video on the second display apparatus 1680. At this time, the user 230 can visually recognize two videos at different depth positions at the same time. By displaying the character on the air floating video 3 and displaying the background on the second display apparatus 1680, it is possible to provide an effect as if the user 230 is stereoscopically viewing the space in which the character exists.

Also, if the performance that both the background and objects such as characters are displayed on the second display apparatus 1680 and then the objects such as characters only are moved to the air floating video 3 on the front side is executed, it is possible to provide the user 230 with a more effective video experience with surprising effects.

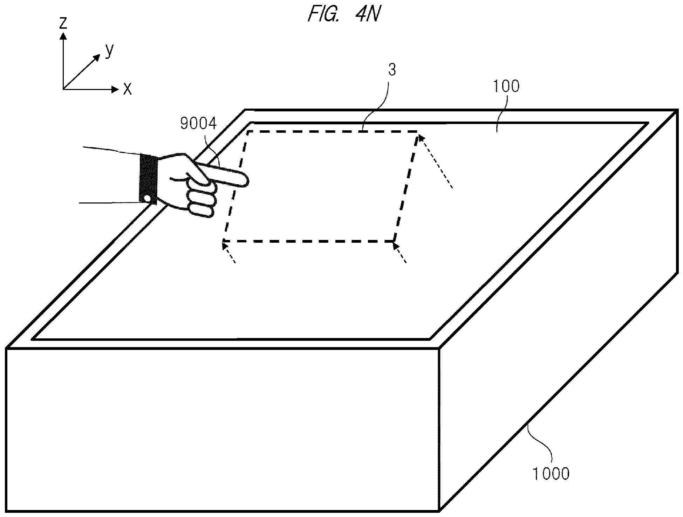

Next, FIG. 4N is a diagram showing an example of the configuration of the air floating video display apparatus. The air floating video display apparatus 1000 of FIG. 4N is an air floating video display apparatus that adopts the optical system of FIG. 2D. Similar to the example of the air floating video display apparatus that adopts the optical system of FIG. 2A to FIG. 2C, the video light passing through the transparent member 100 forms the air floating video 3 in midair. In addition, by using the sensing light of the aerial operation detection sensor 1351 arranged on the rear side of the transparent member 100 from the user's perspective, it is possible to detect the operation on the air floating video 3 by the finger 9004 of the user 230.

In the example of the air floating video display apparatus adopting the optical system of FIG. 2A to FIG. 2C and the example of the air floating video display apparatus adopting the optical system of FIG. 2D, the air floating video 3 is formed in front of the transparent member 100, and by using the sensing light of the aerial operation detection sensor 1351 arranged on the rear side of the transparent member 100 from the user's perspective, it is possible to detect the operation on the air floating video 3 by the finger of the user 230. Therefore, the air floating video display apparatus adopting the optical system of FIG. 2D differs from the air floating video display apparatus in which the optical system of FIG. 2A to FIG. 2C is arranged on the rear side of the transparent member 100 from the user's perspective.

However, from the user's perspective, usability of the air floating video display apparatus adopting the optical system of FIG. 2D is almost the same as that of the air floating video display apparatus adopting the optical system of FIG. 2A to FIG. 2C.

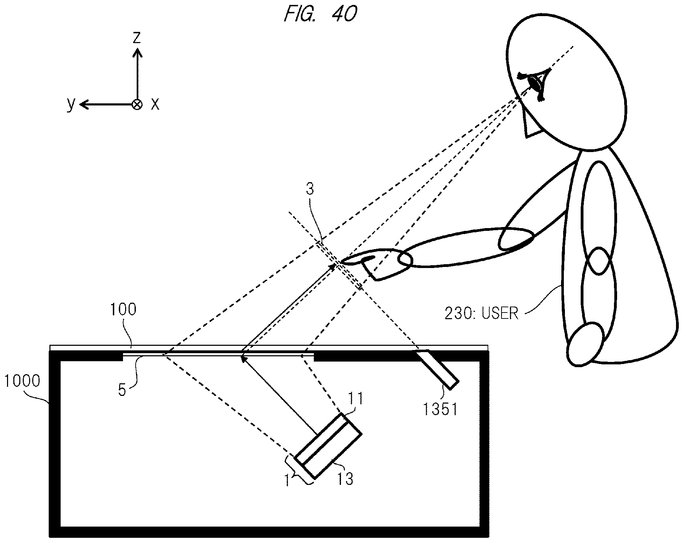

Next, FIG. 4O is a diagram showing an example of the configuration of the air floating video display apparatus. FIG. 4O is a diagram showing the air floating video display apparatus 1000 of FIG. 4N with a configuration of an internal optical system. The air floating video display apparatus 1000 shown in FIG. 4O is mounted with an optical system corresponding to the optical system of FIG. 2D. The air floating video display apparatus 1000 shown in FIG. 4O, is installed horizontally such that the surface on the side where the air floating video 3 is formed faces upward.

Namely, in FIG. 4O, the air floating video display apparatus 1000 has the transparent member 100 placed on the upper surface of the apparatus. The air floating video 3 is formed above the surface of the transparent member 100 of the air floating video display apparatus 1000. The light of the air floating video 3 travels obliquely upward. When the aerial operation detection sensor 1351 is provided as shown in the drawing, it is possible to detect the operation on the air floating video 3 by the finger of the user 230.

Here, the configuration of FIG. 4O is compared with the configuration of FIG. 4A to confirm differences. In FIG. 4A, the display apparatus 1 and the air floating video 3 are plane-symmetric about the surface of the polarization separator 101. In contrast, in FIG. 4O, the display apparatus 1 and the air floating video 3 are plane-symmetric about the surface of the retroreflection plate 5. In addition, the retroreflection plate 2 and the λ/4 plate 21 are present in the configuration of FIG. 4A but not in FIG.

4O. In addition, while it is preferable to include the absorptive polarization plate 12 in FIG. 4A, the absorptive polarization plate 12 is not particularly necessary in FIG. 4O.

Namely, in order to replace the optical system of FIG. 2A used in the configuration of FIG. 4A with the optical system of FIG. 2D and achieve the configuration of FIG. 4O, the following steps may be taken. Specifically, the polarization separator 101 in the configuration of FIG. 4A is replaced with the retroreflection plate 5, and the retroreflection plate 2 and the λ/4 plate 21 are removed from the configuration of FIG. 4A. The absorptive polarization plate 12 may be provided or omitted. By performing replacement based on this concept, the optical system of FIG. 2A to FIG. 2C mounted in the configuration of the air floating video display apparatus of FIG. 4A to FIG. 4G can be replaced with the optical system of FIG. 2D, thereby achieving the air floating video display apparatus mounted with the optical system of FIG. 2D. In this case, in FIG. 4A and FIG. 4B, the polarization separator 101 may be replaced with the retroreflection plate 5, and in FIG. 4C to FIG. 4G, the polarization separator 101B may be replaced with the retroreflection plate 5.

As a result, in the configuration of the air floating video display apparatus of FIG. 4A to FIG. 4G, it is possible to realize an air floating video display apparatus in which the optical system is replaced with the optical system of FIG. 2D. Even in this air floating video display apparatus with the replaced optical system of FIG. 2D, it is possible to realize an air floating video display apparatus having usability that is almost the same as the air floating video display apparatus of FIG. 4A to FIG. 4G.

<Display Apparatus>

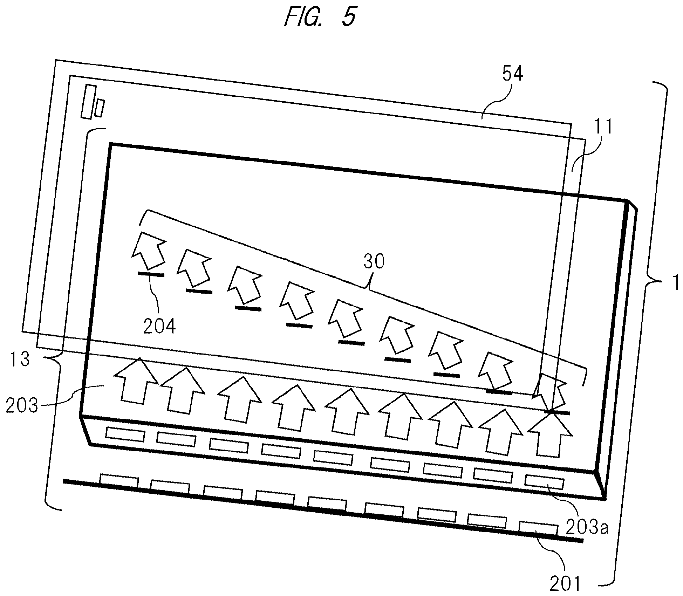

Next, the display apparatus 1 of the present embodiment will be described with reference to the drawings. The display apparatus 1 of the present embodiment includes a video display element 11 (liquid crystal display panel) and the light source apparatus 13 constituting a light source thereof, and FIG. 5 shows the light source apparatus 13 together with the liquid crystal display panel as a developed perspective view.

In the liquid crystal display panel (video display element 11), as indicated by arrows 30 in FIG. 5, an illumination light flux having narrow-angle diffusion characteristics, that is, characteristics similar to laser light with strong directivity (straightness) and a polarization plane aligned in one direction is received from the light source apparatus 13 as a backlight apparatus. The liquid crystal display panel (video display element 11) modulates the received illumination light flux in accordance with an input video signal. The modulated video light is reflected by the retroreflection plate 2 and transmitted through the transparent member 100, thereby forming an air floating image as a real image (see FIG. 1).

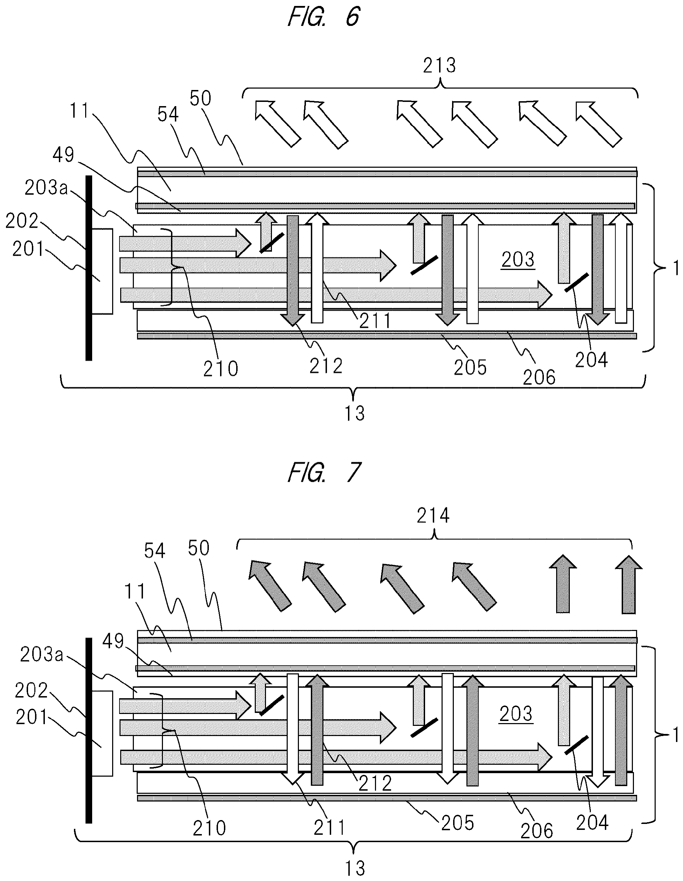

Further, in FIG. 5, the display apparatus 1 includes the liquid crystal display panel 11, a light direction conversion panel 54 configured to control the directional characteristics of the light flux emitted from the light source apparatus 13, and a narrow-angle diffusion plate as needed (not shown). Namely, polarization plates are provided on both surfaces of the liquid crystal display panel 11, and video light of a specific polarized wave is emitted at the light intensity modulated by the video signal (see the arrows 30 in FIG. 5). Thus, a desired video is projected as the light of a specific polarized wave having high directivity (straightness) toward the retroreflection plate 2 via the light direction conversion panel 54, reflected by the retroreflection plate 2, and then transmitted toward the eyes of an observer outside the store (space), thereby forming the air floating video 3. Note that a protective cover 50 (see FIG. 6 and FIG. 7) may be provided on the surface of the light direction conversion panel 54 described above.

\<Example of Display Apparatus (1)\>

FIG. 6 shows an example of a specific configuration of the display apparatus 1. In FIG. 6, the liquid crystal display panel 11 and the light direction conversion panel 54 are arranged on the light source apparatus 13 in FIG. 5. The light source apparatus 13 is formed of, for example, plastic or the like on a case shown in FIG. 5, and is configured to accommodate the LED element 201 and a light guide 203 therein. Also, as shown in FIG. 5 and the like, in order to convert the divergent light from each LED element 201 into a substantially parallel light flux, the end surface of the light guide 203 is provided with a lens shape in which the cross-sectional area gradually increases toward the opposite surface with respect to the light receiving portion and which has a function of gradually reducing the divergence angle when making total reflection plural times during the propagation therein. The liquid crystal display panel 11 constituting the display apparatus 1 is attached to the upper surface of the display apparatus 1. Further, the LED (Light Emitting Diode) element 201 which is a semiconductor light source and an LED substrate 202 on which a control circuit thereof is mounted are attached to one side surface (an end surface on the left side in this example) of the case of the light source apparatus 13. A heat sink which is a member for cooling heat generated in the LED element and the control circuit may be attached to an outer surface of the LED substrate 202.

Also, to a frame (not shown) of the liquid crystal display panel attached to the upper surface of the case of the light source apparatus 13, the liquid crystal display panel 11 attached to the frame, an FPC (Flexible Printed Circuits) board (not shown) electrically connected to the liquid crystal display panel 11, and the like are attached. Namely, the liquid crystal display panel 11 which is a video display element generates a display video by modulating the intensity of transmitted light based on a control signal from a control circuit (video controller 1160 in FIG. 3) constituting an electronic device together with the LED element 201 which is a solid-state light source. At this time, since the generated video light has a narrow diffusion angle and only a specific polarization component, it is possible to obtain a novel and unconventional video display apparatus which is close to a surface-emitting laser video source driven by a video signal. Note that, at present, it is impossible to obtain a laser light flux having the same size as the image obtained by the above-described display apparatus 1 by using a laser apparatus for both technical and safety reasons. Therefore, in the present embodiment, for example, light close to the above-described surface-emitting laser video light is obtained from a light flux from a general light source including an LED element.

Next, the configuration of the optical system accommodated in the case of the light source apparatus 13 will be described in detail with reference to FIG. 6 and FIG. 7.

Since FIG. 6 and FIG. 7 are cross-sectional views, only one of a plurality of LED elements 201 constituting the light source is shown, and the light from these elements is converted into substantially collimated light by the shape of a light-receiving end surface 203a of the light guide 203. Therefore, the light receiving portion on the end surface of the light guide and the LED element are attached while maintaining a predetermined positional relationship.

Note that each of the light guides 203 is formed of, for example, a translucent resin such as acrylic. Also, the LED light-receiving surface at one end of the light guide 203 has, for example, a conical convex outer peripheral surface obtained by rotating a parabolic cross section, the top thereof has a concave portion in which a convex portion (i.e., a convex lens surface) is formed at the central region, and the central region of the flat surface portion thereof has a convex lens surface protruding outward (or may be a concave lens surface recessed inward) (not shown). Note that the outer shape of the light receiving portion of the light guide to which the LED element 201 is attached is a paraboloid shape that forms a conical outer peripheral surface, and is set within a range of an angle at which light emitted from the LED element in the peripheral direction can be totally reflected inside the paraboloid, or has a reflection surface formed thereon.

On the other hand, each of the LED elements 201 is arranged at a predetermined position on the surface of the LED substrate 202 which is a circuit board for the LED elements. The LED substrate 202 is arranged and fixed to the LED collimator (the light-receiving end surface 203a) such that each of the LED elements 201 on the surface thereof is located at the central portion of the concave portion described above.

With such a configuration, the light emitted from the LED elements 201 can be extracted as substantially parallel light by the shape of the light-receiving end surface 203a of the light guide 203, and the utilization efficiency of the generated light can be improved.

As described above, the light source apparatus 13 is configured by attaching a light source unit, in which a plurality of LED elements 201 as light sources are arranged, to the light-receiving end surface 203a which is a light receiving portion provided on the end surface of the light guide 203, and the divergent light flux from the LED elements 201 is converted into substantially parallel light by the lens shape of the light-receiving end surface 203a on the end surface of the light guide, is guided through the inside of the light guide 203 (in the direction parallel to the drawing) as indicated by arrows, and is emitted toward the liquid crystal display panel 11 arranged substantially parallel to the light guide 203 (in the upward direction in the drawing) by a light flux direction converter 204. The uniformity of the light flux that enters the liquid crystal display panel 11 can be controlled by optimizing the distribution (density) of the light flux direction converter 204 by the shape inside the light guide or the shape of the surface of the light guide.

The above-described light flux direction converter 204 emits the light flux propagating through the inside of the light guide toward the liquid crystal display panel 11 (in the upward direction in the drawing) arranged substantially in parallel to the light guide 203 by the shape of the surface of the light guide or by providing a portion having a different refractive index inside the light guide. At this time, if the relative luminance ratio when comparing the luminance at the center of the screen with the luminance of the peripheral portion of the screen in a state in which the liquid crystal display panel 11 squarely faces the center of the screen and the viewpoint is placed at the same position as the diagonal dimension of the screen is 20% or more, there is no problem in practical use, and if the relative luminance ratio exceeds 30%, the characteristics will be even better.

Note that FIG. 6 is a cross-sectional layout drawing for describing the configuration and action of the light source of the present embodiment that performs polarization conversion in the light source apparatus 13 including the light guide 203 and the LED element 201 described above. In FIG. 6, the light source apparatus 13 is composed of, for example, the light guide 203 which is formed of plastic or the like and is provided with the light flux direction converter 204 on its surface or inside, the LED element 201 as a light source, a reflection sheet 205, a retardation plate 206, and a lenticular lens, and the liquid crystal display panel 11 including polarization plates on its light source light incident surface and video light emission surface is attached to the upper surface of the light source apparatus 13.

Also, a film-shaped or sheet-shaped reflective polarization plate 49 is provided on the light source light incident surface (lower surface in the drawing) of the liquid crystal display panel 11 corresponding to the light source apparatus 13, by which one polarized wave (e.g., a P-wave) 212 of the natural light flux 210 emitted from the LED element 201 is selectively reflected. The reflected light is reflected again by the reflection sheet 205 provided on one surface (lower side in the drawing) of the light guide 203, and is directed toward the liquid crystal display panel 11. Then, a retardation plate ($\lambda$/4 plate) is provided between the reflection sheet 205 and the light guide 203 or between the light guide 203 and the reflective polarization plate 49, and the light flux is reflected by the reflection sheet 205 to be made to pass through the retardation plate twice, so that the reflected light flux is converted from the P-polarized light into the S-polarized light and the utilization efficiency of the light source light as video light can be improved. The video light flux (arrows 213 in FIG. 6) whose light intensity is modulated by the video signal in the liquid crystal display panel 11 enters the retroreflection plate 2. An air floating image which is a real image can be obtained after the reflection on the retroreflection plate 2.

As with FIG. 6, FIG. 7 is a cross-sectional layout drawing for describing the configuration and action of the light source of the present embodiment that performs polarization conversion in the light source apparatus 13 including the light guide 203 and the LED element 201. The light source apparatus 13 is similarly composed of, for example, the light guide 203 which is formed of plastic or the like and is provided with the light flux direction converter 204 on its surface or inside, the LED element 201 as a light source, the reflection sheet 205, the retardation plate 206, and the lenticular lens. The liquid crystal display panel 11 including polarization plates on its light source light incident surface and video light emission surface is attached as the video display element to the upper surface of the light source apparatus 13.

Also, the film-shaped or sheet-shaped reflective polarization plate 49 is provided on the light source light incident surface (lower surface in the drawing) of the liquid crystal display panel 11 corresponding to the light source apparatus 13, by which one polarized wave (e.g., a S-wave) 211 of the natural light flux 210 emitted from the LED element 201 is selectively reflected. Namely, in the example in FIG. 7, the selective reflection property of the reflective polarization plate 49 is different from that in FIG. 6. The reflected light is reflected by the reflection sheet 205 provided on one surface (lower side in the drawing) of the light guide 203, and is directed toward the liquid crystal display panel 11. Then, a retardation plate ($\lambda$/4 plate) is provided between the reflection sheet 205 and the light guide 203 or between the light guide 203 and the reflective polarization plate 49, and the light flux is reflected by the reflection sheet 205 to be made to pass through the retardation plate twice, so that the reflected light flux is converted from the S-polarized light into the P-polarized light and the utilization efficiency of the light source light as video light can be improved. The video light flux (arrows 214 in FIG. 7) whose light intensity is modulated by the video signal in the liquid crystal display panel 11 enters the retroreflection plate 2. An air floating image which is a real image can be obtained after the reflection on the retroreflection plate 2.

In the light source apparatuses shown in FIG. 6 and FIG. 7, in addition to the action of the polarization plate provided on the light incident surface of the corresponding liquid crystal display panel 11, the polarization component on one side is reflected by the reflective polarization plate, and thus the contrast ratio theoretically obtained is the product of the reciprocal of the cross transmittance of the reflective polarization plate and the reciprocal of the cross transmittance obtained by the two polarization plates attached to the liquid crystal display panel. Therefore, high contrast performance can be obtained. In practice, it has been experimentally confirmed that the contrast performance of the display image is improved by 10 times or more. As a result, a high-quality video comparable to the video of a self-luminous organic EL can be obtained.

<Example of Display Apparatus (2)>

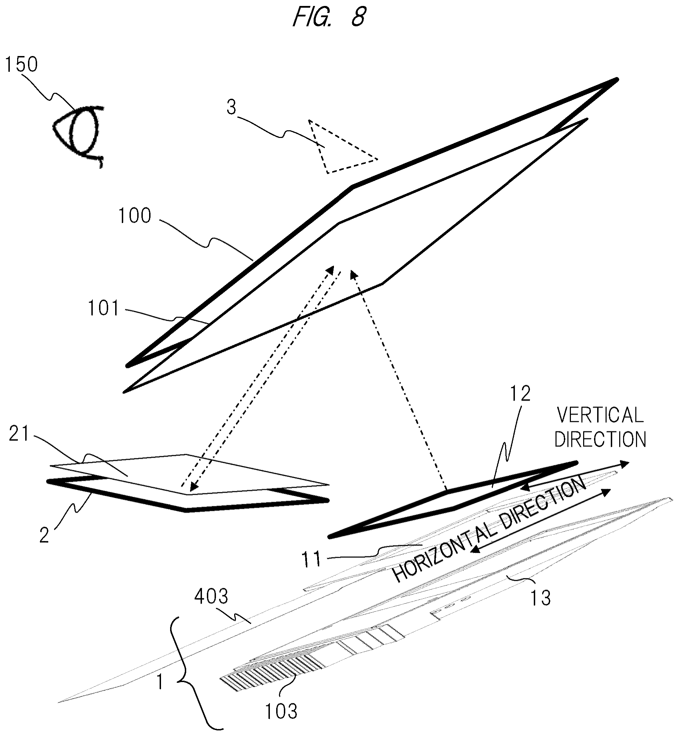

FIG. 8 shows another example of a specific configuration of the display apparatus 1. The light source apparatus 13 is configured by accommodating an LED, a collimator, a synthetic diffusion block, a light guide, and the like in a case made of, for example, plastic, and the liquid crystal display panel 11 is attached to the upper surface thereof. Further, LED (Light Emitting Diode) elements 14a and 14b which are semiconductor light sources and an LED substrate on which a control circuit thereof is mounted are attached to one side surface of the case of the light source apparatus 13, and a heat sink 103 which is a member for cooling the heat generated in the LED elements and the control circuit is attached to an outer surface of the LED substrate.

Also, to a frame of the liquid crystal display panel attached to the upper surface of the case, the liquid crystal display panel 11 attached to the frame, an FPC (Flexible Printed Circuits) board 403 electrically connected to the liquid crystal display panel 11, and the like are attached. Namely, the liquid crystal display panel 11 which is a liquid crystal display element generates a display video by modulating the intensity of transmitted light based on a control signal from a control circuit (not shown here) constituting an electronic device together with the LED elements 14a and 14b which are solid-state light sources.

<Example of Display Apparatus (3)>

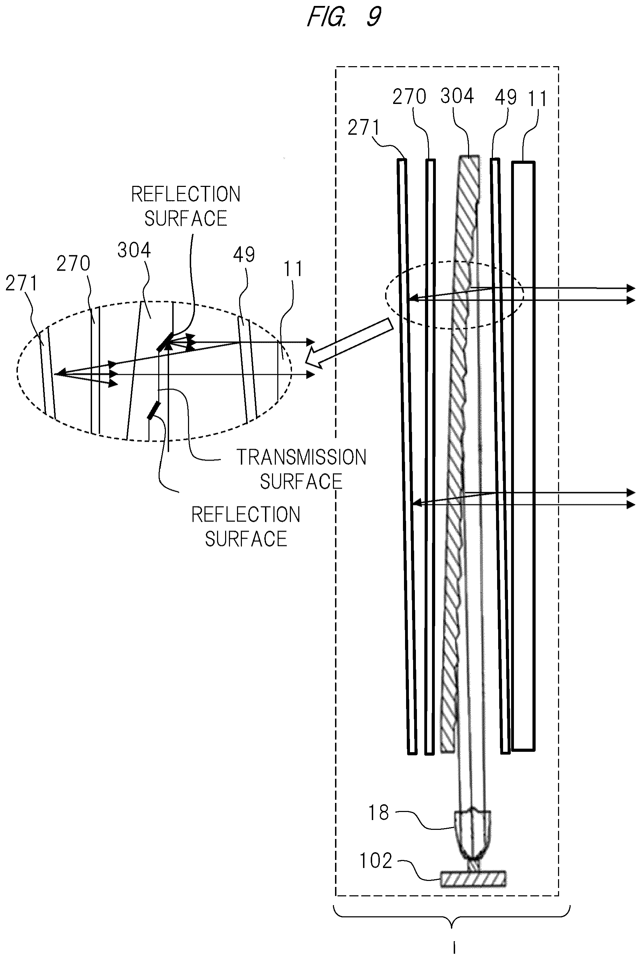

Next, another example of the specific configuration of the display apparatus 1 (example of display apparatus (3)) will be described with reference to FIG. 9. The light source apparatus of the display apparatus 1 converts a divergent light flux of the light from the LED (in which P-polarized light and S-polarized light are mixed) into a substantially parallel light flux by a collimator 18, and the converted light flux is reflected by the reflection surface of the reflective light guide 304 toward the liquid crystal display panel 11. Such reflected light enters the reflective polarization plate 49 arranged between the liquid crystal display panel 11 and the reflective light guide 304. The reflective polarization plate 49 transmits the light of a specific polarized wave (for example, P-polarized light) and allows the transmitted polarized light to enter the liquid crystal display panel 11. Here, the polarized wave (for example, S-polarized wave) other than the specific polarized wave is reflected by the reflective polarization plate 49 and directed toward the reflective light guide 304 again.

The reflective polarization plate 49 is installed to be inclined with respect to the liquid crystal display panel 11 so as not to be perpendicular to the principal light ray of the light from the reflection surface of the reflective light guide 304. Then, the principal light ray of the light reflected by the reflective polarization plate 49 enters the transmission surface of the reflective light guide 304. The light that has entered the transmission surface of the reflective light guide 304 is transmitted through the back surface of the reflective light guide 304, is transmitted through a $\lambda/4$ plate 270 as a retardation plate, and is reflected by a reflection plate 271. The light reflected by the reflection plate 271 is transmitted through the $\lambda/4$ plate 270 again and is transmitted through the transmission surface of the reflective light guide 304. The light transmitted through the transmission surface of the reflective light guide 304 enters the reflective polarization plate 49 again.

At this time, since the light that enters the reflective polarization plate 49 again has passed through the $\lambda/4$ plate 270 twice, the polarization thereof is converted into a polarized wave (for example, P-polarized light) that can pass through the reflective polarization plate 49. Therefore, the light whose polarization has been converted passes through the reflective polarization plate 49 and enters the liquid crystal display panel 11. Regarding the polarization design related to polarization conversion, the polarization may be reversed from that in the above description (the S-polarized light and the P-polarized light may be reversed).

As a result, the light from the LED is aligned into a specific polarized wave (e.g., a P-polarized light) and enters the liquid crystal panel 11. Then, after the luminance is modulated in accordance with the video signal, the video is displayed on the panel surface. As in the above-described example, a plurality of LEDs constituting the light source are provided (however, only one LED is shown in FIG. 9 due to the vertical cross section), and these LEDs are attached at predetermined positions with respect to the collimators 18.

Note that each of the collimators 18 is formed of, for example, a translucent resin such as acrylic or glass. Further, the collimator 18 may have a conical convex outer peripheral surface obtained by rotating a parabolic cross section. Also, a concave portion in which a convex portion (i.e., a convex lens surface) is formed may be provided at the central portion of the top of the collimator 18 (on the side facing the LED substrate 102). In addition, a convex lens surface protruding outward (or may be a concave lens surface recessed inward) is provided at the central portion of the flat surface portion of the collimator 18 (on the opposite side of the top mentioned above). Note that the paraboloid that forms the conical outer peripheral surface of the collimator 18 is set within a range of an angle at which light emitted from the LED in the peripheral direction can be totally reflected inside the paraboloid, or has a reflection surface formed thereon.

Note that each of the LEDs is arranged at a predetermined position on the surface of the LED substrate 102 which is a circuit board for the LEDs. The LED substrate 102 is arranged and fixed to the collimator 18 such that each of the LEDs on the surface thereof is located at the central portion at the top of the conical convex portion (concave portion when there is the concave portion at the top).

With such a configuration, of the light emitted from the LED, in particular, the light emitted from the central portion thereof is condensed into parallel light by the convex lens surface forming the outer shape of the collimator 18. Also, the light emitted from the other portion toward the peripheral direction is reflected by the paraboloid forming the conical outer peripheral surface of the collimator 18, and is similarly condensed into parallel light. In other words, with the collimator 18 having a convex lens formed at the central portion thereof and a paraboloid formed in the peripheral portion thereof, it is possible to extract substantially all of the light generated by the LED as parallel light, and to improve the utilization efficiency of the generated light.

Furthermore, the light converted into substantially parallel light by the collimator 18 shown in FIG. 9 is reflected by the reflective light guide 304. The light of a specific polarized wave of such light is transmitted through the reflective polarization plate 49 by the action of the reflective polarization plate 49, and the light of the other polarized wave reflected by the action of the reflective polarization plate 49 is transmitted through the light guide 304 again. The light is reflected by the reflection plate 271 located at a position opposite to the liquid crystal display panel 11 with respect to the reflective light guide 304. At this time, the polarization of the light is converted by passing through the $\lambda/4$ plate 270, which is a retardation plate, twice. The light reflected by the reflection plate 271 is transmitted through the light guide 304 again and enters the reflective polarization plate 49 provided on the opposite surface. Since the incident light has been subjected to polarization conversion, it is transmitted through the reflective polarization plate 49 and enters the liquid crystal display panel 11 with the aligned polarization direction. As a result, all of the light from the light source can be used, and the utilization efficiency of light in geometrical optics is doubled. Further, the degree of polarization (extinction ratio) of the reflective polarization plate is also multiplied with the extinction ratio of the entire system, so that the contrast ratio of the overall display apparatus is significantly improved by using the light source apparatus of the present embodiment. Also, by adjusting the surface roughness of the reflection surface of the reflective light guide 304 and the surface roughness of the reflection plate 271, the reflection diffusion angle of light on each reflection surface can be adjusted. It is preferable that the surface roughness of the reflection surface of the reflective light guide 304 and the surface roughness of the reflection plate 271 are adjusted for each design such that the uniformity of the light entering the liquid crystal display panel 11 becomes more suitable.

Note that the $\lambda/4$ plate 270 which is the retardation plate in FIG. 9 does not necessarily have the phase difference of $\lambda/4$ with respect to the polarized light that has vertically entered the $\lambda/4$ plate 270. In the configuration of FIG. 9, any retardation plate may be used as long as it can change the phase by 90° ($\lambda/2$) when the polarized light passes through it twice. The thickness of the retardation plate may be adjusted in accordance with the incident angle distribution of polarized light.

<Example of Display Apparatus (4)>

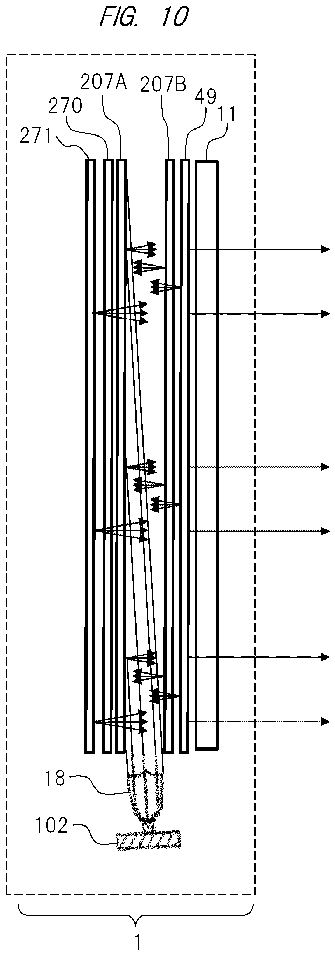

Further, another example (example of display apparatus (4)) of the configuration of the optical system of the light source apparatus or the like of the display apparatus will be described with reference to FIG. 10. This is a configuration example in which a diffusion sheet is used instead of the reflective light guide 304 in the light source apparatus in the example of display apparatus (3). Specifically, two optical sheets (optical sheet 207A and optical sheet 207B) for converting the diffusion characteristics in the vertical direction and the horizontal direction of the drawing are provided on the light emission side of the collimator 18, and the light from the collimator 18 is made to enter between the two optical sheets (diffusion sheets).

Note that, this optical sheet may be composed of one sheet rather than two sheets. When composed of one sheet, the vertical and horizontal diffusion characteristics are adjusted by the fine shapes of the front surface and the back surface of the one optical sheet. Alternatively, a plurality of diffusion sheets may be used to share the function. Here, in the example in FIG. 10, it is preferable that the reflection diffusion characteristics by the front surface shapes and the back surface shapes of the optical sheet 207A and the optical sheet 207B are optimally designed with using the number of LEDs, the divergence angle from the LED substrate (optical element) 102, and optical specifications of the collimator 18 as design parameters such that the surface density of the light flux emitted from the liquid crystal display panel 11 is uniform. In other words, the diffusion characteristics are adjusted by the surface shapes of the plurality of diffusion sheets instead of the light guide.

In the example in FIG. 10, the polarization conversion is performed in the same manner as in the example of display apparatus (3) described above. Namely, in the example in FIG. 10, the reflective polarization plate 49 may be configured to have the property of reflecting the S-polarized light (and transmitting the P-polarized light). In that case, of the light emitted from the LED as a light source, the P-polarized light is transmitted and the transmitted light enters the liquid crystal display panel 11. Of the light emitted from the LED as a light source, the S-polarized light is reflected and the reflected light is transmitted through the retardation plate 270 shown in FIG. 10. The light that has passed through the retardation plate 270 is reflected by the reflection plate 271. The light reflected by the reflection plate 271 is converted into the P-polarized light by passing through the retardation plate 270 again. The light that has been subjected to the polarization conversion is transmitted through the reflective polarization plate 49 and enters the liquid crystal display panel 11.

Note that the $\lambda/4$ plate 270 which is the retardation plate in FIG. 10 does not necessarily have the phase difference of $\lambda/4$ with respect to the polarized light that has vertically entered the $\lambda/4$ plate 270. In the configuration of FIG. 10, any retardation plate may be used as long as it can change the phase by 90° ($\lambda/2$) when the polarized light is transmitted through it twice. The thickness of the retardation plate may be adjusted in accordance with the incident angle distribution of polarized light. Also in FIG. 10, regarding the polarization design related to polarization conversion, the polarization may be reversed from that in the above description (the S-polarized light and the P-polarized light may be reversed).

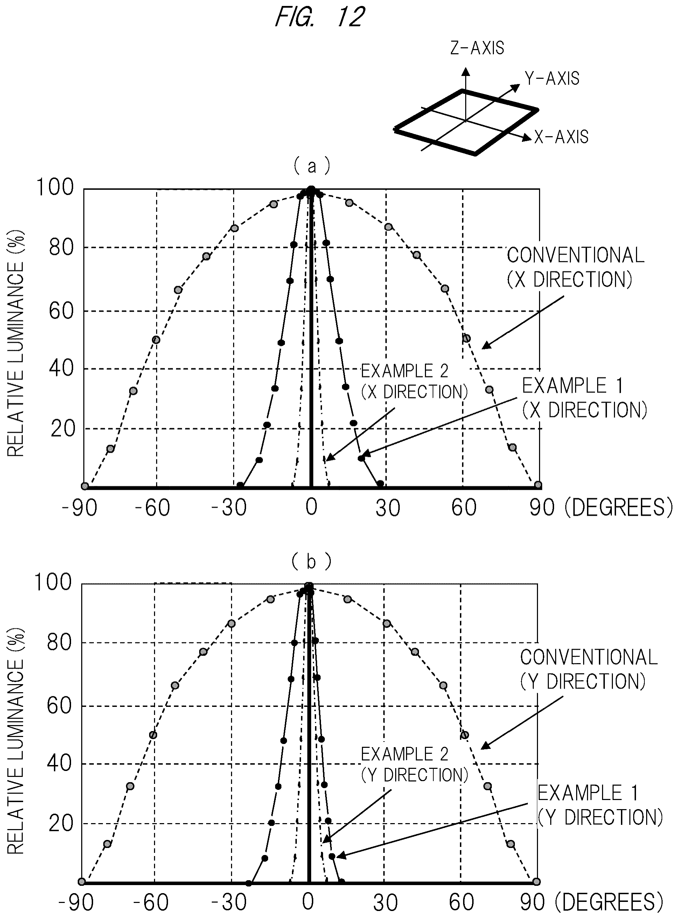

In an apparatus for use in a general TV set, the light emitted from the liquid crystal display panel 11 has similar diffusion characteristics in both the horizontal direction of the screen (indicated by the X axis in FIG. 12(a)) and the vertical direction of the screen (indicated by the Y axis in FIG. 12(b)). On the other hand, in the diffusion characteristics of the light flux emitted from the liquid crystal display panel of the present embodiment, for example, as shown in Example 1 in FIG. 12, the viewing angle at which the luminance becomes 50% of that in front view (angle of 0 degrees) is 13 degrees, and this is 1/5 of 62 degrees in the apparatus for use in a general TV set. Similarly, the reflection angle of the reflective light guide, the area of the reflection surface, and the like are optimized such that the viewing angle in the vertical direction is made uneven in the upper and lower sides and the viewing angle on the upper side is suppressed to about 1/3 of the viewing angle on the lower side. As a result, the amount of video light toward the viewing direction is significantly improved as compared with the conventional liquid crystal TV, and the luminance is 50 times or more.

Further, in the viewing angle characteristics shown in Example 2 in FIG. 12, the viewing angle at which the luminance becomes 50% of that in front view (angle of 0 degrees) is 5 degrees, and this is 1/12 of 62 degrees in the apparatus for use in a general TV set.

Similarly, the reflection angle of the reflective light guide, the area of the reflection surface, and the like are optimized such that the viewing angle in the vertical direction is made even in the upper and lower sides and the viewing angle is suppressed to about 1/12 of the apparatus for use in a general TV set. As a result, the amount of video light toward the viewing direction is significantly improved as compared with the conventional liquid crystal TV, and the luminance is 100 times or more.

As described above, by setting the viewing angle to a narrow angle, the amount of light flux toward the viewing direction can be concentrated, so that the utilization efficiency of light is significantly improved. As a result, even if a liquid crystal display panel for use in a general TV set is used, it is possible to realize a significant improvement in luminance with the same power consumption by controlling the light diffusion characteristics of the light source apparatus, and to provide the video display apparatus suitable for the information display system for bright outdoor use.

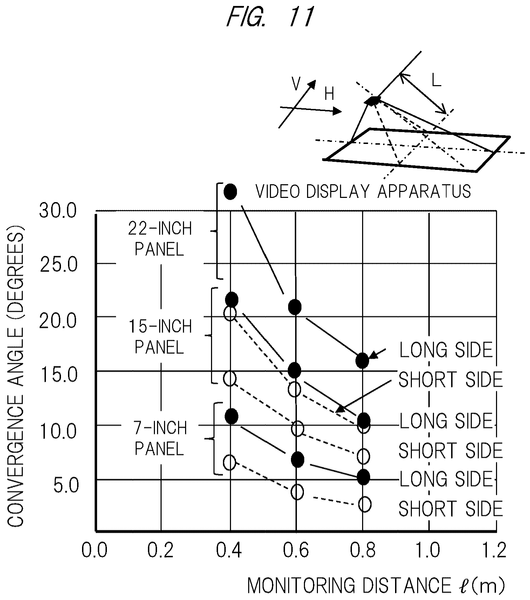

When using a large liquid crystal display panel, the overall brightness of the screen is improved by directing the light in the periphery of the screen inward, that is, toward the observer who is squarely facing the center of the screen. FIG. 11 shows the convergence angle of the long side and the short side of the panel when the distance L from the observer to the panel and the panel size (screen ratio 16:10) are used as parameters. In the case of monitoring the screen as a vertically long screen, the convergence angle may be set in accordance with the short side. For example, in the case in which a 22-inch panel is used vertically and the monitoring distance is 0.8 m, the video light from the four corners of the screen can be effectively directed toward the observer by setting the convergence angle to 10 degrees.

Similarly, in the case in which a 15-inch panel is used vertically and the monitoring distance is 0.8 m, the video light from the four corners of the screen can be effectively directed toward the observer by setting the convergence angle to 7 degrees. As described above, the overall brightness of the screen can be improved by adjusting the video light in the periphery of the screen so as to be directed to the observer located at the optimum position to monitor the center of the screen depending on the size of the liquid crystal display panel and whether the liquid crystal display panel is used vertically or horizontally.

As a basic configuration, as shown in FIG. 9, a light flux having narrow-angle directional characteristics is made to enter the liquid crystal display panel 11 by the light source apparatus, and the luminance is modulated in accordance with a video signal, whereby the air floating video obtained by reflecting the video information displayed on the screen of the liquid crystal display panel 11 by the retroreflection plate is displayed outdoors or indoors through the transparent member 100.

By using the display apparatus and the light source apparatus according to the embodiment of the present invention described above, it is possible to realize the air floating video display apparatus with high light utilization efficiency.

<Example of Video Display Processing in Air Floating Video Display Apparatus>

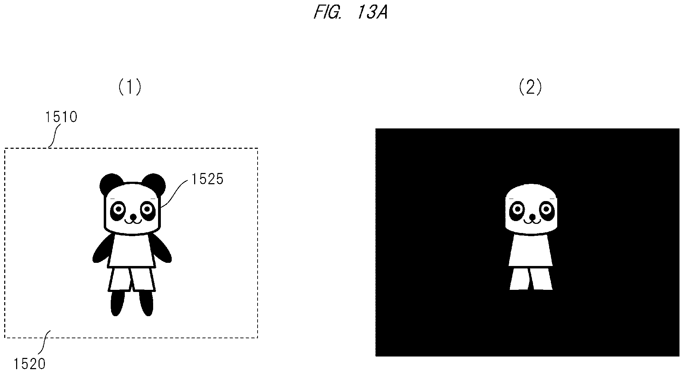

Next, an example of the problem to be solved by the image processing of the present embodiment will be described with reference to FIG. 13A. In the air floating video display apparatus 1000, the rear side of the air floating video 3 is inside of the housing of the air floating video display apparatus 1000 when viewed from the user, and the user visually recognizes that the background of the air floating video 3 is black when it is sufficiently dark.

Here, an example of displaying a character "panda" 1525 in the air floating video 3 will be described with reference to FIG. 13A. First, in an image including a pixel region in which an image of the character "panda" 1525 is drawn and a transparent information region 1520 which is a background image as shown in FIG. 13A(1), the video controller 1160 in FIG. 3 separately recognizes the pixel region in which the image of the character "panda" 1525 is drawn and the transparent information region 1520 which is a background image.

As a method of separately recognizing the character image and the background image, for example, a background image layer and a character image layer in front of the background image layer are configured such that they can be processed as different layers in image processing by the video controller 1160, and the character image and the background image can be separately recognized based on the overlapping relationship when these layers are combined.

Here, the video controller 1160 recognizes the black of the pixel drawing an object such as the character image as different information from the transparent information pixel. However, if it is assumed that the luminance of both the black of the pixel drawing the object and the transparent information pixel is 0, there is no difference in luminance between the pixel drawing the black of the image of the character "panda" 1525 and the pixel of the transparent information region 1520 which is a background image, when displaying the air floating video 3. Therefore, in the air floating video 3, as shown in FIG. 13A(2), neither the pixel drawing the black in the image of the character "panda" 1525 nor the pixel of the transparent information region 1520 has luminance, and they are recognized by the user as the same black space. In other words, the part drawing the black of the image of the character "panda" 1525 which is an object blends into the background, and only the non-black part of the character "panda" 1525 is recognized as a video floating in the display region of the air floating video 3.

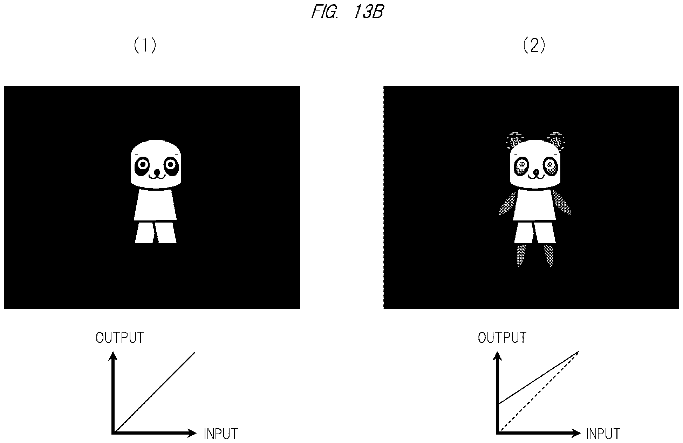

An example of image processing in the present embodiment will be described with reference to FIG. 13B. FIG. 13B is a diagram illustrating an example of image processing that more preferably solves the problem that the black image region of the object blends into the background described inFIG. 13A. In each of FIG. 13B(1) and FIG.13(2), the display state of the air floating video 3 is shown on the upper side, and input/output characteristics of the image processing for the object image are shown on the lower side. Note that the image of the object (character "panda" 1525) and data corresponding thereto may be read from the storage 1170 or the memory 1109 in FIG. 3. Alternatively, they may be input from the video signal input section 1131, or may be acquired via the communication unit 1132.

Here, in the state of FIG. 13B(1), the input/output characteristics of the image processing for the object image are not particularly adjusted and are in a linear state. In this case, the display state is similar to that shown in FIG. 13A(2), and the black image region of the object has blended into the background. On the other hand, in FIG. 13B(2), the video controller 1160 of the present embodiment adjusts the input/output characteristics of image processing for the image of the object (character "panda" 1525) as shown on the lower side.

Namely, the video controller 1160 performs image processing with the input/output characteristics that convert the input image of the object (character "panda" 1525) having the pixel with low luminance into the output image having the pixel with increased luminance. The image of the object (character "panda" 1525) is subjected to the image processing with the input/output characteristics, and then the video including the image of the object (character "panda" 1525) is input and displayed on the display apparatus 1. Then, in the display state of the air floating video 3, as shown in the upper side of FIG. 13B(2), the luminance of the pixel region in which black is drawn in the image of the character "panda" 1525 increases. As a result, in the region in which the image of the character "panda" 1525 is drawn, even the region in which black is drawn can be distinctively recognized by the user without blending into the black background, and the object can be displayed more suitably.

In other words, by using the image processing shown in FIG. 13B(2), the region in which the image of the character "panda" 1525 which is an object is displayed can be separately recognized from the black background which is inside of the housing of the air floating video display apparatus 1000 seen through the window, and the visibility of the object is improved. Therefore, for example, even the object in which the pixel with a luminance value of 0 is included in the pixels constituting the object before the above-described image processing (that is, at the time when the image of the object and the data corresponding thereto are read from the storage 1170 or the memory 1109 in FIG. 3, when the image of the object is input from the video signal input unit 1131, when data of the object is acquired via the communication unit 1132, or the like) is converted into the object in which the luminance value of the pixel in the low luminance region is increased through the image processing with the input/output characteristics by the video controller 1160, is displayed on the display apparatus 1, and then converted into the air floating video 3 by the optical system of the air floating video display apparatus 1000.

Namely, the object is converted into the state in which the pixels constituting the object do not include the pixel with the luminance value of 0 by the image processing with the input/output characteristics, is displayed on the display apparatus 1, and then converted into the air floating video 3 by the optical system of the air floating video display apparatus 1000.

Note that, as a method of performing the image processing with the input/output characteristics in FIG. 13B(2) to only the region of the image of the object (character "panda" 1525), for example, a background image layer and a character image layer in front of the background image layer are configured such that they can be processed as different layers in the image processing by the video controller 1160, the image processing with the input/output characteristics inFIG. 13B(2) is performed to the character image layer, and the image processing is not performed to the background image layer.

Thereafter, by combining these layers, the image processing to increase the luminance of the low luminance region in the input image is performed to only the character image as shown in FIG. 13B(2). Alternatively, as another method, after combining the layer of the character image and the layer of the background image, the image processing for the input/output characteristics shown in FIG. 13B(2) may be applied to only the region of the character image.

Further, the input/output video characteristics used in the image processing to increase the luminance of the low luminance region of the input video are not limited to the example shown inFIG. 13B(2). Any image processing can be used as long as it can increase the luminance of the low luminance region, and the so-called brightness adjustment is also possible. Alternatively, video processing for improving the visibility by controlling the gain that changes the weighting of Retinex processing disclosed in International Publication No. 2014/162533 may be performed.

According to the image processing of FIG. 13B(2) described above, the region drawing black in the region where images such as character and object are drawn can be recognized by the user without blending into the black background, and it is possible to realize a more suitable display.

Note that the problems and more suitable image processing for the air floating video display apparatus in which black is seen in the background (for example, the air floating video display apparatus 1000 in FIG. 4A to FIG. 4G and the air floating video display apparatus 1000 in FIG. 4I and FIG. 4J in the state where the rear-side window is in the light-shielding state) have been described in the examples of FIG. 13A and FIG. 13B. However, the image processing is also effective in the apparatus other than these air floating video display apparatuses.

Specifically, in the air floating video display apparatus 1000 in FIG. 4H and the air floating video display apparatus 1000 in FIG. 4I and FIG. 4J in which the rear-side window is not in the light-shielding state, the background of the air floating video 3 is not black, but is the scenery on the rear side of the air floating video display apparatus 1000 beyond the window. In this case as well, the problem described in FIG. 13A and FIG. 13B similarly exists.

Namely, the part drawing the black in the image of the character "panda" 1525 that is an object blends into the scenery on the rear side of the air floating video display apparatus 1000 beyond the window. In this case as well, by using the image processing shown in FIG. 13B(2), the part drawing the black in the image of the character "panda" 1525 that is an object can be separately recognized from the scenery on the rear side of the air floating video display apparatus 1000 beyond the window, and the visibility of the object is improved.

Namely, by using the image processing shown in FIG. 13B(2), the region in which the image of the character "panda" 1525 that is an object is displayed can be separately recognized from the scenery on the rear side of the air floating video display apparatus 1000 beyond the window, so that it is possible to recognize that the character "panda" 1525 that is an object is present in front of the scenery and the visibility of the object is improved.

In addition, when another video (video of the transmissive self-luminous video display apparatus 1650, video of the second display apparatus 1680, or the like) is displayed at the different depth position from the air floating video 3 in the air floating video display apparatus 1000 in FIG. 4K, FIG. 4L, and FIG. 4M as described above, the background of the air floating video 2 is not the black but is the different video. In this case as well, the problem described in FIG. 13A and FIG. 13B similarly exists.

Namely, the part drawing the black in the image of the character "panda" 1525 that is an object blends into the different video displayed at the different depth position from the air floating video 3. In this case as well, by using the image processing shown in FIG. 13B(2), the part drawing the black in the image of the character "panda" 1525 that is an object can be separately recognized from the different video, and the visibility of the object is improved.

Namely, by using the image processing shown in FIG. 13B(2), the region in which the image of the character "panda" 1525 that is an object is displayed can be separately recognized from the different video, so that it is possible to recognize that the character "panda" 1525 that is an object is present in front of the different video and the visibility of the object is improved.

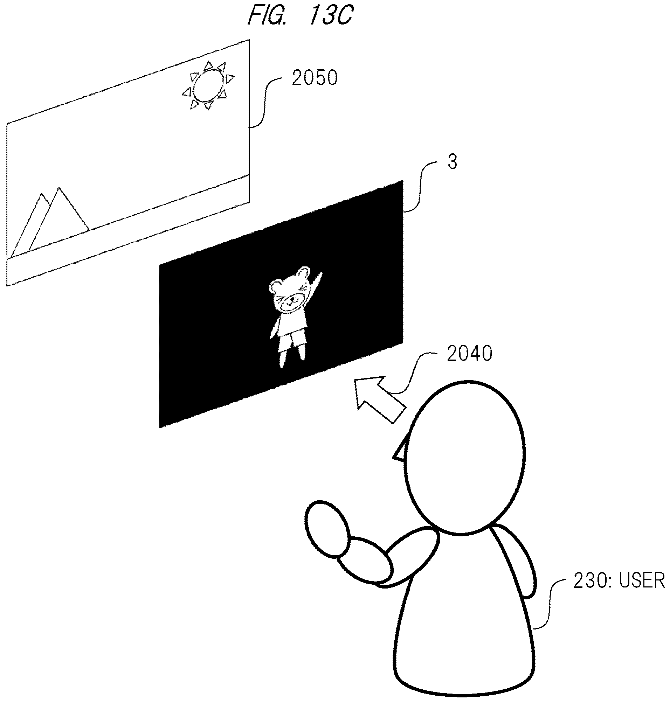

An example of the video display processing in the present embodiment will be described with reference to FIG. 13C. FIG. 13C is a video display example in which the air floating video 3 and a second image 2050 which is another video are simultaneously displayed in the video display examples of the present embodiment. The second image 2050 may correspond to the displayed video of the transmissive self-luminous video display apparatus 1650 in FIG. 4K or FIG. 4L. Also, the second image 2050 may correspond to the displayed video on the second display apparatus 1680 in FIG. 4M.

Namely, the video display example in FIG. 13C is a specific example of the video display of the air floating video display apparatus 1000 in FIG. 4K, FIG. 4L, and FIG. 4M. In the example of this drawing, a bear character is displayed in the air floating video 3. The region in the air floating video 3 other than the bear character is displayed in black, and is transparent as an air floating video. Further, the second image 2050 is a background image in which a plain, a mountain, and the sun are drawn.

Here, in FIG. 13C, the air floating video 3 and the second image 2050 are displayed at different depth positions. When the user 230 visually recognizes the two videos such as the air floating video 3 and the second image 2050 in the line of sight direction of the arrow 2040, the user 230 can visually recognize the two videos overlapped with each other. Specifically, the bear character in the air floating video 3 appears to be overlapped in front of the background of the plain, mountain, and sun drawn in the second image 2050.

Here, since the air floating video 3 is formed as a real image in the air, if the user 230 moves his/her viewpoint a little, the depth of the air floating video 3 and the second image 2050 can be recognized based on the parallax. Therefore, the user 230 can obtain a stronger sense of floating in the air with respect to the air floating video 3 while visually recognizing the two videos in the overlapped state.

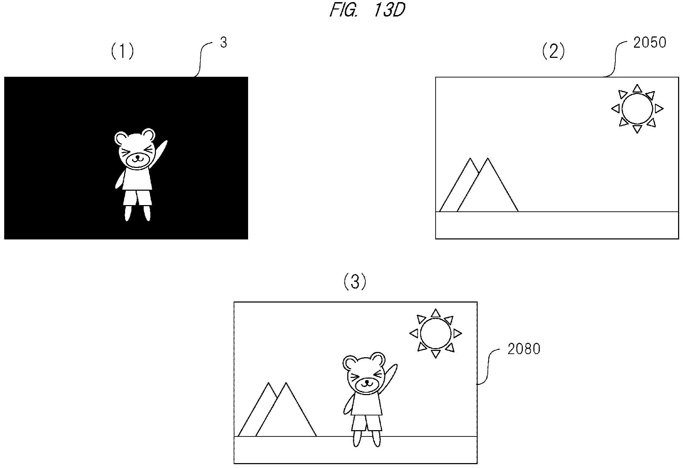

An example of the video display processing in the present embodiment will be described with reference to FIG. 13D. FIG. 13D(1) is a diagram of the air floating video 3 viewed from the line of sight direction of the user 230 in the example of the video display in the present embodiment in FIG. 13C. Here, a bear character is displayed in the air floating video 3. The region in the air floating video 3 other than the bear character is displayed in black, and is transparent as an air floating video.

FIG. 13D(2) is a diagram of the second image 2050 viewed from the line of sight direction of the user 230 in the example of the video display in the present embodiment in FIG. 13C. In the example of this drawing, the second image 2050 is a background image in which a plain, a mountain, and the sun are drawn.

FIG. 13D(3) is a diagram showing a state in which the second image 2050 and the air floating video 3 appear to be overlapped with each other in the line of sight direction of the user 230 in the example of the video display in the present embodiment in FIG. 13C. Specifically, the bear character in the air floating video 3 appears to be overlapped in front of the background of the plain, mountain, and sun drawn in the second image 2050.

Here, in order to ensure the visibility of the air floating video 3 more suitably when displaying the air floating video 3 and the second image 2050 at the same time, it is desirable to pay attention to the balance in the brightness therebetween. If the second image 2050 is too bright compared to the brightness of the air floating video 3, the displayed video of the air floating video 3 will become transparent, and the second image 2050 which is the background seen through the air floating video 3 will be strongly visually recognized.

Therefore, the output of the light source of the air floating video 3, the luminance of the displayed video of the display apparatus 1, the output of the light source of the display apparatus that displays the second image 2050, and the luminance of the displayed video of the display apparatus are preferably set such that at least the brightness per unit area of the air floating video 3 at the display position of the air floating video 3 is greater than the brightness per unit area of the video light that reaches the display position of the air floating video 3 from the second image 2050.

Note that, since it is necessary to satisfy this condition only when displaying the air floating video 3 and the second image 2050 at the same time, the control to reduce the brightness of the second image 2050 by reducing the output of the light source of the display apparatus that displays the second image 2050 and/or the luminance of the displayed video of the display apparatus may be performed when the first display mode in which only the second image 2050 is displayed without displaying the air floating video 3 is switched to the second display mode in which the air floating video 3 and the second image 2050 are displayed at the same time. The controller 1110 in FIG. 3 can realize such control by controlling the display apparatus 1 and the display apparatus that displays the second image 2050 (transmissive self-luminous video display apparatus 1650 in FIG. 4K or FIG. 4L or second display apparatus 1680 in FIG. 4M).

Note that, in the case where the control to reduce the brightness of the second image 2050 is performed when the first display mode described above is switched to the second display mode described above, the brightness may be uniformly reduced over the entire screen of the second image 2050. Alternatively, instead of uniformly reducing the brightness over the entire screen of the second image 2050, only the part of the second image 2050 corresponding to the object displayed in the air floating video 3 is made to have the highest brightness reduction effect, and the brightness reduction effect may be gradually reduced in the surrounding region thereof. This is because, if the brightness of the second image 2050 is reduced only in the part where the air floating video 3 is visually recognized so as to be overlapped with the second image 2050, the visibility of the air floating video 3 can be sufficiently ensured.

Here, since the air floating video 3 and the second image 2050 are displayed at different depth positions, the overlapping position of the air floating video 3 with respect to the second image 2050 changes due to parallax when the user 230 slightly changes the viewpoint. Therefore, in the case where the brightness is reduced unevenly for the entire screen of the second image 2050 when the first display mode described above is switched to the second display mode described above, it is not desirable to sharply reduce the brightness based on the outline of the object displayed in the air floating video 3, and it is desirable to perform the gradation processing of brightness reduction effect, in which the brightness reduction effect is gradually varied depending on the positions as described above.

Note that, in the air floating video display apparatus 1000 in which the position of the object displayed in air floating video 3 is approximately at the center of air floating video 3, the position where the brightness reduction effect is highest in the gradation processing of brightness reduction effect may be set to the central position of the air floating video 3.

With the video display processing according to the present embodiment described above, the user 230 can visually recognize the air floating video 3 and the second image 2050 more suitably.

Note that the control not to display the second image 2050 may be performed when displaying the air floating video 3. Since the visibility of the air floating video 3 becomes higher when the second image 2050 is not displayed, this control is suitable for the air floating video display apparatus 1000 required to display the air floating video 3 such that the user can visually recognize the air floating video 3 without fail.

<Second Embodiment>

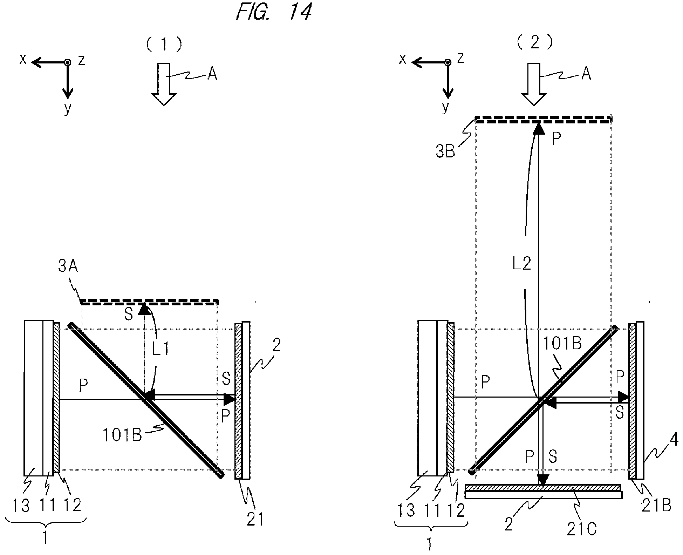

Another configuration example of the air floating video display apparatus will be described as the second embodiment. Note that, in the air floating video display apparatus according to the present embodiment, the optical system stored in the air floating video display apparatus described in the first embodiment is changed to the optical system shown in FIG. 14(1) or FIG. 14(2). In the present embodiment, differences from the first embodiment will be described, and repetitive descriptions of the same configuration as that of the first embodiment will be omitted. Note that, in the following description of the present embodiment, the specific polarized light and the other polarized light are polarized lights of polarized waves whose phases differ from each other by 90°.

FIG. 14(1) is an example of the optical system and optical path according to the present embodiment. In the optical system shown in FIG. 14(1), the display apparatus 1 is brought closer to the polarization separator 101B in the optical system of FIG. 2C, thereby making the entire optical system more compact. In FIG. 14(1), detailed descriptions of components denoted by the same reference characters as those in FIG. 2C will not be repeated.

In FIG. 14(1), as in FIG. 2C, the video light of a specific polarized light (P-polarized light in the drawing) emitted from the display apparatus 1 travels in a perpendicular direction from the video display surface of the display apparatus 1. Here, as in FIG. 2C, the polarization separator 101B selectively transmits the specific polarized light (P-polarized light in the drawing) emitted from the display apparatus 1 and reflects the other polarized light (S-polarized light in the drawing).

Therefore, the video light of the specific polarized light (P-polarized light in the drawing) traveling in the perpendicular direction from the video display surface of the display apparatus 1 passes through the polarization separator 101B and reaches the retroreflection plate 2 to which the $\lambda/4$ plate 21 is attached. The video light that has been retroreflected by the retroreflection plate 2 and travels again toward the polarization separator 101B is converted from the specific polarized light (P-polarized light in the drawing) at the time of emission from the display apparatus 1 into the other polarized light (S-polarized light in the drawing) by passing through the $\lambda/4$ plate 21 twice. Since the video light that travels again toward the polarization separator 101B is the other polarized light (S-polarized light in the drawing), it is reflected by the polarization separator 101B toward the position where the user should be. The traveling direction of the video reflected by the polarization separator 101B is determined based on the angle at which the polarization separator 101B is arranged.

In the example of FIG. 14(1), the video light traveling toward the polarization separator 101B is reflected at a right angle by the polarization separator 101B and travels as shown in the drawing. The video light reflected by the polarization separator 101B forms an air floating video 3A. The air floating video 3A can be visually recognized suitably by the user in the direction indicated by the arrow A.

Because of the characteristics of retroreflection by the retroreflection plate 2, the optical path length of the video light emitted from the display apparatus 1 to reach the retroreflection plate 2 is equal to the optical path length of the video light emitted from the retroreflection plate 2 to reach the position where the air floating video 3A is formed. This relationship determines the position where the air floating video 3A is formed in the traveling direction of the video light reflected by the polarization separator 101B.

In the example of FIG. 14(1), the display apparatus 1, the polarization separator 101B, and the retroreflection plate 2 are arranged closer together than those in the example of FIG. 2C. This allows the entire optical system to be configured more compactly. However, the amount by which the air floating video 3A projects from the optical system of FIG. 14(1) is not very large. For example, as an index of the amount by which the air floating video 3A projects from the optical system, the distance from the position where light ray at the central part of the video light is reflected by the polarization separator 101B to the position where the video light forms the air floating video 3A (L1 in the example of FIG. 14(1)) is shown in the drawing.

In addition, in the polarization design of the optical system of FIG. 14(1), the characteristics of P-polarized light and S-polarized light may be interchanged. Specifically, the specific polarized light of the video light emitted from the display apparatus 1 may be made S-polarized light, and the reflection characteristics of the polarization separator 101B may be interchanged between P-polarized light and S-polarized light. In this case, the P-polarized light and S-polarized light shown in the drawing are both reversed, but optical designs such as the optical path can be realized in exactly the same way.

Next, FIG. 14(2) shows another example of an optical system and optical path according to the present embodiment. In the optical system of FIG. 14(2), the configuration of the optical system of FIG. 14(1) is modified in order to increase the amount by which the air floating video projects from the optical system while still achieving the same compactness as the optical system of FIG. 14(1). In FIG. 14(2), detailed descriptions of components denoted by the same reference characters as those in FIG. 14(1) will not be repeated.

In FIG. 14(2), as in FIG. 14(1), video light of a specific polarized light (P-polarized light in the drawing) emitted from the display apparatus 1 travels in a perpendicular direction from the video display surface of the display apparatus 1. Here, the polarization characteristics of the polarization separator 101B differ by 90 degrees from that in FIG. 14(1). The video light of the specific polarized light (P-polarized light in the drawing) traveling in the perpendicular direction from the video display surface of the display apparatus 1 passes through the polarization separator 101B.

Here, unlike FIG. 14(1), ahead of the video light that has passed through the polarization separator 101B, a specular reflection plate 4 to which a λ/4 plate 21B is attached is arranged instead of the retroreflection plate 2 to which the λ/4 plate 21 is attached. Here, the reflection at the specular reflection plate 4 is specular reflection (referred to also as regular reflection), and is not retroreflection.

Therefore, the video light that has passed through the polarization separator 101B is specularly reflected by the specular reflection plate 4 to which the λ/4 plate 21B is attached. The video light that has been specularly reflected by the specular reflection plate 4 and travels again toward the polarization separator 101B is converted from the specific polarized light (P-polarized light in the drawing) at the time of emission from the display apparatus 1 into the other polarized light (S-polarized light in the drawing) by passing through the λ/4 plate 21B twice. The video light that travels again toward the polarization separator 101B is the other polarized light (S-polarized in the drawing), and is thus reflected by the polarization separator 101B.

Here, since the orientation of the polarization separator 101B in FIG. 14(2) is different from that in FIG. 14(1), the video light reflected by the polarization separator 101B travels in the opposite direction relative to the position where the user should be. Ahead of the video light traveling after being reflected by the polarization separator 101B, the retroreflection plate 2 to which a λ/4 plate 21C is attached is arranged. The video light is retroreflected by the retroreflection plate 2. The video light that has been retroreflected by the retroreflection plate 2 and travels again toward the polarization separator 101B is converted from the other polarized light (S-polarized light in the drawing) into the specific polarized light (P-polarized light in the drawing) again by passing through the λ/4 plate 21C twice.

The video light that travels again toward the polarization separator 101B is the specific polarized light (P-polarized light in the drawing), and thus passes through the polarization separator 101B and continues to travel toward the position where the user should be. The video light that has passed through the polarization separator 101B forms an air floating video 3B. The air floating video 3B can be visually recognized suitably by the user in the direction indicated by the arrow A.

Also in FIG. 14(2), as in FIG. 14(1), because of the characteristics of the retroreflection by the retroreflection plate 2, the optical path length of the video light emitted from the display apparatus 1 to reach the retroreflection plate 2 is equal to the optical path length of the video light emitted from the retroreflection plate 2 to reach the position where the air floating video 3B is formed. This relationship determines the position where the air floating video 3B is formed in the traveling direction of the video light that has passed through the polarization separator 101B.

The optical path length of the video light emitted from the display apparatus 1 to reach the retroreflection plate 2 in FIG. 14(2) is longer than the optical path length of the video light emitted from the display apparatus 1 to reach the retroreflection plate 2 in FIG. 14 (1). This is because an optical path going back and forth between the polarization separator 101B and the specular reflection plate 4, which does not exist in the optical system of FIG. 14(1), is added to the optical path length of the video light emitted from the display apparatus 1 to reach the retroreflection plate 2 in the optical system of FIG. 14(2).

As a result, the distance from the position where light ray at the central part of the video light passes through the polarization separator 101B to the position where the video light forms the air floating video 3B (L2 in the example of FIG. 14(2)) in the optical system of FIG. 14(2) becomes much longer than the distance from the position where light ray at the central part of the video light is reflected by the polarization separator 101B to the position where the video light forms the air floating video 3A (L1 in the example of FIG. 14(1)) in the optical system of FIG. 14(1).

In addition, in the polarization design of the optical system of FIG. 14(2) as well, the characteristics of P-polarized light and S-polarized light may be interchanged. Specifically, the specific polarized light of the video light emitted from the display apparatus 1 may be made S-polarized light, and the reflection characteristics of the polarization separator 101B may be interchanged between P-polarized light and S-polarized light. In this case, the P-polarized light and S-polarized light shown in the drawing are both reversed, but optical designs such as the optical path can be realized in exactly the same way.

With the optical systems of FIG. 14(1) and FIG. 14(2) according to the second embodiment of the present invention described above, a more compact optical system can be realized. In particular, the optical system of FIG. 14(2) makes it possible to increase the amount by which the air floating video projects from the optical system, while still achieving a more compact optical system.

When incorporating the optical system of FIG. 14(1) or FIG. 14(2) into an air floating video display apparatus, this can be realized by replacing the optical system in the air floating video display apparatus described in the first embodiment with the optical system of FIG. 14(1) or FIG. 14(2). Specifically, the optical system of FIG. 14(1) may be replaced with the optical system of the air floating video display apparatus of FIG. 4E, FIG. 4F, FIG. 4G, FIG. 4H, FIG. 4I, FIG. 4J, FIG. 4K, FIG. 4L, or FIG. 4M. In this case, since the optical system becomes compact, it is possible to make the housing of the air floating video display apparatus in each drawing smaller.

More specifically, the optical system of FIG. 14(2) may be replaced with the optical system of the air floating video display apparatus of FIG. 4E, FIG. 4F, FIG. 4G, FIG. 4K, or FIG. 4L. In this case, it is possible to further increase the amount by which the air floating video projects from the optical system. Also, since the optical system becomes more compact, it is possible to make the housing of the air floating video display apparatus of each drawing smaller.

<Third Embodiment>

As the third embodiment of the present invention, a display example of the air floating video display apparatus 1000 described with reference to the drawings of the first or second embodiment will be described. Any of the air floating video display apparatuses 1000 in the drawings of the first embodiment or the second embodiment may be used for the air floating video display apparatus 1000 of the third embodiment of the present invention. In the present embodiment, differences from the first or second embodiment will be described, and repetitive descriptions of the same configuration as that of the first or second embodiment will be omitted.

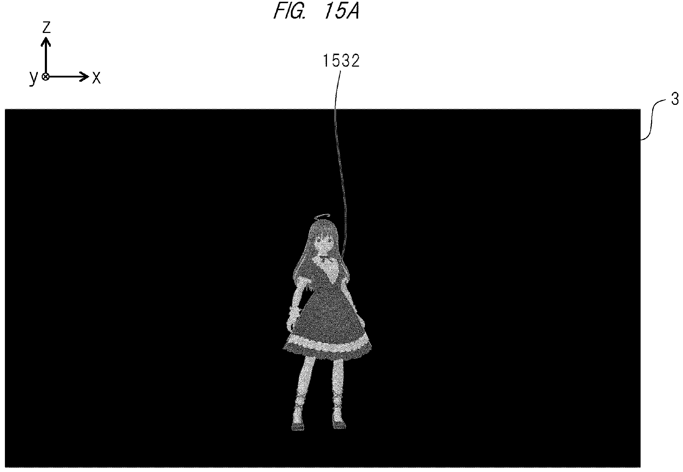

FIG. 15A shows a display example of the air floating video display apparatus 1000 of the third embodiment, and shows an example where a rendered video of a 3D model of a character 1532 is displayed as the air floating video 3. The 3D model of the character 1532 displayed as the air floating video 3 is a video captured and rendered from a predetermined viewpoint (virtual 3D space camera) in the virtual 3D space. The rendered video is displayed on the display apparatus 1, passes through the optical system of the air floating video display apparatus 1000, and then is displayed as the air floating video 3.

For the description of FIG. 15A, a black screen refers to a state where the liquid crystal display panel 11 of the display apparatus 1 is showing a black screen. In the air floating video 3, the black screen appears transparent in space, meaning it has no luminance or color and is present in midair. Namely, in the example shown in FIG. 15A, only the character 1532 displayed as the air floating video 3 appears to be floating in midair as visually recognized by the user.

Note that, in the air floating video display apparatus 1000, a first processing example for realizing the display of the rendered video of the 3D model such as the character 1532 as shown in FIG. 15A will be described using the configuration of the air floating video display apparatus 1000 of FIG. 3. Specifically, a video generation program capable of generating the rendered video of the 3D model such as the character is first stored in the storage 1170. The controller 1110 reads the video generation program from the storage 1170 and loads it into the memory 1109. The controller 1110 executes the video generation program loaded into the memory 1109, and the video generation program renders the 3D model such as the character to generate video displayed on the display apparatus 1.

Here, the video controller 1160 only needs to perform controls to display the generated video of the character 1532 on the display apparatus 1.

In addition, in the air floating video display apparatus 1000, a second processing example for realizing the display of the rendered video of the 3D model such as the character 1532 as shown in FIG. 15A will be described using the configuration of the air floating video display apparatus 1000 of FIG. 3.

In the second processing example, pre-rendered videos are accumulated in the storage 1170. In this example, the video controller 1160 plays back the rendered videos accumulated in the storage 1170 and performs controls to display them on the display apparatus 11. The rendered videos accumulated in the storage 1170 in advance may be videos rendered by the video generation program loaded in the memory 1109 as in the first processing example.

In addition, the rendered videos accumulated in the storage 1170 in advance are pre-rendered by an external device, and may be acquired by the air floating video display apparatus 1000 via the communication unit 1132 to be accumulated in the storage 1170.

In addition, in the air floating video display apparatus 1000, a third processing example for realizing the display of the rendered video of the 3D model such as the character 1532 as shown in FIG. 15A will be described using the configuration of the air floating video display apparatus 1000 of FIG. 3. In the third processing example, the rendered video pre-rendered by the external device is acquired by the air floating video display apparatus 1000 via the communication unit 1132. In the third processing example, the rendered video acquired via the communication unit 1132 does not need to be accumulated in the storage 1170 and may be displayed on the display apparatus 1 as the rendered video of the generated character 1532 by controls of the video controller 1160.

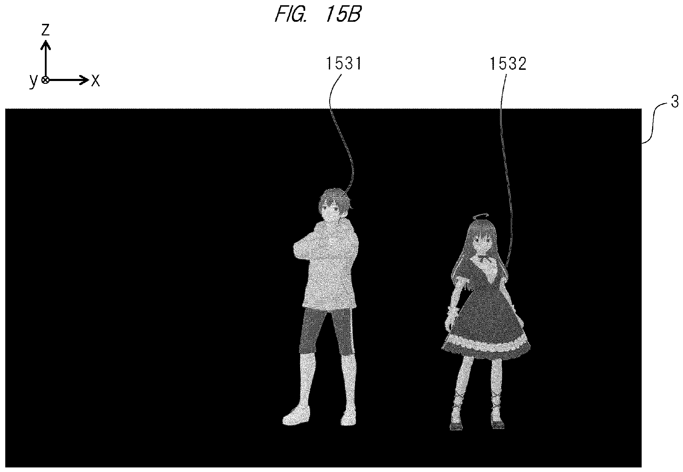

Next, FIG. 15B shows a display example of the air floating video display apparatus 1000 of the third embodiment, and shows an example where the rendered video of the virtual 3D space containing the 3D model of a character 1531 and the 3D model of the character 1532 is displayed as the air floating video 3. The 3D model of the character 1531 and the 3D model of the character 1532 displayed as the air floating video 3 are videos captured and rendered from a predetermined viewpoint in the virtual 3D space. The rendered videos are displayed on the display apparatus 1, pass through the optical system of the air floating video display apparatus 1000, and then are displayed as the air floating video 3. For the description of FIG. 15B, the black screen refers to a state where the liquid crystal display panel 11 of the display apparatus 1 is showing a black screen. In the air floating video 3, the black screen appears transparent in space, meaning it has no luminance or color and is present in midair. Namely, in the example shown in FIG. 15B, only the character 1531 and the character 1532 displayed as the air floating video 3 appear to be floating in midair as visually recognized by the user.

Here, FIG. 15B shows an example in which rendering is performed using the parallel projection drawing method in the virtual 3D space containing the 3D model of the character 1531 and the 3D model of the character 1532. Therefore, based on the rendered video of FIG. 15B, height settings of the 3D models of the character 1531 and the character 1532 can be accurately recognized. The character 1531 is set to be taller than the character 1532, and the character 1532 is set to be shorter than the character 1531.

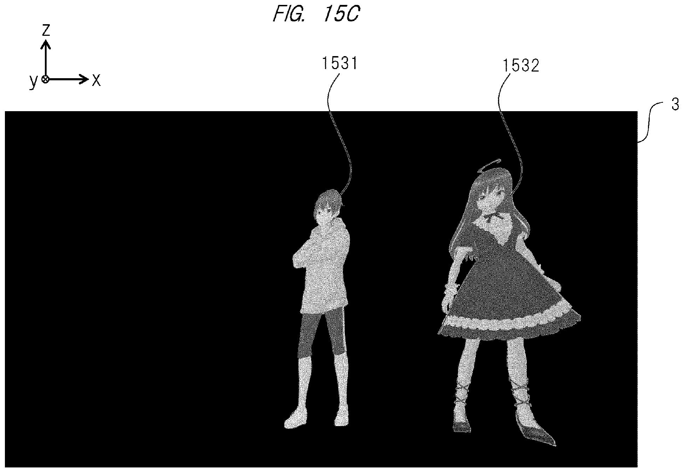

Next, FIG. 15C shows the rendered video rendered using the perspective drawing method in the virtual 3D space containing the 3D model of the character 1531 and the 3D model of the character 1532 and displayed on the display apparatus 1. Here, FIG. 15C is an example where the angle of view of the virtual 3D space camera used for rendering is set to a wide-angle view. The wide-angle distortion of the virtual 3D space camera causes the character 1532 positioned near an edge of the angle of view to appear significantly more distorted than the character 1531 positioned near the center of the angle of view. As a result, the character 1532 originally set to be shorter than the character 1531 appears taller than the character 1531.

For example, when displaying the same video as FIG. 15C on a fixed-pixel display apparatus having a typical rectangular display region instead of the air floating video, the user would be able to visually recognize that the region corresponding to the black region of the air floating video 3 shows a black screen on the fixed pixel. As a result, the user would be able to recognize the rectangular display region of the fixed-pixel display apparatus corresponding to the rectangle of the air floating video 3. If the user can recognize the rectangular display region of the fixed-pixel display apparatus, it is possible for the user to assume the effects of wide-angle distortion based on the rectangle and the standing position of the character 1532 and the character 1531 with respect to the rectangle, and recognize that the character 1531 is significantly distorted.

In contrast, when displaying the video of FIG. 15C as the air floating video, the black region of the air floating video 3 appears transparent to the user and therefore cannot be visually recognized. As a result, the user would not be able to recognize the rectangular shape of the outer edge of the display region of the air floating video 3. Thus, in the example of FIG. 15C, the character 1531 and the character 1532 displayed as the air floating video 3 appear to float in midair to the user. The user recognizes that the character 1532 is displayed larger than the character 1531. Here, it is not possible for the user to recognize the rectangular shape of the outer edge of the display region of the air floating video 3, and thus it becomes difficult for the user to assume that the character 1532 appears larger due to the effects of wide-angle distortion.

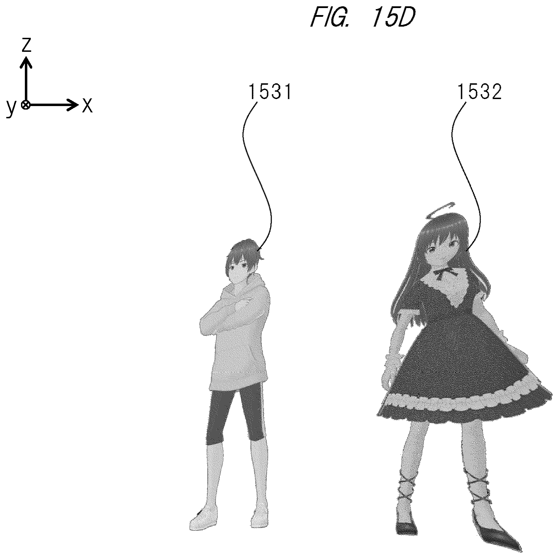

For explanatory purposes, FIG. 15D shows an example in which the black region in the rectangular display region of the air floating video 3 has been removed from the video in FIG. 15C.

As can be seen from the example of FIG. 15D, when the black region in the rectangular display region of the air floating video 3 is removed from the video of FIG. 15C, it becomes difficult for the user to recognize the center of the rectangular display region of the air floating video 3. As a result, it is also difficult for the user to understand that the character 1531 is standing at the center of the rectangular display region of the air floating video 3 and that the character 1532 is standing at the right edge of the same rectangular display region of the air floating video 3. Therefore, it is difficult for the user to recognize whether or not the character 1532 is distorted by wide-angle distortion. In such a display state, it is entirely possible for the user to mistakenly perceive the character 1532 as being larger than the character 1531. In the following description, an example of a more suitable display control will be explained.

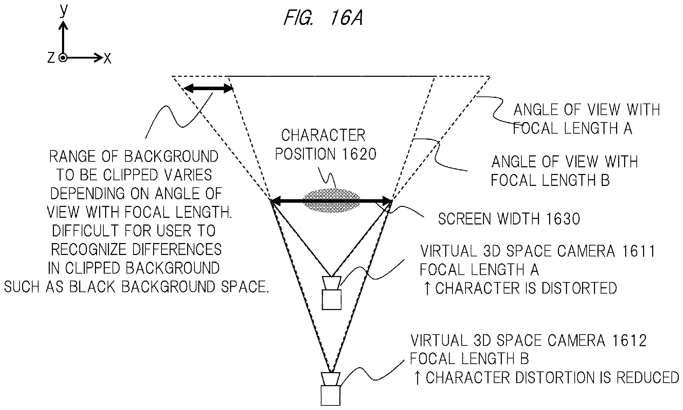

First, an example of a method for generating the rendered video by capturing the 3D model of the character in a virtual 3D space using a virtual camera will be described with reference to FIG. 16A. When generating the rendered video containing the object in the virtual 3D space, the range of the video is determined by the angle of view of the virtual 3D space camera. The angle of view of the virtual 3D space camera can be set by simulating an optical camera in the real space based on the size of the virtual imaging sensor and the focal length of the virtual lens.

FIG. 16A shows an example of angles of view of a virtual 3D space camera 1611 and a virtual 3D space camera 1612 in which predetermined imaging sensors in the virtual 3D space are set. In the example of this drawing, the imaging sensors of the virtual 3D space camera 1611 and the virtual 3D space camera 1612 are of the same size. Each virtual 3D space camera captures a video such that a screen width of the captured range of the captured video in a range including a character position 1620 where the character is placed becomes a screen width 1630.

Here, the focal length of the virtual 3D space camera 1611 is shorter than the focal length of the virtual 3D space camera 1612. Namely, even if the screen width 1630 of the captured range of the captured video is the same, the angle of view of the virtual 3D space camera 1611 is wider than the angle of view of the virtual 3D space camera 1612. Note that the relationship between the specific focal length setting value of the virtual 3D space camera and the angle of view is also affected by the size of the imaging sensor. Therefore, by converting to the focal length in a case where the size of the imaging sensor is equivalent to the size of a 35 mm film, the description can be simplified. Thus, the focal length converted to a 35 mm film equivalent will be used in the following description.

Here, since the angle of view of the virtual 3D space camera 1611 is wider than the angle of view of the virtual 3D space camera 1612, in the angle of view with a focal length A of the virtual 3D space camera 1611, the captured character may be distorted by the wide-angle distortion. In contrast, since the angle of view of the virtual 3D space camera 1612 is more telephoto than the angle of view of the virtual 3D space camera 1611, the wide-angle distortion of the captured character will be relatively reduced. In addition, the character position 1620 in virtual 3D space with respect to the background that is farther than the position in the virtual 3D space camera, the captured range to be clipped will also vary depending on the angle of view. However, in cases such as when there is a black background space, it is difficult for the user to recognize differences in the range of the clipped background based on the rendered video.

As described above, although the rendered video can be generated by capturing the 3D model of the character in the virtual 3D space using the virtual camera, the character in the rendered video is subjected to wide-angle distortion by the angle of view of the virtual 3D space camera.

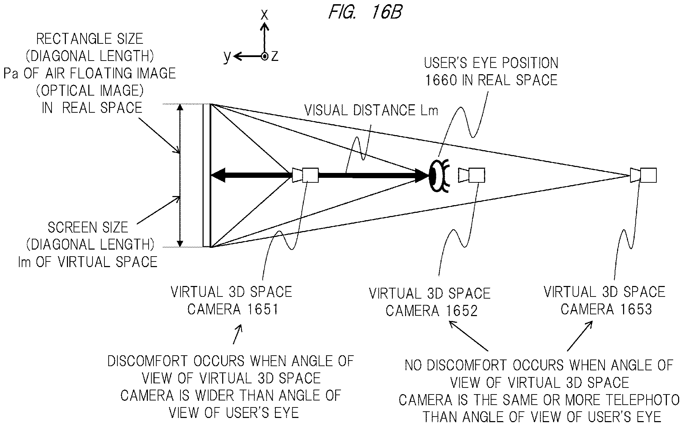

Next, the discomfort caused by the wide-angle distortion when the user visually recognizes the display screen of the display apparatus such as the air floating video display apparatus 1000 and a method to alleviate such discomfort will be described with reference to FIG. 16B. FIG. 16B shows an example where the user visually recognizes the optical image of the air floating image which is the display screen of the air floating video display apparatus. The air floating image which serves as the display screen has a rectangular shape. A diagonal length of the rectangle is Pa. For video of the air floating image, the rendered video can be displayed that shows an object such as a 3D model or the like of a character in the virtual 3D space as shown in FIG. 15A captured by the virtual camera and rendered by the perspective drawing method. Note that a visible distance from the user's eye position 1660 in real space to the display screen of the display apparatus to the air floating video display apparatus 1000 is referred to as a visual distance Lm.

Here, in FIG. 16B, the screen having a screen size Im in the virtual space used when generating the rendered video is overlapped with the display screen of the display apparatus such as the air floating video display apparatus 1000 in the real space to compare the angle of view of the virtual 3D space camera in the virtual 3D space and the angle of view recognized by the user in the real space when viewing the display screen. In FIG. 16B, three virtual 3D space cameras with different angles of view are shown: a virtual 3D space camera 1651, a virtual 3D space camera 1652, and a virtual 3D space camera 1653.

In the comparison of angles of view shown in FIG. 16B, the video rendered by the perspective drawing method is captured by the virtual 3D space camera 1651 having a wider angle of view than the angle of view from the user's eye position 1660 in the real space when viewing the display screen of the air floating video display apparatus 1000, and is displayed as the air floating video of the air floating video display apparatus 1000. If the user visually recognizes such a video from the user's eye position 1660, a wide-angle distortion that would not normally be visually recognizable from the user's eye position 1660 occurs. As a result, the user may feel as if something is wrong with the video.

In contrast, the video rendered by the perspective drawing method using the virtual 3D space camera 1652 having an angle of view that is approximately equal to the angle of view from the user's eye position 1660 when viewing the display screen of the air floating video display apparatus 1000, or using the virtual 3D space camera 1653 having a more telephoto angle of view than the angle of view from the user's eye position 1660 when viewing the display screen of the display apparatus such as the air floating video display apparatus 1000 in the real space is displayed as the air floating video of the air floating video display apparatus 1000.

At this time, when the user visually recognizes the video from the eye position 1660, no wide-angle distortion such as that caused by the virtual 3D space camera 1651 occurs in the rendered video, and thus, the user would not feel as if something is wrong. Note that, as the angle of view of the virtual 3D space camera such as the virtual 3D space camera 1653 becomes more telephoto, even if the video is rendered using the perspective drawing method, it approaches the parallel projection drawing method. However, compared to the wide-angle distortion of the perspective drawing method, the human eye tends to feel less discomfort with parallel projection.

Therefore, in a situation such as in FIG. 16B, when displaying the rendered video where the object such as the 3D model of the character in the virtual 3D space is captured by the virtual 3D space camera and is rendered by the perspective drawing method, and when the user views the display screen of the display apparatus such as the air floating video display apparatus 1000 from the user's eye position 1660 in real space, it is desirable for the angle of view of the virtual 3D space camera used for rendering to be equivalent to or have a more telephoto angle than the angle of view from the user's eye position 1660 to display screen of the display apparatus such as the air floating video display apparatus 1000 in the real space.

Namely, where the focal length of the virtual 3D space camera is Lf for a 35 mm film equivalent, and the focal length of the virtual 3D space camera that results in the same angle of view as when the user views the display screen of the display apparatus such as the air floating video display apparatus 1000 from the user's eye position 1660 in the real space is Lf0 for a 35 mm film equivalent, a configuration may be provided where the video to be displayed on the display screen of the display apparatus such as the air floating video display apparatus 1000 is rendered using the virtual 3D space camera with the 35 mm film equivalent focal length satisfying Lf≥Lf0.

Lf0 which is a 35 mm film equivalent of the focal length of the virtual 3D space camera that results in the same angle of view as when the user views the display screen of the display apparatus such as the air floating video display apparatus 1000 from the user's eye position 1660 in the real space can be given in the following manner. The angle of view when the user views the display screen of the display apparatus such as the air floating video display apparatus 1000 from the user's eye position 1660 in the real space and the angle of view of the virtual 3D space camera with the 35 mm film equivalent focal length Lf0 are equal, and thus, the ratio of the visual distance Lm to the diagonal length Pa of the rectangular air floating image of the display screen, and the ratio of the 35 mm film equivalent focal length Lf0 of the virtual 3D space camera to the diagonal length of the 35 mm film are equal.

Namely, when the diagonal length of the 35 mm film is Fi, then the relationship Lm/Pa=Lf0/Fi is established. By transforming this equation for Lf0, Lf0=Lm×Fi/Pa is obtained. In order to set the angle of view Lf of the virtual 3D space camera used for rendering to be equivalent to or have a more telephoto angle than the angle of view when the user views the display screen of the display apparatus such as the air floating video display apparatus 1000 from the user's eye position 1660 in the real space, it is sufficient to satisfy Lf≥Lf0, and thus, it is desirable to use the virtual 3D space camera with a 35 mm film equivalent focal length satisfying Lf≥Lm×Fi/Pa to capture an object such as the 3D model of the character in the virtual 3D space and render it by the perspective drawing method to display the video on the display screen of the display apparatus such as the air floating video display apparatus 1000.

Performing the above-described display processing makes it possible to perform the display of the rendered video of the 3D model of the character and the like in a manner that feels less uncomfortable to the user when visually recognizing the video.

Note that the visual distance Lm can be predetermined as a technically suitable distance for the air floating video display apparatus 1000. The value of the visual distance Lm may also be recorded in the nonvolatile memory 1108 or the storage 1170 of FIG. 3. Alternatively, the visual distance Lm may be presented to the user by displaying it in a user manual on the display screen such as the air floating video 3, thereby encouraging the user to use the device at that distance. In addition, it is also possible to measure the distance from the user to the display screen such as the air floating video 3 at the start of use by performing distance measurement processing using the imager 1180 shown in FIG. 3, and calculate that as the visual distance Lm. The distance measurement processing may be performed by the controller 1110 of FIG. 3 using the image captured by the imager 1180.

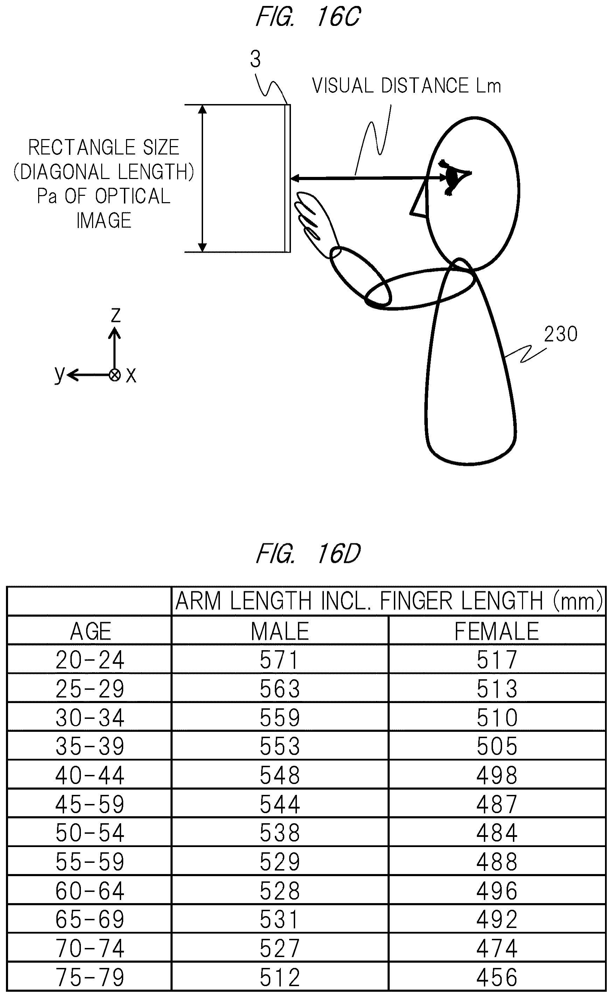

Next, an example of the visual distance in a case of the display apparatus having an operation detector capable of detecting operations such as the user's finger touch on the display screen will be described with reference to FIG. 16C. As shown in FIG. 4A to FIG. 4O, in the display apparatus (air floating video display apparatus 1000 having the aerial operation detection sensor 1351 and the aerial operation detector 1350 in FIG. 4A to FIG. 4O) capable of detecting the finger touch by the user 230 on the display screen (air floating image 3 in FIG. 4A to FIG. 4O), the visual distance Lm described in FIG. 16B is determined by the arm length including the tip of the finger in the case of a touch sensor model. For example, as Reference Information 1, the following URL contains the results recorded from the project "Human Body Size Database Development (size-JPN)" conducted by the Ministry of Economy, Trade and Industry from FY2004 to FY2006 in which data was collected from approximately 7,000 individuals.

[Reference Information 1]

https://warp.ndl.go.jp/info:ndljp/pid/286890/ www.meti.go. jp/press/20071001007/20071001007.html

Based on the results of the study results, the calculated arm lengths including the finger length by gender and age group are shown in FIG. 16D.

According to the study results, among the groups classified by gender and age, the group with the longest average arm length is males aged 20 to 24, with an average of 571 mm. The group with the shortest average arm length is females aged 75 to 79, with an average of 456 mm.

However, when performing touch operations on the screen, it is almost never the case that the arm is fully extended during operation. In reality, users operate the screen with their arms slightly bent, at a distance somewhat shorter than their full arm length. Measurements taken from multiple individuals indicate that the average ratio of the operating distance to arm length is approximately 80%. Based on this data, it is estimated that the visual distance Lm when users in the group of males aged 20 to 24 with the longest arm length operate a touch sensor screen is approximately 457 mm. In addition, for the group of females aged 75 to 79 with the shortest arm length, it is estimated that the visual distance Lm is approximately 365 mm.

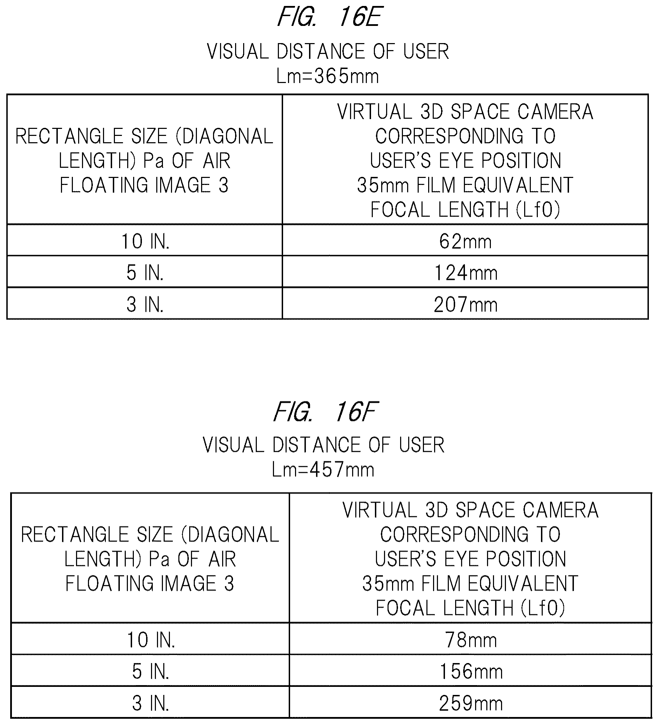

FIG. 16E is a table showing specific numerical values calculated for the case where the user's visual distance Lm is 365 mm assuming the group with the shortest arm length based on the calculation results in FIG. 16D, showing the diagonal length Pa of the rectangular air floating image which is the display screen described in FIG. 16B, and the 35 mm film equivalent focal length Lf0 of the virtual 3D space camera which has the same angle of view as the angle of view when the user views the display screen of the display apparatus such as the air floating video display apparatus 1000 from the user's eye position 1660 in the real space. In FIG. 16E, examples are given for the diagonal length Pa of 10 inches, 5 inches, and 3 inches of the air floating image which is the display screen.

Here, the calculation is performed using Lf0=Lm×Fi/Pa described in FIG. 16B. When the diagonal length Pa of the rectangular air floating image of the display screen is 10 inches, 5 inches, or 3 inches, the corresponding focal lengths Lf0 are calculated to be 62 mm, 124 mm, and 207 mm, respectively. In the air floating video display apparatus 1000, when adopting each of these display screen sizes, and when generating the video to be displayed on the display screen, it is preferable to capture the object such as the 3D model of the character in the virtual 3D space using the virtual 3D space camera with the focal length Lf greater than or equal to the 35 mm film equivalent focal length Lf0, and to render the video by the perspective drawing method. As a result, it becomes possible to display the rendered video of the 3D model of the character in which the user would feel less discomfort when visually recognizing the video.

Here, by substituting the visual distance Lm=365 mm and the 35 mm film diagonal length Fi=43.3 mm into Lf0=Lm×Fi/Pa, Lf0=15805/Pa is derived.

Therefore, it is sufficient to determine the focal length Lf (mm) of the virtual 3D space camera used for rendering the video to satisfy Lf≥Lf0, and thus, by using the focal length of the virtual 3D space camera such that Lf≥15805/Pa is satisfied in any display screen, it can be said that the effect of displaying the rendered video such as the 3D model of the character in such a manner that the user would feel less discomfort when visually recognizing the video can be obtained at least for a specific group of users.

Next, FIG. 16F is a table showing specific numerical values calculated for the case where the user's visual distance Lm is 457 mm assuming the group with the longest arm length based on the calculation results in FIG. 16D, showing the diagonal length Pa of the rectangular air floating image which is the display screen described in FIG. 16B, and the 35 mm film equivalent focal length Lf0 of the virtual 3D space camera which has the same angle of view as the angle of view when the user views the display screen of the display apparatus such as the air floating video display apparatus 1000 from the user's eye position 1660 in the real space. In FIG. 16F, examples are given for the diagonal length Pa of 10 inches, 5 inches, and 3 inches of the air floating image which is the display screen.

Here, the calculation is performed using Lf0=Lm×Fi/Pa described in FIG. 16B. When the diagonal length Pa of the rectangular air floating image of the display screen is 10 inches, 5 inches, or 3 inches, the corresponding focal lengths Lf0 are calculated to be 78 mm, 156 mm, and 259 mm, respectively. In the air floating video display apparatus 1000, when adopting each of these display screen sizes, and when generating the video to be displayed on the display screen, it is preferable to capture the object such as the 3D model of the character in the virtual 3D space using the virtual 3D space camera with the focal length Lf greater than or equal to the 35 mm film equivalent focal length Lf0, and to render the video by the perspective drawing method. As a result, it becomes possible to display the rendered video of the 3D model of the character in which the user would feel less discomfort when visually recognizing the video.

Here, by substituting the visual distance Lm=457 mm and the 35 mm film diagonal length Fi=43.3 mm into Lf0=Lm×Fi/Pa, Lf0=19788/Pa is derived.

Therefore, it is sufficient to determine the focal length Lf (mm) of the virtual 3D space camera used for rendering the video to satisfy, and thus, by using the focal length of the virtual 3D space camera such that Lf≥19788/Pa is satisfied in any display screen, it can be said that the effect of displaying the rendered video such as the 3D model of the character in such a manner that the user would feel less discomfort when visually recognizing the video can be obtained for almost all groups of users.

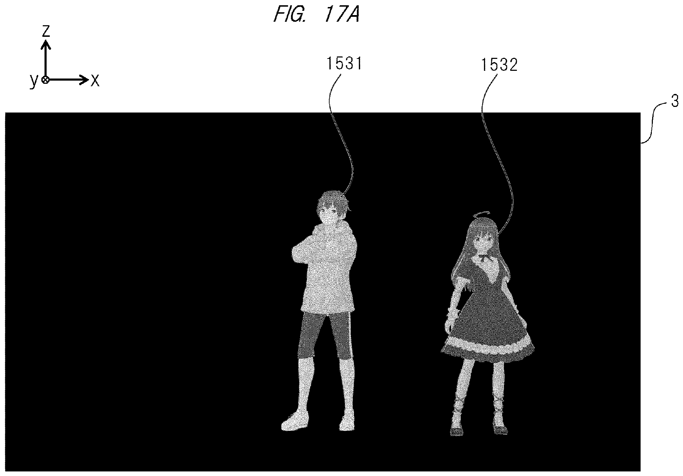

The effects of the display method for the rendered video such as the 3D model of the character according to the present embodiment described with reference to FIG. 16B to FIG. 16F will be described with reference to FIG. 17A. FIG. 17A shows an example in which the rendered video subjected to rendering by the perspective drawing method in the virtual 3D space containing the 3D model of the character 1531 and the 3D model of the character 1532 is displayed on the display apparatus 1.

Here, FIG. 17A is an example of the video that is visually recognized by the user when rendering and display processing is performed with the focal length of the virtual 3D space camera which is a rendering viewpoint being set such that Lf≧Lm×Fi/Pa is satisfied. As a result, even with the perspective drawing method, if the angle of view of the virtual 3D space camera which is the rendering viewpoint is equivalent to or more telephoto than the angle of view at which the user no longer feel discomfort, the user would not recognize any wide-angle distortion that would otherwise cause discomfort in the first place.

In addition, in the example of FIG. 17A, the phenomenon in which the character 1532 who is originally set to be shorter than the character 1531 appears to be taller than the character 1531 does not occur.

In addition, when displaying the video of FIG. 17A as the air floating video, the black region of the air floating video 3 appears transparent to the user and therefore cannot be visually recognized, and the user would not be able to recognize the rectangular shape of the outer edge of the display region of the air floating video 3. Therefore, in the example of FIG. 17A, only the character 1531 and the character 1532 displayed as the air floating video 3 appear to be floating in midair as visually recognized by the user. However, in the video of FIG. 17A, unlike the video of FIG. 15C, the situation in which the character 1532 is displayed larger than the character 1531 does not occur, and thus, the user recognition issue that is observed in the video of FIG. 15C does not arise.

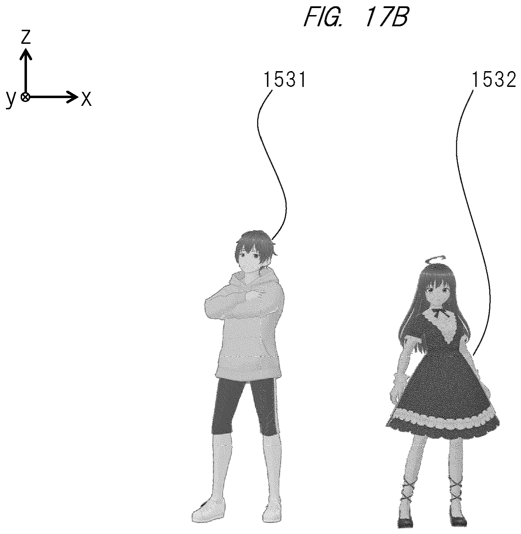

For explanatory purposes, FIG. 17B shows an example in which the black region in the rectangular display region of the air floating video 3 has been removed from the video in FIG. 17A.

As can be seen from the example of FIG. 17B, when the black region in the rectangular display region of the air floating video 3 is removed from the video of FIG. 17B, it becomes difficult for the user to recognize the center of the rectangular display region of the air floating video 3. As a result, it is also difficult for the user to understand that the character 1531 is standing at the center of the rectangular display region of the air floating video 3 and that the character 1532 is standing at the right edge of the same rectangular display region of the air floating video 3. However, in the video of FIG. 17B, the focal length of the virtual 3D space camera which is the rendering viewpoint is set such that Lf≧Lm×Fi/Pa is satisfied, and the rendering processing and the display are performed such that the character 1531 and the character 1532 are more suitably displayed without causing the user to feel any discomfort by wide-angle distortion.

Even if the user does not recognize the rectangular shape of the display region of the air floating video 3, the user can recognize the character 1531 and the character 1532 more suitably. Performing such a display processing makes it possible to achieve an effect in which the user can recognize the character displayed in the air floating video 3 with less discomfort, thereby improving the sense of presence of the character displayed in midair and enabling a more suitable display.

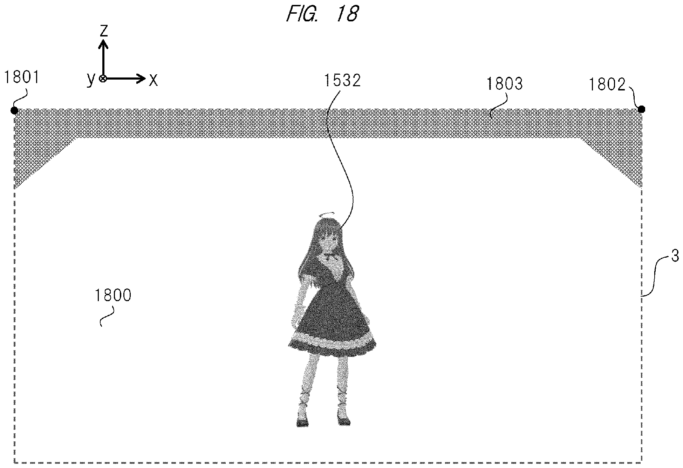

Note that FIG. 18 shows a description of a predetermined region in the rectangular display region of the air floating video 3. The predetermined region is a region that is more difficult for the user to recognize the rectangular display region of the air floating video 3 when showing a black screen. In FIG. 15A to FIG. 15D, FIG. 17A, and FIG. 17B, examples of the videos were described in which all regions other than the character show a black screen. However, even in a case where only a portion of the region other than the character is displayed, it may still be difficult for the user to recognize the rectangular display region of the air floating video 3.

FIG. 18 shows an example of such a region. The character 1532 is displayed as the air floating video 3 of FIG. 18. A bright background video is displayed in a white background region 1800 of the character 1532. In contrast, an upper-left vertex 1801 and an upper-right vertex 1802 of the rectangular display region of the air floating video 3 show a black screen.

In addition, a region 1803 containing an upper edge of the rectangular display region of the air floating video 3 also shows a black screen. As a result, when the vertices of the rectangular display region of the air floating video 3 show black screens and become transparent or visually unrecognizable to the user, or when the region containing one side of the rectangular display region of the air floating video 3 shows a black screen and becomes transparent or visually unrecognizable to the user, the elements constituting the rectangular display region of the air floating video 3 become transparent or visually unrecognizable to the user. At this time, it becomes difficult for the user to recognize the rectangular display region of the air floating video 3.

As described above, if a black screen is shown in the region that makes it difficult for the user to recognize the rectangular display region of the air floating video 3, even if not all regions other than the character show black screens, effects of a more suitable display processing described with reference to FIG. 15A to FIG. 17B according to the present embodiment can be obtained.

<Fourth Embodiment>

Next, an example in which the air floating video display apparatus 1000 according to the first to third embodiments described with reference the drawings is connected to the Internet and performs a new operation by connecting to a server having a large language model artificial intelligence via the Internet will be described as a fourth embodiment of the present invention. The air floating video display apparatus 1000 in any of the drawings of the first to third embodiments may be used as the air floating video display apparatus 1000 of the fourth embodiment of the present invention. In the present embodiment, differences from the first to third embodiments will be described, and repetitive descriptions of the same configuration as that of these embodiments will be omitted.

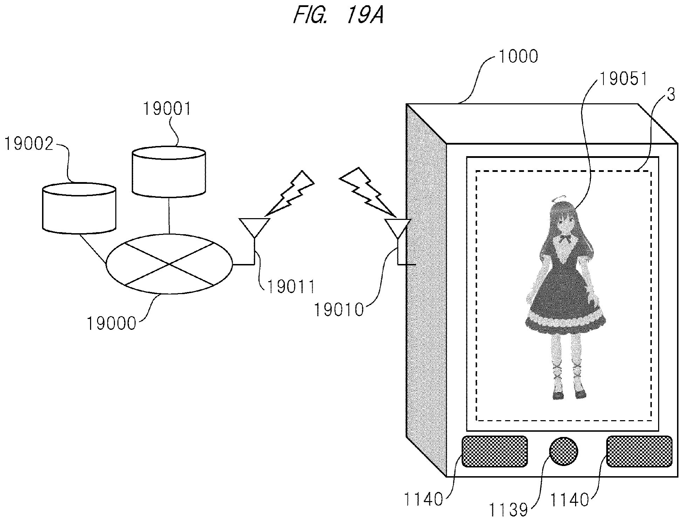

An example of a connection state between the air floating video display apparatus 1000 and a large language model server 19001 according to the fourth embodiment of the present invention will be described with reference to FIG. 19A. The air floating video display apparatus 1000 according to the fourth embodiment may also be referred to as a character conversation apparatus. In addition, a system including the air floating video display apparatus 1000 and the large language model server 19001 according to the fourth embodiment may also be referred to as a character conversation system. The air floating video 3 displayed by the air floating video display apparatus 1000 displays a video of a character 19051. The video of the character 19051 is generated by rendering a 3D model of a character in a virtual space.

In the example of FIG. 19A, the audio output unit 1140 of the air floating video display apparatus 1000 is configured with a speaker. In addition, the air floating video display apparatus 1000 comprises the microphone 1139 and can capture the user's voice. A communication unit 19010 is an example of the communication unit 1132 of FIG. 3. The air floating video display apparatus 1000 can communicate with a communication apparatus 19011 connected to the Internet 19000 via the communication unit 19010. The example of FIG. 19A shows wireless communication between the communication unit 19010 and the communication apparatus 19011. However, the communication may be a wired communication. A communication path between the communication unit 19010 and the Internet 19000 may include both wired and wireless portions. The air floating video display apparatus 1000 can communicate with the large language model server 19001 via the communication apparatus 19011 and the Internet 19000. In addition, the air floating video display apparatus 1000 can communicate with a second server 19002 that differs from the large language model server 19001 via the communication apparatus 19011 and the Internet 19000. A configuration including the air floating video display apparatus 1000 and the large language model server 19001 may be considered as a single system.

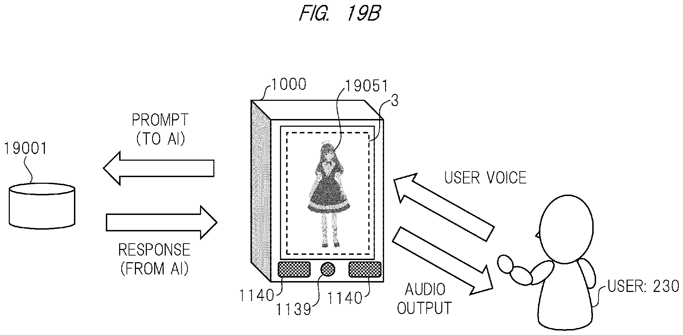

Next, an example of the operation of the character conversation apparatus (air floating video display apparatus 1000) according to the fourth embodiment of the present invention will be described with reference to FIG. 19B. This is also a description of an example of the operation of the character conversation system including the air floating video display apparatus 1000 and the large language model server 19001. Note that the communication paths such as the Internet 19000 shown in FIG. 19A are omitted in FIG. 19B. In FIG. 19B, the user 230 of the air floating video display apparatus 1000 is also shown.

First, the large language model server 19001 is a server having the large language model artificial intelligence. The large language model is also referred to as LLM. Specifically, various models such as GPT-1, GPT-2, GPT-3, InstructGPT, and ChatGPT have been made available. These techniques may also be used in the present embodiment. Note that these large language models are artificial intelligence models generated through large-scale pre-training on natural language contained in numerous documents and texts existing in the human world. The number of parameters in these artificial intelligence models exceeds one billion. Further, there are models that have been enhanced with reinforcement learning based on human feedback. An example of a model based on this includes a model called a transformer. An example of learning of these models can be found in, for example, Reference 1.

[Reference 1]

Long Ouyang, et. al. "Training language models to follow instructions with human feedback", https://arxiv.org/pdf/2203.02155.pdf

These large language models are capable of performing natural language translation, natural language proofreading, natural language summarization, and the like. Among these, advanced models are capable of responding in natural language (also called dialogue or conversation), generating suggestions in natural language, generating programming code, and the like. The number of parameters in these artificial intelligence models is extremely large, requiring vast amounts of data and computational resources for training. Therefore, training artificial intelligence at this level for a specific use is extremely inefficient in terms of resources. Thus, performing large-scale training to generate a model as a foundation model that can be applied to various uses and utilizing various terminals via an API (Application Programming Interface) is efficient in terms of resources.

Here, a series of operations of the air floating video display apparatus 1000 will be described. Note that the air floating video display apparatus 1000 loads a character operation program stored in the storage 1170 or the like to the memory 1109, and the controller 110 executes the character operation program such that it is possible to realize various types of processing described below.

First, the air floating video display apparatus 1000 comprises the microphone 1139. When the user 230 speaks to the character 19051, the user's voice (words spoken by the user) is captured by the microphone 1139 and is converted into an audio signal. Here, the character operation program executed by the controller 110 extracts the text of the words spoken by the user 230 from the audio signal. The text is natural language. Note that the extraction of the text of the words spoken by the user 230 may be continued for all words, or may be started after a trigger keyword is input and when words are spoken by the user within a predetermined period. For example, the trigger keyword may be a case where the user says "Hello" followed with the character's name. For example, if the name of the character 19051 is "Koto", the trigger keyword may be "Hello, Koto!".

Based on the text of the words spoken by the user 230, the character operation program of the air floating video display apparatus 1000 creates a prompt and sends the prompt to the large language model server 19001 using the API. Here, the prompt may be metadata in which information is stored with tags in format including markup language or JSON. Natural language text information is stored in the prompt as the main message. Types of prompts sent from the air floating video display apparatus 1000 to the large language model server 19001 include a setting prompt for storing instructions such as initial settings and a user prompt that reflects the instruction from the user. p Type identification information that identifies whether the prompt is the setting prompt or the user prompt may be stored in a portion of the prompt other than its main message. When the character operation program of the air floating video display apparatus 1000 creates the prompt based on the text of the words spoken by the user 230, the user prompt is created and sent to the large language model server 19001.

Next, based on the prompt sent from the air floating video display apparatus 1000, the large language model which is artificial intelligence of the large language model server 19001 executes inference and generates a response including the natural language text information based on the inference result. The large language model server 19001 sends the response to the air floating video display apparatus 1000 using the API. Natural language text information is stored in the response as the main message. Here, the response may be metadata in which information is stored with tags in format including markup language or JSON which is the same format as the above-described prompt. In a case where the same format as the above-described prompt is used in the response, type identification information indicating that the above-described initial setting prompt and the user prompt are different types of information may be stored in a portion other than the main message. For example, information indicating that a response phrase is from the large language model may be stored.

Next, the air floating video display apparatus 1000 receives the response from the large language model server 19001, and extracts the natural language text information stored as the main message of the response. Based on the natural language text information extracted from the above-described response, the character operation program of the air floating video display apparatus 1000 generates natural language audio that serves as a response to the user using an audio synthesis technique, and outputs it from the audio output unit 1140 which is the speaker, so that it sounds as if it is the voice of the character 19051. This processing may be referred to as a "speech" of the character.

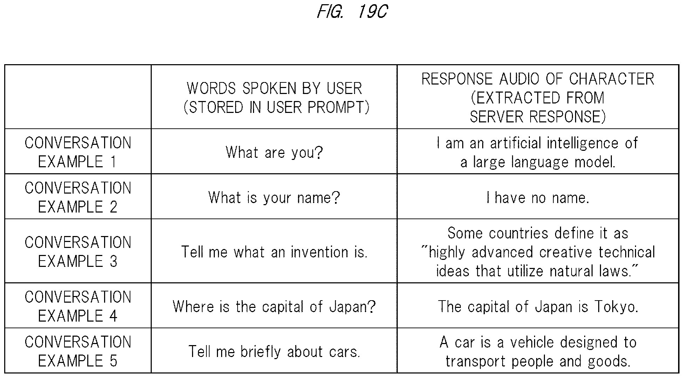

As described above, the processing of the air floating video display apparatus 1000 and the large language model server 19001 provides specific examples of response audio of the character 19051 for the words from the user 230, as shown in conversation examples 1 to 5 of FIG. 19C. As a result, the user 230 can hold a conversation with the character 19051 as if it is a real person.

According to the air floating video display apparatus 1000 or the system including the air floating video display apparatus 1000 described above with reference to FIG. 19B, there is no need to install the large language model, which requires vast amounts of data and computational resources for learning, in the air floating video display apparatus 1000 itself. Moreover, it is possible to utilize advanced natural language processing capabilities of the large language model via the API, and thus, when the user speaks to the character, it is possible to respond to the user and have a conversation with the user more suitably.

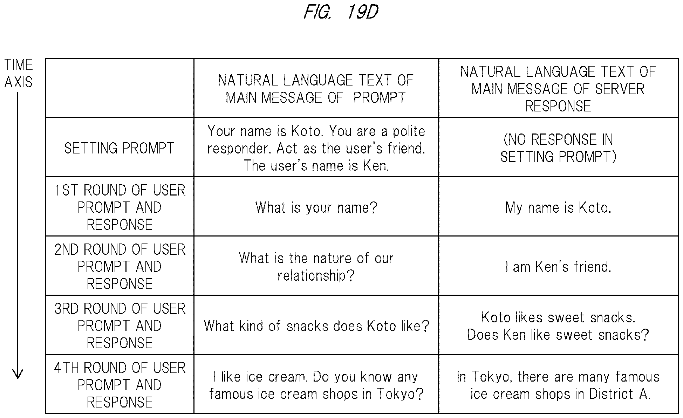

Next, an example of the operation of the character conversation apparatus (air floating video display apparatus 1000) according to the fourth embodiment of the present invention will be described with reference to FIG. 19D. This is also a description of an example of the operation of the character conversation system including the air floating video display apparatus 1000 and the large language model server 19001. Specifically, FIG. 19D shows examples of the natural language text of the main message of the prompt sent from the air floating video display apparatus 1000 to the large language model server 19001 and the natural language text of the main message of the server response which is the response to the prompt. This becomes the basis of the conversation between the user 230 and the character 19051 displayed on the air floating video display apparatus 1000.

In addition, FIG. 19D shows the setting prompt for the display and exchange of prompts and responses in chronological order from the first round of the user prompt to the fourth round of the user prompt and corresponding responses.

As shown in FIG. 19D, the setting prompt can be used to instruct the large language model which is artificial intelligence of the large language model server 19001 to set initial settings such as the name of the large language model itself, the role it should play, and characteristics of the conversation. In addition, the user's name can be understood as an initial setting. As a result, the large language model generates the first and subsequent rounds of responses while adhering to its role. The user who hears the audio of the character 19051 based on the first and subsequent rounds of responses can then feel as if the character 19051 has the character's settings and personality as described in the setting prompt. In addition, the large language model server 19001 according to the present embodiment comprises a memory that stores contents of the conversation until the end of a series of conversations, and is configured to store a series of user prompts and their responses and to generate responses. As a result, a conversation as shown in FIG. 19D can be realized.

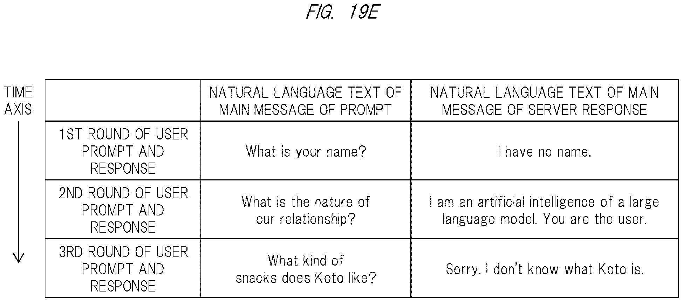

Next, an example of the operation of the character conversation apparatus (air floating video display apparatus 1000) according to the fourth embodiment of the present invention will be described with reference to FIG. 19E. This is also a description of an example of the operation of the character conversation system including the air floating video display apparatus 1000 and the large language model server 19001. Specifically, FIG. 19E shows examples of the natural language text of the main message of the prompt sent from the air floating video display apparatus 1000 to the large language model server 19001 and the natural language text of the main message of the server response which is the response to the prompt. This becomes the basis of the conversation between the user 230 and the character 19051 displayed on the air floating video display apparatus 1000.

FIG. 19E shows an example of a new conversation in which the user 230 speaks to the character 19051 again after the continuation of a series of conversations shown in FIG. 19D has ended. In FIG. 19E, the first round of user prompt and its response to the third round of user prompt and its response are shown as an exchange of prompts and responses in chronological order.

Here, the "end" of the "continuation of a series of conversations" refers to a processing in which, if predetermined conditions are met, the large language model server 19001 deletes the conversation memory that had been maintained while a series of conversations was ongoing from the large language model server 19001. An example of the predetermined conditions includes a case where the air floating video display apparatus 1000 instructs the large language model server 19001 to "end" the "continuation of a series of conversations" via a prompt. In addition, another example of the predetermined conditions includes a case where no prompt regarding a series of conversations is sent from the air floating video display apparatus 1000 to the large language model server 19001 for a predetermined time or longer (timeout). In addition, another example includes a case where, in the connection between the air floating video display apparatus 1000 and the large language model server 19001, after an authentication processing is performed and when the above-described exchange of prompts and responses is being performed, the authentication processing is interrupted due to factors such as communication disconnection or power OFF of the air floating video display apparatus 1000.

Note that when the "end" of the "continuation of a series of conversations" occurs, the large language model server 19001 deletes the conversation memory that had been maintained while a series of conversations was ongoing from the large language model server 19001. Therefore, even if the conversation shown in FIG. 19E occurs after a series of conversations shown in FIG. 19D, the server response for the user prompt is a response that does not contain contents such as the name of the large language model itself, the role it should play, the conversation characteristics, or the user's name in the setting prompt shown in FIG. 19D. Likewise, the conversation shown in FIG. 19E is a response that does not contain any memory of a series of conversations shown in FIG. 19D. Namely, the "end" of the "continuation of a series of conversations" shown in FIG. 19D causes the conversation of FIG. 19E to start from a state in which the large language model which is artificial intelligence of the large language model server 19001 has been initialized.

This makes the user 230 feel as if the character 19051 has lost its memory of the user or as if the user is dealing with a completely different person. From the perspective of the user 230, the character's response may feel very uncomfortable, leaving the user feeling lonely and disappointed. In such an operation, this posed a challenge on ensuring consistency in the name, role, conversation characteristics, personality and other settings and memories of the character 19051 displayed on the air floating video display apparatus 1000.

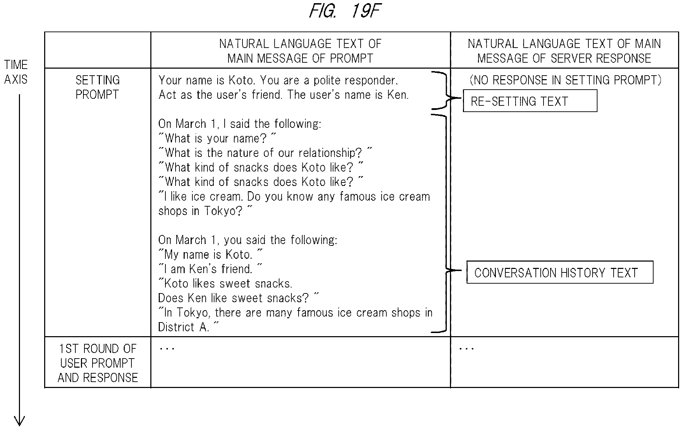

Next, an example of the operation of the character conversation apparatus (air floating video display apparatus 1000) according to the fourth embodiment of the present invention will be described with reference to FIG. 19F. This is also a description of an example of the operation of the character conversation system including the air floating video display apparatus 1000 and the large language model server 19001. Specifically, FIG. 19F shows examples of the natural language text of the main message of the prompt sent from the air floating video display apparatus 1000 to the large language model server 19001 and the natural language text the main message of the server response which is the response to the prompt. This becomes the basis of the conversation between the user 230 and the character 19051 displayed on the air floating video display apparatus 1000.

FIG. 19F shows an example of a new conversation in which the user 230 speaks to the character 19051 again after continuation of a series of conversations shown in FIG. 19D has ended. Unlike the processing of FIG. 19E, in the processing of FIG. 19F, when a new conversation is started, the air floating video display apparatus 1000 sends the setting prompt as the first prompt to the large language model server 19001. The setting prompt stores the same natural language text as the setting prompt of the initial settings of FIG. 19D. This may also be referred to as a re-setting text. The setting prompt also stores the natural language text that describes the history of past conversations. This may also be referred to as conversation history text. The history of past conversations may be recorded by the air floating video display apparatus 1000 in the storage 1170 as the natural language text information linked with information regarding the date and time of the conversation while the continuation of a series of conversations described with reference to FIG. 19D is ongoing. In a case where there are conversations at different dates, the information including date and time is linked to the respective conversation and recorded, and the conversation history is accumulated. When generating the setting prompt of the first prompt for the conversation that takes place at a later date as shown in FIG. 19F, the natural language text information of the conversation recorded in the storage 1170 and the information including the date and time the conversation took place may be read and used to generate the setting prompt.

Note that, in a case where the natural language text information of the history of past conversations is used to generate the setting prompt, the format can be determined fairly freely as it is data being sent to the large language model. However, as shown in FIG. 19F, it is preferable to prepare prefixes or suffixes in the natural language such as "On [Date], I said the following:" or "On [Date], you said the following:", fuse them with the natural language text information of the recorded conversation, and perform processing to generate the text of the setting prompt. In addition, information including the date and time of the conversation read from the storage 1170 may be fused with the above-described "[Date]" portion and be used as a part of the text of the setting prompt.

After the continuation of a series of conversations has ended, even if the user 230 speaks to the character 19051 and starts a new conversation, performing the generation processing and the transmission processing of the setting prompt described above with reference to FIG. 19F will ensure that the subsequent response to the user prompt reflects the settings from the prior conversation such as the character's role, name, conversation characteristics, personality, and/or conversation characteristics and the conversation history. As a result, from the perspective of the user, the consistency of the settings such as the character's role, name, conversation characteristics, or personality and memory from the prior conversation is better ensured, making it more suitable.

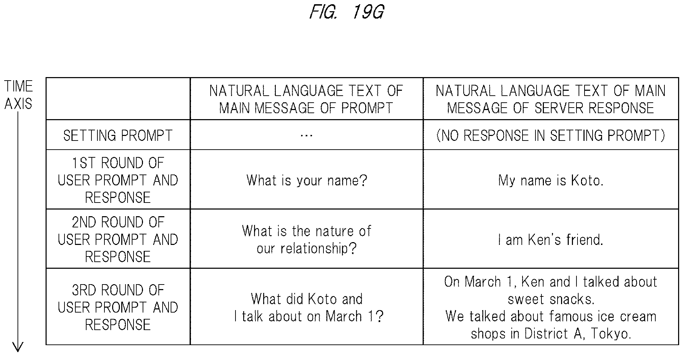

Next, an example of the operation of the character conversation apparatus (air floating video display apparatus 1000) according to the fourth embodiment of the present invention will be described with reference to FIG. 19G. This is also a description of an example of the operation of the character conversation system including the air floating video display apparatus 1000 and the large language model server 19001. Specifically, FIG. 19G shows examples of the natural language text of the main message of the prompt sent from the air floating video display apparatus 1000 to the large language model server 19001 and the natural language text of the main message of the server response which is the response to the prompt. This becomes the basis of the conversation between the user 230 and the character 19051 displayed on the air floating video display apparatus 1000.

FIG. 19G shows an example of a series of conversations shown in FIG. 19F, from the first round of user prompt following the first setting prompt and its response to the third round of user prompt and its response. In FIG. 19G, the exchange of prompts and responses is shown in chronological order. Contents of the setting prompt are the same as those shown in FIG. 19F, and thus, redundant descriptions thereof will be omitted.

As shown in the natural language text of the server response in the table of FIG. 19F, using the setting prompt shown in FIG. 19F allows the server response generated by the artificial intelligence of the large language model of the large language model server 19001 to reflect the settings such as the character's role, name, conversation characteristics, or personality and the conversation history from the prior conversation. As a result, from the perspective of the user, the consistency of the settings such as the character's role, name, conversation characteristics, or personality from the prior conversation and the memory is better ensured, making it more suitable. Note that, since it allows the user to perceive the characters as the same, this may also be referred to as pseudo-consistency of the character as seen by the user.

In addition, from the perspective of the user, the user can share memories with the character, achieving a more enjoyable character conversation experience.

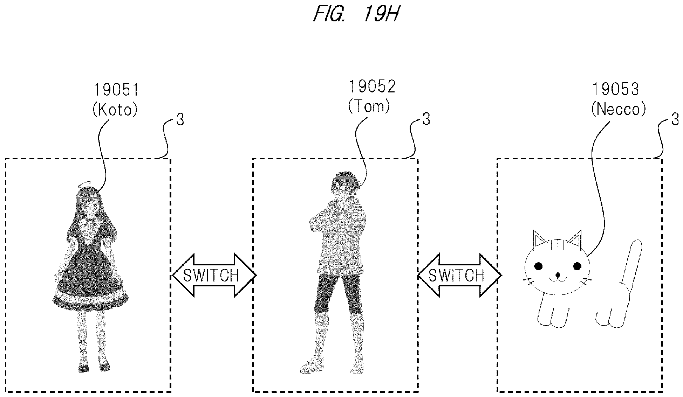

Next, an example of the operation of the character conversation apparatus (air floating video display apparatus 1000) according to the fourth embodiment of the present invention will be described with reference to FIG. 19H. This is also a description of an example of the operation of the character conversation system including the air floating video display apparatus 1000 and the large language model server 19001. Specifically, FIG. 19H shows an operation example in which the character displayed as the air floating video 3 of the air floating video display apparatus 1000 is switched to one of a plurality of character candidates. The character operation program executed by the controller 110 of the air floating video display apparatus 1000 may switch the displayed character based on, for example, the operation input that is input to the operation input unit 1107 or the operation detected by the aerial operation detector 1350.

In the example of FIG. 19H, in addition to the character 19051 (named "Koto") described with reference to FIG. 19A to FIG. 19G, a character 19052 (named "Tom") and a character 19053 (named "Necco") are shown. The character 19051 (named "Koto") and the character 19052 (named "Tom") are human-like characters, while the character 19053 (named "Necco") is a cat-like character. The display of the character displayed as the air floating video 3 can be switched by rendering the characters in different virtual 3D spaces and displaying the generated video on the display apparatus 1. For the processing for realizing the display of the rendered video of the 3D model of each character, any of, for example, the first to third processing examples described with reference to FIG. 15A may be performed. In addition, a 2D image that moves dynamically can be displayed depending on the character.

In addition, it is suitable for the character operation program executed by the controller 110 to change a synthesized audio used for each character's "speech" when switching the display of the character to be displayed as the air floating video 3. This may be achieved by storing the data of the synthesized audio of the voice associated with the character in the storage 1170 beforehand and performing synthesized audio change processing when switching the display of the character.

Note that, in the example of FIG. 19H, the apparatus is configured such that the user 230 can converse with any of the characters. In the air floating video display apparatus 1000 of FIG. 19H, each of these characters is assigned different roles, names, conversation characteristics, or personalities. In addition, the memory of each character based on the conversation history is managed separately for each character.

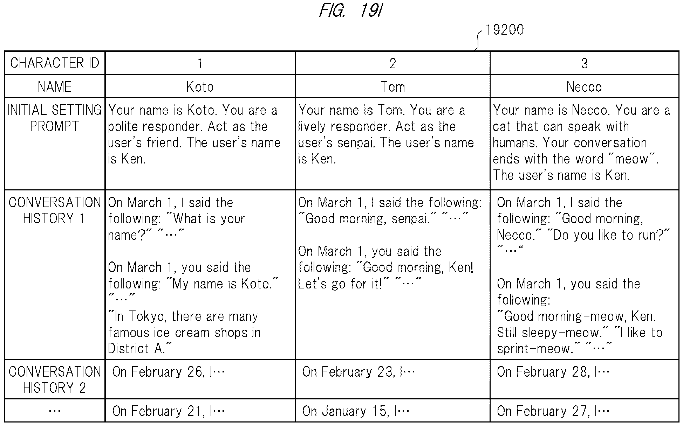

Thus, the air floating video display apparatus 1000 constructs a database shown in FIG. 19I in the storage 1170 and manages the character settings and the conversation history of the character using the database.

Next, an example of the operation of the character conversation apparatus (air floating video display apparatus 1000) according to the fourth embodiment of the present invention will be described with reference to FIG. 19I. This is also a description of an example of the operation of the character conversation system including the air floating video display apparatus 1000 and the large language model server 19001. Specifically, FIG. 19I is an explanatory diagram of a database 19200 for managing the character settings and the conversation history of the characters regarding the plurality of characters to be displayed as the air floating video 3 of the air floating video display apparatus 1000.

The character operation program executed by the controller 110 of the air floating video display apparatus 1000 constructs, for example, the database 19200 in the storage 1170. A character ID is an identification number that identifies a respective character among the plurality of characters that can be displayed on the air floating video display apparatus 1000, and may be a natural number or may use alphabetic characters or the like. The name is data of name of the respective character among the plurality of characters that can be displayed on the air floating video display apparatus 1000.

The initial setting prompt is the natural language text information that describes the settings such as the character's role, name, conversation characteristics, or personality of the respective character among the plurality of characters that can be displayed on the air floating video display apparatus 1000. The initial setting prompt is the natural language text information which is the main data of the setting prompt sent from the air floating video display apparatus 1000 to the large language model server 19001, and thus, it is desirable that the content be written in a format that can be read by the large language model which is artificial intelligence of the large language model server 19001.

The conversation histories that include conversation histories 1, 2, and so on are records of conversations between each of the characters and the user, and are recorded separately for each character. The conversation history is included in the natural language text information which is the main data of the setting prompt sent from the air floating video display apparatus 1000 to the large language model server 19001, and thus, it is desirable that the content be formatted to be readable by the large language model which is artificial intelligence of the large language model server 19001.

In a case where the character to be displayed as the air floating video 3 of the air floating video display apparatus 1000 is switched, the character operation program executed by the controller 110 of the air floating video display apparatus 1000 uses the database 19200 of FIG. 19I to select and switch the initial setting prompt and conversation history to be used for the natural language text information which is the main data of the setting prompt sent from the air floating video display apparatus 1000 to the large language model server 19001 so as to correspond to the character displayed as the air floating video 3 of the air floating video display apparatus 1000. In addition, the character operation program records the conversation history in a conversation history area corresponding to the character displayed as the air floating video 3 in the database 19200 of FIG. 19I each time a conversation takes place between the user 230 and the character.

The character operation program executed by the controller 110 of the air floating video display apparatus 1000 uses the database 19200 as described above to use the speech of the character to utilize the response of the large language model of the same artificial intelligence of the same large language model server 19001 to enable the conversation between the user 230 and the character while, from the perspective of the user, maintaining the uniqueness of the setting of each character such as the personality of the character, thereby allowing the user to feel as if each character retains distinct conversation memories. From the perspective of the user, the consistency of the settings such as the character's role, name, conversation characteristics, or personality and memories from the prior conversations for each character is more effectively ensured, making it more suitable. This may also be expressed as ensuring the pseudo-consistency of each character from the user's perspective.

Therefore, even in a case where the air floating video display apparatus 1000 is configured to switch to and display a character among the plurality of character candidates as the air floating video 3, according to the operation using the above-described database 19200, from the perspective of the user, the user would feel less uncomfortable during the conversation with each character and would be able to share memories with each of the plurality of characters to achieve a more enjoyable character conversation experience.

Note that, by preventing the user from editing the initial setting prompts of the plurality of characters, each of the settings such as the character's role, name, conversation characteristics, or personality can be maintained in a state that is close to the intentions of the provider of the air floating video display apparatus 1000 or the creator of the character content. Alternatively, the user may be allowed to edit the initial setting prompt of the character depending on the input by the operation input unit 1107 or the like. In this case, it is possible for the user to customize the settings such as the character's role, name, conversation characteristics, or personality, allowing the user to converse with the character set to his or her preferences. In this case, the 3D model of the character, its rendered video, and the type of synthesized audio used for the character may be replaced accordingly.

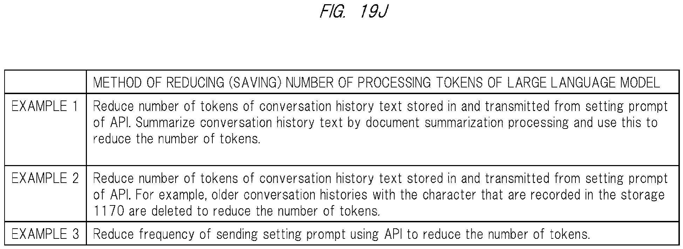

Next, an example of the operation of the character conversation apparatus (air floating video display apparatus 1000) according to the fourth embodiment of the present invention will be described with reference to FIG. 19J. This is also a description of an example of the operation of the character conversation system including the air floating video display apparatus 1000 and the large language model server 19001. Specifically, a method providing a less costly character conversation apparatus according to the air floating video display apparatus 1000 and a character conversation service by the character conversation system including the air floating video display apparatus 1000 and the large language model server 19001 will be described.

As described with reference to FIG. 19B, training the artificial intelligence at this level for a specific use limited to the large language model is extremely inefficient in terms of resources. Thus, as a foundation model that can be applied to various uses, it is efficient in terms of resources to generate a model that has been through large-scale training and utilize various terminals via the API (Application Programming Interface). Then, the provider of the large language model often recovers the costs incurred in the training of the large language model from the user of the terminal as API usage fees. At this time, in the natural language model, the API usage fees are often charged based on the number of tokens which is the processing amount of word units that make up a sentence.

Thus, in the air floating video display apparatus 1000 according to the fourth embodiment of the present invention, by reducing the number of tokens in the natural language text information transmitted between the air floating video display apparatus 1000 and the large language model server 19001 using the API, a less costly character conversation apparatus according to the air floating video display apparatus 1000 and a less costly character conversation service by the character conversation system including the air floating video display apparatus 1000 and the large language model server 19001 can be provided to the user.

For example, using the processing and configuration shown in Examples 1 to 3 in FIG. 19J makes it possible to technically reduce the number of tokens in the natural language text information transmitted between the air floating video display apparatus 1000 and the large language model server 19001 using the API.

Example 1 is an example of a method for reducing the number of tokens in the conversation history text stored in and transmitted from the setting prompt of the API, using a document summarization processing to shorten the conversation history text and reduce the number of tokens. For example, the natural language of the conversation history with the character recorded in the storage 1170 is summarized and recorded. Sentence summarization may be performed at the start of the next conversation, but is preferable to be performed at the end of the "series of conversations" to allow for more time.

In addition, the sentence summarization processing may be performed by requesting summarization directly from the large language model of the large language model server 19001. However, in this case, savings effect of the number of tokens is low. Therefore, for example, in the second server 19002, in a case where the sentence summarization processing of the natural language via the API is less costly than the large language model of the large language model server 19001, the sentence summarization processing may be requested to the second server 19002 via the API such that the sentence summarization of the conversation history may be stored in and transmitted from the setting prompt for the large language model server 19001.

In addition, if it is required to perform only the sentence summarization processing, it can be performed on the device side, and the sentence summarization may be performed by having the controller 110 execute a document summarization program stored in the memory 1109 of the air floating video display apparatus 1000. In this case, the savings effect of the number of tokens is high. In addition, even if the conversation history becomes long, specifying an upper limit on the number of words after summarization in the sentence summarization processing makes it possible to determine the upper limit of a sentence length of the conversation history, and thus, it is possible to set an upper limit value of the token to achieve token savings.

Note that the text information of the character initial settings such as the character's role, name, conversation characteristics, or personality does not increase as much as the conversation history, and thus, it is efficient and preferable to maintain the text of the text information of the initial setting prompt of the character and reduce the number of tokens in the text information of the conversation history.

The processing described with reference to Example 1 may be performed by the character operation program executed by the controller 110 controlling each unit.

Example 2 is another example of a method for reducing the number of tokens in the conversation history text stored in and transmitted from the setting prompt of the API. For example, the older conversation histories of the character that are recorded in the storage 1170 are deleted to reduce the number of tokens. Specifying the upper limit on the number of words of the conversation history makes it possible to determine the upper limit of the sentence length of the conversation history, and thus, it is possible to set the upper limit value of the token and achieve token savings. Alternatively, the method may be such that a predetermined period of the conversation history is specified to delete the conversation history outside the period. In this case also, it is possible to achieve token savings. Note that, in Example 2 also, the text information of the character initial settings such as the character's role, name, conversation characteristics, or personality does not increase as much as the conversation history, and thus, it is efficient and preferable to maintain the text of the text information of the initial setting prompt of the character and reduce the number of tokens in the text information of the conversation history.

The processing described with reference to Example 2 may be performed by the character operation program executed by the controller 110 controlling each unit.

Example 3 is an example of a method for reducing the number of tokens by reducing frequency of sending the setting prompt using the API. Specifically, after the apparatus' power is turned on or after the display character is switched, even after the video settings and synthesized audio settings for the displayed character have been completed, if the controller 110 determines that the natural language text information contained in the user's voice captured by the microphone 1139 is text information that should use the large language model which is artificial intelligence without sending the setting prompt beforehand, the setting prompt is initially sent to the large language model server 19001 to reduce the frequency of sending the setting prompt to the large language model server 19001 to reduce the number of tokens.

Specifically, for example, after the apparatus' power is turned on or after the operation input to switch the display character, a display processing of the display apparatus 1 by the control of the character operation program executed by the controller 110 is performed such that the character 19051 (named "Koto") is displayed as the air floating video 3 as shown in FIG. 19H. At this time, for example, if the synthesized audio corresponding to the character 19051 for when the character appears is stored and prepared in the storage 1170 or the like, the synthesized audio for when the character appears such as "Good morning. I'm Koto", "Hello. I'm Koto", "Good evening. I'm Koto" or the like may be output from the speaker which is the audio output unit 1140. At this time, the video of the character 19051 is already set as the video of the character displayed as the air floating video 3, and the synthesized audio output from the speaker which is the audio output unit 1140 is set to the synthesized audio corresponding to the character 19051.

Here, inference processing of the large language model which is the artificial intelligence in the large language model server 19001 described above would take more time as the prompt becomes longer. In particular, in a case where the setting prompt includes the text information related to past conversation history, the amount of tokens of the prompt would increase, and thus, the inference processing time becomes longer. The setting prompt itself and its response are not output to the user 230. In response to the user prompt after the setting prompt, the synthesized audio as the "speech" of the character is output from the speaker which is the audio output unit 1140. Then it would seem to be better to send the setting prompt from the air floating video display apparatus 1000 to the large language model server 19001 beforehand to complete the inference processing of the large language model for the setting prompt beforehand to allow a faster response for the output of the synthesized audio of the "speech" of the character 19051 after the user 230 talks to the character 19051.

However, there may be cases where the setting prompt is sent to the large language model server 19001 and the inference processing of the large language model for the setting prompt is completed before the user 230 speaks, such as a case where the user 230 turns OFF the power of the air floating video display apparatus 1000 by an operation via the operation input unit 1107 or the aerial operation detector 1350, or a case where the user 230 switches the display character from the character 19051 to another character by an operation via the operation input unit 1107 or the aerial operation detector 1350. In these cases, the number of tokens used for the inference processing of the large language model after the setting prompt is sent to the large language model server 19001 would be the number of processing tokens unnecessarily consumed, resulting in wasted usage fees. This poses an obstacle against providing a less costly character conversation apparatus according to the air floating video display apparatus 1000 and a less costly character conversation service by the character conversation system including the air floating video display apparatus 1000 and the large language model server 19001 to the user.

Therefore, after the apparatus' power is turned ON or after the operation input to switch the display character, it is desirable for the air floating video display apparatus 1000 to use controls of the character operation program executed by the controller 110 to set the video of the character 19051 as the video of the character to be displayed as the air floating video 3, and maintain a state where the setting prompt is not sent to the large language model server 19001 until a point at which it is recognized that the user 230 is speaking to the character 19051, even after the synthesized audio to be output from the speaker which is the audio output unit 1140 is set as the synthesized audio corresponding to the character 19051.

Here, the point at which it is recognized that the user 230 is speaking to the character 19051 may refer to, for example, a point at which the trigger keyword described with reference to FIG. 19B is detected, or a point at which extraction of the text of the words spoken by the user 230 is performed. As a result, it possible to reduce the number of processing tokens unnecessarily consumed which results in wasted usage fees, and thus, a less costly character conversation apparatus according to the air floating video display apparatus 1000 and a less costly character conversation service by the character conversation system including the air floating video display apparatus 1000 and the large language model server 19001 can be provided to the user.

In addition, even after the above-described point at which it is recognized that the user 230 is speaking to the character 19051, if the text information extracted from the audio of the user 230 captured by, for example, the microphone 1139 corresponds to a preset keyword that does not require the inference processing of the large language model, it is desirable to maintain the state where the setting prompt is not sent to the large language model server 19001. Specifically, examples of preset keywords include "Jump", "Dance", and other keywords that the user 230 uses to request the character 19051 to perform reactions such as animation or synthesized audio of the character 19051. In this case, the character operation program executed by the controller 110 may read the motion data, animation video, and/or synthesized audio data corresponding to the reactions corresponding to the character 19051 stored in the storage, and may use the data to perform generation processing of the video displayed as the air floating video 3 and output processing of the synthesized audio from the speaker which is the audio output unit 1140.

Such processing does not necessarily require the inference processing of the large language model of the large language model server 19001. For example, after the processing, in the case where the user 230 turns OFF the power of the air floating video display apparatus 1000 by an operation via the operation input unit 1107 or the aerial operation detector 1350, or in the case where the user 230 switches the display character from the character 19051 to another character by an operation via the operation input unit 1107 or the aerial operation detector 1350, if the setting prompt is first sent to the large language model server 19001 and is then processed using the inference processing of the large language model, the number of tokens used for the processing would be the number of processing tokens unnecessarily consumed, resulting in wasted usage fees.

Therefore, even after the above-described point at which it is recognized that the user 230 is speaking to the character 19051, it is desirable that the state where the setting prompt is not sent to the large language model server 19001 is maintained until a point where it is determined whether or not the text information extracted from the audio of the user 230 captured by, for example, the microphone 1139 corresponds to the preset keyword that does not require the inference processing of the large language model. If it is determined that the inference processing of the large language model is necessary, it is desirable to send the setting prompt to the large language model server 19001 for the first time and proceed with the inference processing of the large language model.

Note that the processing described with reference to Example 3 may be performed by the character operation program executed by the controller 110 controlling each unit.

According to the methods for reducing (saving) the number of processing tokens in the large language model described above with reference to the examples in FIG. 19J, a less costly character conversation apparatus according to the air floating video display apparatus 1000 and a less costly character conversation service by the character conversation system including the air floating video display apparatus 1000 and the large language model server 19001 can be provided to the user.

According to the above-described character conversation apparatus or the character conversation system according to the fourth embodiment, the user would feel less uncomfortable during the conversation with the character displayed on the display apparatus. In addition, according to the character conversation apparatus or the character conversation system according to the fourth embodiment, a less costly character conversation service can be provided to the user.

Note that the air floating video display apparatus has been used to describe an example of the character conversation apparatus and an example of the display apparatus according to the character conversation system according to the fourth embodiment. However, with regard to the fourth embodiment, the display apparatus does not necessarily have to be such that displays the air floating video in midair. For example, the display apparatus that displays the video on a physical surface such as a liquid crystal panel, an organic EL panel, a plasma display, a projector that projects the video and displays it by refection on an opaque screen, or a projector that projects the video and displays it by diffusion on a transparent screen may be used. In this case, the portions of the display apparatus that display the videos that are visually recognizable by the user may all be referred to as a display regardless of the various forms of the display screen on which the video is displayed.

In this case also, according to the character conversation apparatus or the character conversation system according to the fourth embodiment, the user would feel less uncomfortable during the conversation with the character displayed on the display apparatus. In addition, according to the character conversation apparatus or the character conversation system according to the fourth embodiment, a less costly character conversation service can be provided to the user.

<Fifth Embodiment>

Next, a fifth embodiment of the present invention is a modified version of the character conversation apparatus (air floating video display apparatus 1000) and the character conversation system according to the fourth embodiment described with reference to the drawings. In the present embodiment, only differences from the fourth embodiment will be described, repetitive descriptions of the same configuration as that of the fourth embodiment will be omitted.

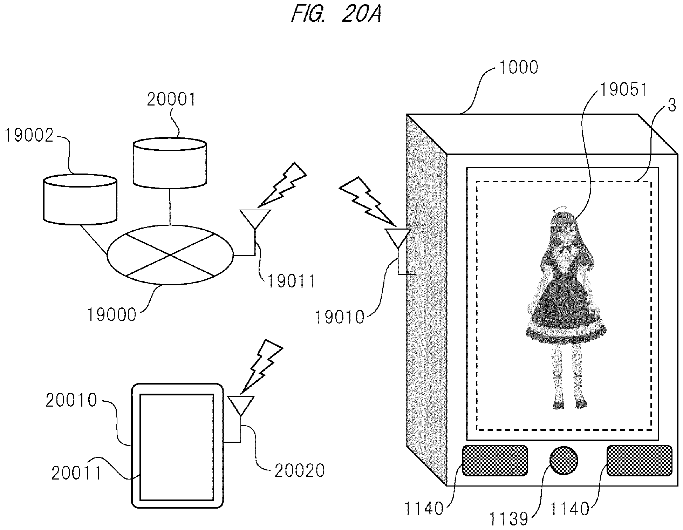

An example of the character conversation apparatus and the character conversation system according to the fifth embodiment of the present invention will be described with reference to FIG. 20A. The character conversation system according to the fifth embodiment comprises a large language model server 20001 instead of the large language model server 19001 of FIG. 19A, and is connected to the Internet 19000.

Here, the large language model server 20001 is a server having the large language model artificial intelligence. However, it is a multimodal large language model that can process not only the natural language text information that could be processed by the large language model server 19001 but also types of information other than the natural language text information. Examples of the multimodal large language model artificial intelligence specifically include GPT-4 (see Reference 2) and Gato (see Reference 3). These techniques may also be used in the present embodiment. Note that these multimodal large language models are artificial intelligence models generated through large-scale pre-training on natural language contained in numerous documents and texts existing in the human world and types of information other than the natural language text information (such as image, video, audio). Further, there are models that have been enhanced with reinforcement learning based on human feedback. Hereinafter, types of information other than the natural language text information such as image, video, and audio may also be referred to as a non-natural language information source.

[Reference 2]

Open AI "GPT-4 Technical Report", https://cdn.openai.com/papers/gpt-4.pdf

[Reference 3]

Scott Reed, et. al. "A Generalist Agent", https://arxiv.org/pdf/2205.06175.pdf

Here, the air floating video display apparatus 1000 which is the character conversation apparatus will be described as having the same configuration as the character conversation apparatus (air floating video display apparatus 1000) according to the fourth embodiment as an example.

In the fifth embodiment also, the air floating video display apparatus 1000 which is the character conversation apparatus can communicate with the large language model of the large language model server 20001 via the Internet 19000 using the API.

The character conversation system according to the fifth embodiment includes a mobile information processing terminal 20010 to be used by the user 230. The mobile information processing terminal 20010 is a so-called smartphone or a tablet information processing terminal.

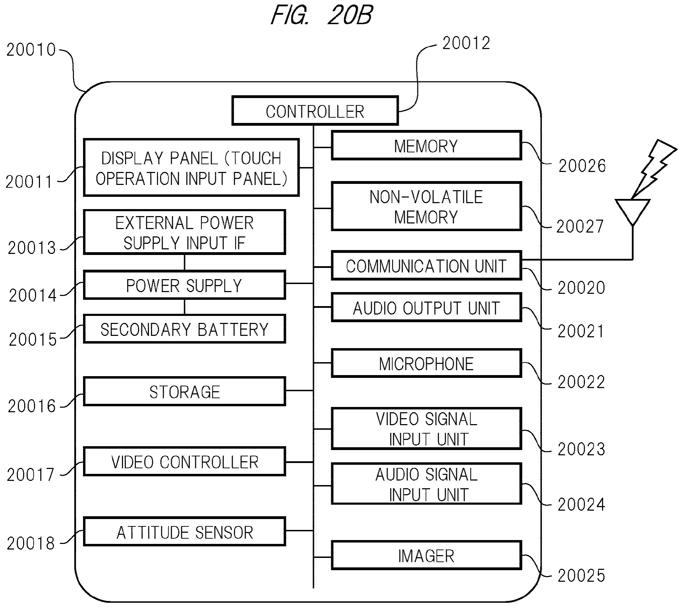

Here, an example of the mobile information processing terminal 20010 will be described with reference to FIG. 20B. The mobile information processing terminal 20010 comprises a display panel 20011 which is a touch operation input panel, a controller 20012, an external power supply input interface 20013, a power supply 20014, a secondary battery 20015, a storage 20016, a video controller 20017, an attitude sensor 20018, a communication unit 20020, an audio output unit 20021, a microphone 20022, a video signal input unit 20023, an audio signal input unit 20024, an imager 20025, and the like.

The display panel 20011 comprises the touch operation input sensor, and can receive the touch operation input by a finger of the user 230. The display panel 20011 performs displaying with a liquid crystal panel or an organic EL panel and can display a video. The display panel 20011 may also be referred to as a display.

The communication unit 20020 may be configured with a Wi-Fi communication interface, a Bluetooth communication interface, a mobile communication interface such as 4G or 5G, or the like. These communication methods are used such that the communication unit 20020 of the mobile information processing terminal 20010 can communicate with the communication unit 1132 of the character conversation apparatus (air floating video display apparatus 1000). The mobile information processing terminal 20010 comprises a controller such as a CPU and a memory, and the controller controls the display panel 20011, the communication unit 20020, and the like. In addition, the communication unit 20020 can communicate with the communication apparatus 19011 connected to the Internet 19000 by using any of the communication methods of the communication unit 20020. As a result, the mobile information processing terminal 20010 can communicate with various servers connected to the Internet 19000.

The power supply 20014 converts AC current input from an external component via the external power supply input interface 20013 into DC current and supplies the necessary DC current to each unit of the mobile information processing terminal 20010. The secondary battery 20015 stores the power supplied from the power supply 20014. In addition, the secondary battery 20015 supplies power to each unit that requires power in a case where power is not supplied from the external component via the external power supply input interface 20013.

The video signal input unit 20023 connects to an external video output apparatus to input video data. The video signal input unit 20023 may be configured with various digital video input interfaces. For example, it may be configured with an HDMI (registered trademark) (High-Definition Multimedia Interface) compliant video input interface, a DVI (Digital Visual Interface) compliant video input interface, a DisplayPort compliant video input interface, or the like. Alternatively, an analog video input interface such as an analog RGB or a composite video may be provided. The video signal input unit 20023 may also be various USB interfaces and the like.

The audio signal input unit 20024 connects to an external audio output apparatus to input audio data. The audio signal input unit 20024 may be configured with an HDMI compliant audio input interface, an optical digital terminal interface, a coaxial digital terminal interface, or the like. The audio signal input unit 20024 may also be various USB interfaces and the like. In the case of the HDMI compliant interface, the video signal input unit 20023 and the audio signal input unit 20024 may be configured as an interface with an integrated terminal and cable.

The audio output unit 20021 can output audio based on audio data input to the audio signal input unit 20024. The audio output unit 20021 can also output audio based on audio data stored in the storage 20016. The audio output unit 20021 may be configured with a speaker. In addition, the audio output unit 20021 may output a built-in operation sound or an error warning sound. Alternatively, the audio output unit 20021 may be configured to output an audio signal as a digital signal to an external device in accordance with an audio return channel function defined in the HDMI standard.

The microphone 20022 captures sound in the vicinity of the mobile information processing terminal 20010 and converts it into a signal to generate an audio signal. The microphone may record a human voice such as the user's voice, and the controller 20012 described below may perform audio recognition processing on the generated audio signal to acquire text information from the audio signal.

The imager 20025 is a camera having an image sensor. The camera may be provided on a front surface side or a rear surface side of the display panel 20011 of the mobile information processing terminal 20010. Cameras may be provided on both the front surface and the rear surface. In the present embodiment, the imager 20025 is described as having cameras on both the front surface and the rear surface.

The storage 20016 is a storage apparatus that records various kinds of information of various kinds of data such as video data, image data, and audio data. The storage 20016 may be configured with a magnetic recording media apparatus such as a hard disk drive (HDD) or a semiconductor device memory such as a solid-state drive (SSD). For example, the storage 20016 may record various kinds of information of various kinds of data such as video data, image data, and audio data prior to product shipment. In addition, the storage 20016 may record various kinds of information of various kinds of data such as video data, image data, and audio data acquired from an external device, an external server, or the like via the communication unit 20020. Video data, image data, and the like recorded in the storage 20016 is output to the display panel 20011. Video data, image data, and the like recorded in the storage 20016 may be output to an external device, an external server, or the like via the communication unit 20020.

The video controller 20017 performs various controls regarding video signals input to the display panel 20011. The video controller 20017 may also be referred to as a video processing circuit, and may be configured with, for example, hardware such as an ASIC, an FPGA, or a video processor. Note that the video controller 20017 may also be referred to as a video processor or an image processor. The video controller 20017 performs video switching controls such as determining which video signal to input to the display panel 20011 from among the video signals stored in a memory 20026 and the video signals (video data) input to the video signal input unit 20023. In addition, the video controller 20017 may perform image processing controls on the video signal input from the video signal input unit 20023, the video signal stored in the memory 20026, and the like. Image processing includes, for example, scaling processing such as enlarging, reducing, or transforming the image, brightness adjustment processing for changing brightness of the image, contrast adjustment processing for changing the contrast curve of the image, and retinex processing such as decomposing the image into a light component and changing the weighting of each component.

The attitude sensor 20018 is constituted by a gravity sensor or an acceleration sensor or a combination thereof, and can detect an attitude of the mobile information processing terminal 20010. The controller 20012 may control the operation of each connected unit based on an attitude detection result of the attitude sensor 20018.

A non-volatile memory 20027 stores various kinds of data used for the mobile information processing terminal 20010. The data stored in the non-volatile memory 20027 includes, for example, data for various operations displayed on the display panel 20011 of the mobile information processing terminal 20010, a display icon, data for an object operated by the user for operation, layout information, and the like. The memory 20026 stores the video data to be displayed on the display panel 20011, data for controlling the apparatus, and the like. The controller 20012 may read various software from the storage 20016 and load and store it in the memory 20026.

The controller 20012 controls the operation of each connected unit. In addition, the controller 20012 may cooperate with a program stored in the memory 20026 and perform an arithmetic operation based on information acquired from each unit in the mobile information processing terminal 20010.

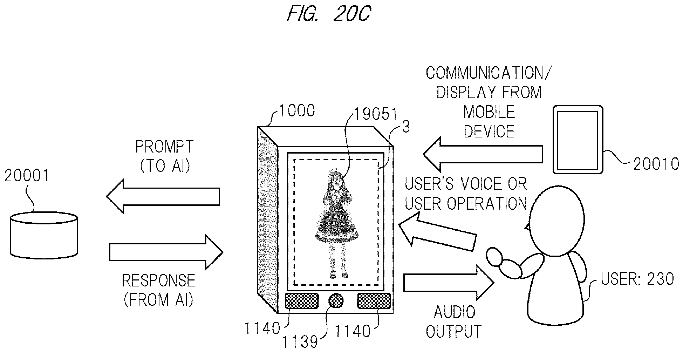

Next, an example of the operation of the character conversation apparatus (air floating video display apparatus 1000) according to the fifth embodiment of the present invention will be described with reference to FIG. 20C. This is also a description of an example of the operation of the character conversation system including the air floating video display apparatus 1000 and the large language model server 20001. In the fifth embodiment also, the character conversation apparatus (air floating video display apparatus 1000) loads the character operation program stored in the storage 1170 or the like to the memory 1109, and the controller 110 executes the character operation program such that it is possible to achieve various kinds of processing described below.

In the fourth embodiment, actions performed by the user 230 for the character conversation apparatus (air floating video display apparatus 1000) were mainly prompts by the voice of the user 230. In the character conversation apparatus (air floating video display apparatus 1000) according to the fourth embodiment, the series of operations were performed starting from the process of capturing the voice of the user 230 with the microphone. In contrast, in the character conversation apparatus (air floating video display apparatus 1000) according to the fifth embodiment, the character conversation apparatus (air floating video display apparatus 1000) performing the series of operations starting from the process of capturing the voice of the user 230 with the microphone described in the fourth embodiment can be executed. In addition, in the character conversation apparatus (air floating video display apparatus 1000) according to the fifth embodiment, the user 230 can perform actions for the character conversation apparatus (air floating video display apparatus 1000) by the user operation via the operation input unit 1107 of FIG. 3. Here, an example of the operation input unit 1107 of FIG. 3 includes a mouse, a keyboard, a touch panel, or the like.

In addition, in the character conversation apparatus (air floating video display apparatus 1000) according to the fifth embodiment, the user 230 can perform an action for the character conversation apparatus (air floating video display apparatus 1000) by the aerial operation of the user detectable by the aerial operation detection sensor 1351 and the aerial operation detector 1350 of FIG. 3. In addition, the user 230 can operate the mobile information processing terminal 20010 to perform communication with the character conversation apparatus (air floating video display apparatus 1000) from the mobile information processing terminal 20010 to allow the operation input of the user 230 to be input to the character conversation apparatus (air floating video display apparatus 1000).

In addition, the display panel 20011 of the mobile information processing terminal 20010 may display an information storage image such as a two-dimensional code in which information that the user wishes to transmit to the character conversation apparatus (air floating video display apparatus 1000) is stored, and the imager 1180 of the character conversation apparatus (air floating video display apparatus 1000) of FIG. 3 may capture the display image. The controller 1110 of the character conversation apparatus (air floating video display apparatus 1000) may extract the information from the information storage image such as the two-dimensional code captured by the imager 1180 to retrieve the information. In addition, the display panel 20011 of the mobile information processing terminal 20010 may display the image that the user wishes to transmit to the character conversation apparatus (air floating video display apparatus 1000), and the imager 1180 of the character conversation apparatus (air floating video display apparatus 1000) of FIG. 3 may capture the display image. The controller 1110 of the character conversation apparatus (air floating video display apparatus 1000) may perform image recognition processing on the image captured by the imager 1180 to acquire a result of the image recognition processing.

As a result, the character conversation apparatus (air floating video display apparatus 1000) according to the fifth embodiment has more types of actions that can be performed by the user 230 on the character conversation apparatus (air floating video display apparatus 1000) than the character conversation apparatus (air floating video display apparatus 1000) described with reference to the fourth embodiment. As a result, the character conversation apparatus (air floating video display apparatus 1000) according to the fifth embodiment can acquire the result of action performed by the user 230 other than the user's voice, and generate the prompt to be sent to the large language model server 20001 based on the result. As a result, the prompt to be sent to the large language model server 20001 can suitably contain information of types other than the natural language text information extracted from the user's voice. Information of types other than the natural language text information extracted from the user's voice includes, for example, an image, video, audio, or the like.

Next, the character conversation apparatus (air floating video display apparatus 1000) according to the present embodiment sends the prompt to the large language model server 20001 using the API. In the present embodiment also, the prompt may be metadata in which information using tags such as format including a markup language or JSON is stored. In the present embodiment also, types of prompts include a setting prompt for storing instructions such as initial settings and a user prompt that reflects the instruction from the user. Type identification information that identifies whether the prompt is the setting prompt or the user prompt may be stored in a portion of the prompt other than its main message. At this time, the prompt contains the natural language text information as the main message. Further, in the present embodiment, it is possible to include the natural language text information and the non-natural language information source such as the image, video, or audio as information of the type other than the natural language text information in the main message of the prompt. The specific method for including the non-natural language information source in the prompt will be described below.

The large language model server 20001 according to the present embodiment has the multimodal large language model that can process the natural language text information and the non-natural language information source. The large language model server 20001 receives the prompt from the character conversation apparatus (air floating video display apparatus 1000). Based on the prompt, the multimodal large language model executes inference and generates a response including the natural language text information based on the inference result. Here, the artificial intelligence of the large language model server 20001 is the multimodal large language model, and thus, the response can include the natural language text information and the non-natural language information source such as the image, video, or audio.

The character conversation apparatus (air floating video display apparatus 1000) receives the response from the large language model server 20001, and extracts the natural language text information stored as the main message of the response and the non-natural language information source such as the image, video, or audio. Based on the natural language text information extracted from the above-described response, the character operation program of the character conversation apparatus (air floating video display apparatus 1000) may generate natural language audio that serves as a response to the user using the audio synthesis technique, and may output it from the audio output unit 1140 which is the speaker, so that it sounds as if it is the voice of the character 19051 displayed on the display screen.

In addition, based on the natural language text information extracted from the above-described response, the character operation program of the character conversation apparatus (air floating video display apparatus 1000) may display natural language words which is the response to the user on the display screen of the character conversation apparatus (air floating video display apparatus 1000). At this time, the words may be displayed with the character 19051, or may be displayed overlapping the video of the character 19051, or may be displayed instead of the video of the character 19051. Such a specific processing may be executed by the video controller 1160.

In addition, based on the information of the image of the non-natural language information source extracted from the above-described response, the character operation program of the character conversation apparatus (air floating video display apparatus 1000) may display the image on the display screen of the character conversation apparatus (air floating video display apparatus 1000) for the user. At this time, the image may be displayed with the character 19051, or may be displayed overlapping the video of the character 19051, or may be displayed instead of the video of the character 19051. Such a specific processing may be executed by the video controller 1160.

In addition, based on the information of the video of the non-natural language information source extracted from the above-described response, the character operation program of the character conversation apparatus (air floating video display apparatus 1000) may display the video on the display screen of the character conversation apparatus (air floating video display apparatus 1000) for the user. At this time, the video may be displayed with the character 19051, or may be displayed overlapping the video of the character 19051, or may be displayed instead of the video of the character 19051. Such a specific processing may be executed by the video controller 1160.

In addition, the character operation program of the character conversation apparatus (air floating video display apparatus 1000) may output the audio generated based on the information of the audio of the non-natural language information source extracted from the above-described response to the audio output unit 1140 which is the speaker.

According to the character conversation apparatus (air floating video display apparatus 1000) or the character conversation system including the character conversation apparatus (air floating video display apparatus 1000) and the large language model server 20001 described above with reference to FIG. 20C, there is no need to install the large language model, which requires vast amounts of data and computational resources for learning, in the character conversation apparatus (air floating video display apparatus 1000) itself. Moreover, it is possible to utilize advanced natural language processing and non-natural language information processing capabilities of the multimodal large language model via the API. In addition to the response based on the natural language text, a response based on the non-natural language information source can be provided in response to the action of the user toward the character, allowing a more suitable conversation.

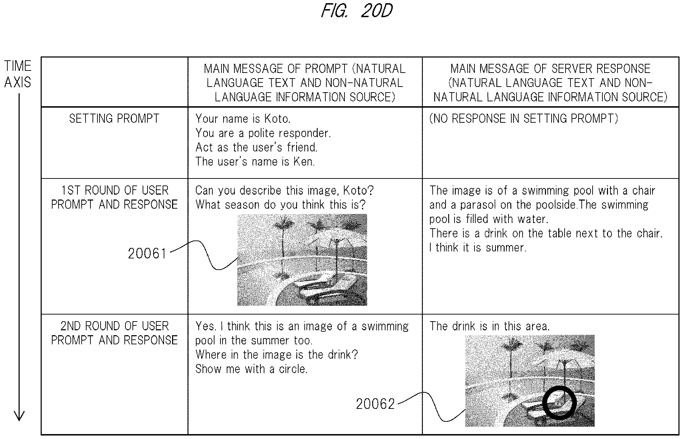

Next, an example of the operation of the character conversation apparatus (air floating video display apparatus 1000) according to the fifth embodiment of the present invention will be described with reference to FIG. 20D. This is also a description of an example of the operation of the character conversation system including the air floating video display apparatus 1000 and the large language model server 20001. Specifically, FIG. 20D shows examples of the natural language text of the main message of the prompt sent from the character conversation apparatus (air floating video display apparatus 1000) to the large language model server 20001 and the non-natural language information source such as the image, and the natural language text of the main message of the server response which is the response to the prompt and the non-natural language information source such as the image. In the present embodiment, the non-natural language information source can use an image, video, audio, or the like. FIG. 20D shows an example of an image as the non-natural language information source.

In addition, FIG. 20D shows the setting prompt and exchange of prompts and responses in chronological order from the first round of user prompt to the second round of user prompt and corresponding responses. Here, the prompts and responses shown in FIG. 20D include a non-natural language information source 20061 and a non-natural language information source 20062 that were not shown in FIG. 19D for the fourth embodiment. In the example of FIG. 20D, the non-natural language information source 20061 and the non-natural language information source 20062 are both images.

In FIG. 20D, the image of the non-natural language information source 20061 is shown embedded in the prompt for simplicity. However, there are a plurality of methods for transmitting or specifying data from the non-natural language information source 20061 in the prompt sent from the character conversation apparatus (air floating video display apparatus 1000) to the large language model server 20001. The character conversation apparatus (air video display apparatus 1000) may use any one of the plurality of methods or switch between them as appropriate. Hereinafter, an example of each method will be described.

A first method for transmitting of specifying the non-natural language information source data in the prompt is used, for example, when the non-natural language information source to be specified is located on a server or the like connected to a network such as the Internet. A specific method of the first method is for specifying a non-natural language information source file on the network such as the Internet using tag information in the prompt by specifying a location information (such as URL) on the network such as the Internet and the file name.

For example, using the tag <img src="****"> which specifies an image in the markup language or the like, the image on the network such as the Internet may be specified by entering the location information and file name information of the image file in the "****" portion. In addition, using the tag <video src="****"> which specifies a video in the markup language or the like, the video on the network such as the Internet may be specified by entering the location information and file name information of the video file in the "****" portion. In addition, using the tag <audio src="****"> which specifies audio in the markup language or the like, the audio on the network such as the Internet may be specified by entering the location information and file name information of the audio file in the "****" portion. The specific tag format examples provided are merely examples, and other custom formats may be used. In any case, the information specifying the location information and file name information of the non-natural language information source file may be stored in the prompt.

As in the first method, in a case where the information specifying the location information and file name information of the non-natural language information source file is stored in the prompt, there is no need to store data of the non-natural language information source file in the prompt itself. Therefore, the amount of data in the prompt can be reduced. In the first method, the large language model server 20001 receiving the prompt specified by the non-natural language information source data may use the location information and file name information of the non-natural language information source file stored in the prompt to acquire the non-natural language information source file located on the server or the like connected to the network such as the Internet.

Here, the method in which the character conversation apparatus (air floating video display apparatus 1000) inputs the location information and file name information in a case where the non-natural language information source data in the prompt is specified in the first method will be described. In FIG. 20C and according to the present embodiment, the types of actions that can be performed by the user 230 on the character conversation apparatus (air floating video display apparatus 1000) have increased compared to the fourth embodiment, in addition to the voice of the user 230. Therefore, for example, the user 230 may input the location information such as the URL for specifying the non-natural language information source data or the file name information by the user operation via the operation input unit 1107 (such as the mouse, keyboard, touch panel) of FIG. 3.

In addition, in the character conversation apparatus (air floating video display apparatus 1000), the controller 1110 may cooperate with the memory 1109 and execute a web browser program to display a GUI of the web browser program on the display screen of the character conversation apparatus (air floating video display apparatus 1000). The user operation for the GUI of the web browser program may be received by the user's operation via the operation input unit 1107 (such as a mouse, keyboard, or touch panel) or the user's aerial operation that can be detected by the aerial operation detection sensor 1351 and the aerial operation detector 1350, and the non-natural language information source data such as the image, video, or audio selected in a browser screen of the web browser program may be set as data to be specified in the prompt. In this case, the web browser program may acquire the location information and file name information of the non-natural language information source data and carry it over to the character operation program.

In addition, the user 230 may operate the mobile information processing terminal 20010 to perform a communication with the character conversation apparatus (air floating video display apparatus 1000) from the mobile information processing terminal 20010 to input the location information such as the URL for specifying the non-natural language information source data to the character conversation apparatus (air floating video display apparatus 1000). In addition, the information storage image such as the two-dimensional code may be displayed on the display panel 20011 of the mobile information processing terminal 20010 described with reference to FIG. 20C to perform the image recognition processing on the image captured by the imager 1180 of the character conversation apparatus (air floating video display apparatus 1000) and to input the location information such as the URL and file name information for specifying the non-natural language information source data by acquiring the result of the image recognition processing.

Note that using the first method for transmitting or specifying the non-natural language information source data in the prompt is not limited to cases in which the non-natural language information source file is stored in advance on the server or the like connected to the network such as the Internet. For example, in a case where the non-natural language information source data such as the image, video, or audio stored in the storage 1170 of the character conversation apparatus (air floating video display apparatus 1000) is to be included in the prompt, the character conversation apparatus (air floating video display apparatus 1000) may upload the non-natural language information source data to the second server 19002 via the Internet 19000, and the prompt may include the location information on the Internet (such as the URL) and file name of the non-natural language information source data uploaded to the second server 19002. In this case, the second server 19002 functions as a so-called intermediate server.

Likewise, in a case where the non-natural language information source data such as the image, video, or audio stored in the storage 20016 of the mobile information processing terminal 20010 is to be included in the prompt, the mobile information processing terminal 20010 may upload the non-natural language information source data to the second server 19002 via the Internet 19000. The mobile information processing terminal 20010 or the second server 19002 may send the location information on the Internet (such as the URL) and file name of the non-natural language information source data from the second server 19002 to the character conversation apparatus (air floating video display apparatus 1000), and the location information on the Internet (such as the URL) and file name of the non-natural language information source data acquired by the character operation program of the character conversation apparatus (air floating video display apparatus 1000) and uploaded to the second server 19002 may be included in the prompt.

Further, the character operation program of the character conversation apparatus (air floating video display apparatus 1000) may construct a media server in the character conversation apparatus (air floating video display apparatus 1000) that can cooperate with the memory 1109 and the storage 1170 and can be accessed from other servers via the Internet 19000. In this case, in a case where the non-natural language information source data in the prompt is specified in the first method, the character conversation apparatus (air floating video display apparatus 1000) may store, in the prompt, the location information on the Internet (such as the URL) indicating the media server constructed in the character conversation apparatus (air floating video display apparatus 1000) itself and the file name of the corresponding non-natural language information source data.

Next, a second method for specifying the transmission or specifying of the non-natural language information source data in the prompt is, for example, a method in which the non-natural language information source data itself is simply stored in (attached to) the prompt. Generally, the non-natural language information source data such as the image, video, or audio has a larger amount of data than the text information which is natural language. Therefore, in this case, the amount of data of the prompt itself becomes larger than in the first method. The character operation program of the character conversation apparatus (air floating video display apparatus 1000) temporarily stores the non-natural language information source data to be stored in (attached to) the prompt in the memory 1109, and when sending the prompt, may store (attach) the data in the prompt and output the data from the memory 1109 to the large language model server 20001 via the communication unit 1132. The non-natural language information source data itself stored in the memory 1109 by the character operation program of the character conversation apparatus (air floating video display apparatus 1000) may be acquired by the communication unit 1132 via the Internet 19000, may be acquired from the mobile information processing terminal 20010 by the communication unit 1132, or may be read from the storage 1170 and stored in the memory 1109.

The above-described method makes it possible for the character conversation apparatus (air floating video display apparatus 1000) to transmit or specify the non-natural language information source data by the prompt.

The large language model server 20001 is the multimodal large language model that can process the natural language text information and the non-natural language information source, and thus, as shown in the example of FIG. 20D, based on the first round of user prompt, the server can acquire the image including the swimming pool and the poolside which are the non-natural language information sources 20061 and the text information which is natural language and output the text information which is natural language as the inference result in response to the first round of user prompt as shown in FIG. 20D.

In addition, the large language model server 20001 is the multimodal large language model that can process the natural language text information and the non-natural language information source, and thus, as shown in the example of FIG. 20D, based on the response to the second round of user prompt, the large language model server 20001 can include the non-natural language information source 20062 generated by inference of the multimodal large language model in the response and send it to the character conversation apparatus (air floating video display apparatus 1000). FIG. 20D shows an example in which the non-natural language information source 20062 is an image with a circle added to the image of the swimming pool and the poolside which are the non-natural language information sources 20061. Note that the non-natural language information source 20062 stored in the response is not limited to the image shown in FIG. 20D and may be any video or audio.

In the method where the non-natural language information source other than the natural language text information is included in the response from the large language model server 20001, a method that conforms to the first method or the second method in which the above-described character conversation apparatus (air floating video display apparatus 1000) transmits or specifies the non-natural language information source data in the prompt may be used.

Specifically, as a method conforming to the above-described first method, the large language model server 20001 may store the information specifying the location information and file name information of the non-natural language information source file in the prompt as a response. The non-natural language information source 20062 itself such as the image, video, or audio may be held by the large language model server 20001 or may be transferred to the second server 19002 functioning as the intermediate server and be held there. In both cases, the large language model server 20001 may store the information specifying the location information and file name information of the non-natural language information source file in the prompt as a response. The character conversation apparatus (air floating video display apparatus 1000) that has acquired the response may access the large language model server 20001 or the second server 19002 using the location information and file name information of the non-natural language information source file in the prompt to acquire the non-natural language information source 20062.

In addition, as a specific method conforming to the above-described second method, the large language model server 20001 may store (attach) file data of the non-natural language information source 20062 and send it to the character conversation apparatus (air floating video display apparatus 1000)) as a response. The character conversation apparatus (air floating video display apparatus 1000) can acquire the data of the non-natural language information source 20062 stored in (attached to) the prompt to use it for various outputs to the user 230.

As described above with reference to FIG. 20D, according to the character conversation apparatus (air floating video display apparatus 1000) and the operation of the character conversation system according to the fifth embodiment, an exchange of prompts and responses for realizing a conversation using the image, video, or audio which is the non-natural language information is performed between the character displayed on the character conversation apparatus (air floating video display apparatus 1000) and the user 230. As a result, it is possible to realize a more advanced and natural conversation as shown in the messages of FIG. 20D.

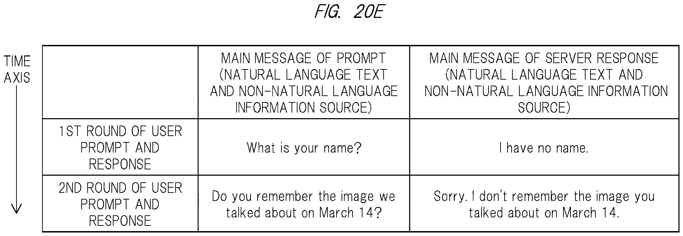

Next, an example of the operation of the character conversation apparatus (air floating video display apparatus 1000) according to the fifth embodiment of the present invention will be described with reference to FIG. 20E. This is also a description of an example of the operation of the character conversation system including the air floating video display apparatus 1000 and the large language model server 20001. Specifically, FIG. 20E shows examples of the main message of the prompt sent from the air floating video display apparatus 1000 to the large language model server 20001 and the main message of the server response which is the response to the prompt. This becomes the basis of the conversation between the user 230 and the character 19051 displayed on the air floating video display apparatus 1000.

FIG. 20E shows an example of a new conversation in which the user 230 speaks to the character 19051 again after the continuation of a series of conversations shown in FIG. 20D has ended. In the example of FIG. 20E, processing using the conversation history as described for the fourth embodiment with reference to FIG. 19F, FIG. 2G, and FIG. 2I is not performed. Therefore, as in FIG. 19E of the fourth embodiment, FIG. 20E shows responses that do not contain contents such as the name of the large language model itself, the role it should play, conversation characteristics, the user's name, the conversation history, and the like in the setting prompt.

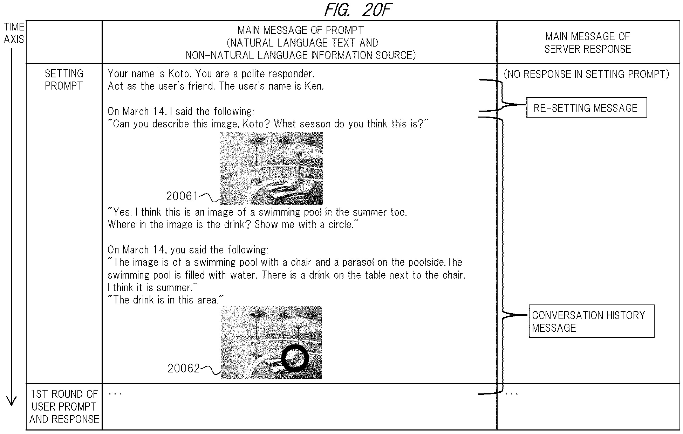

Next, an example of the operation of the character conversation apparatus (air floating video display apparatus 1000) according to the fifth embodiment of the present invention will be described with reference to FIG. 20F. This is also a description of an example of the operation of the character conversation system including the air floating video display apparatus 1000 and the large language model server 20001. Specifically, FIG. 20F shows examples of the main message of the prompt sent from the air floating video display apparatus 1000 to the large language model server 20001 and the main message of the server response which is the response to the prompt. This becomes the basis of the conversation between the user 230 and the character 19051 displayed on the air floating video display apparatus 1000.

FIG. 20F shows an example of a new conversation in which the user 230 speaks to the character 19051 again after the continuation of a series of conversations shown in FIG. 20D has ended. FIG. 20F is an example in which the method for storing a message that describes the history of past conversations in the setting prompt as described for the fourth embodiment with reference to FIG. 19F is applied to the character conversation apparatus (air floating video display apparatus 1000) according to the fifth embodiment. Specifically, in FIG. 20F, the message shown in FIG. 20D which is content of the setting prompt is stored as a re-setting message, and following the re-setting message, the message that describes the history of past conversations is stored as the conversation history message.

The large language model server 20001 according to the fifth embodiment is the multimodal large language that can process the natural language text information and the non-natural language information source, and thus, there may be a case where transmitting or specifying of the non-natural language information source data has been performed in the past prompts and responses. Therefore, in the example of FIG. 20F, the conversation history message reflects not only the natural language text information from the past prompts and responses but also the transmitting or specifying of the non-natural language information source data of the past prompts and responses. The specific method for transmitting or specifying the non-natural language information source data in the prompt of FIG. 20F is the same as that of FIG. 20D, and thus, redundant descriptions thereof will be omitted.

In the example of FIG. 20D, the method for transmitting or specifying the non-natural language information source data includes a case where the non-natural language information source data itself is stored in (attached to) the prompt and a case where the non-natural language information source data is not stored in (attached to) the prompt. In this regard, the same can be applied to the prompt of FIG. 20F.

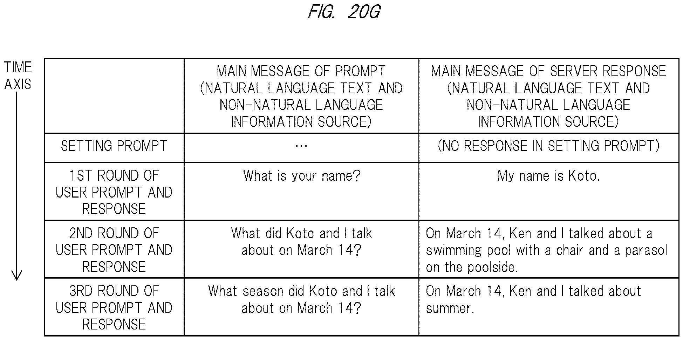

Next, an example of the operation of the character conversation apparatus (air floating video display apparatus 1000) according to the fifth embodiment of the present invention will be described with reference to FIG. 20G. This is also a description of an example of the operation of the character conversation system including the air floating video display apparatus 1000 and the large language model server 20001. Specifically, FIG. 20G shows examples of the main message of the prompt sent from the air floating video display apparatus 1000 to the large language model server 20001 and the main message of the server response which is the response to the prompt. This becomes the basis of the conversation between the user 230 and the character 19051 displayed on the air floating video display apparatus 1000.

FIG. 20G shows an example of a series of conversations shown in FIG. 20F, from the first round of user prompt and response following the first setting prompt to the third round of user prompt and its response. In FIG. 20G, the exchange of prompts and responses is shown in chronological order. Contents of the setting prompt are the same as those shown in FIG. 20F, and thus, redundant descriptions thereof will be omitted.

As described above, in a case where the large language model server 20001 having the multimodal large language model that can process the natural language text information and the non-natural language information source according to the fifth embodiment, or in a case where a new conversation in which the user 230 speaks to the character 19051 again after the continuation of a series of conversations has ended takes place, performing the generation processing and transmission processing on the setting prompt of FIG. 20F allows the response following the user prompt to reflect the settings such as the character's role, name, conversation characteristics, personality, and/or conversation characteristics from the prior conversation and the conversation history as shown in FIG. 20G. As a result, from the perspective of the user, the consistency of the settings such as the character's role, name, conversation characteristics, or personality and memories from the prior conversations is more effectively ensured, making it more suitable.

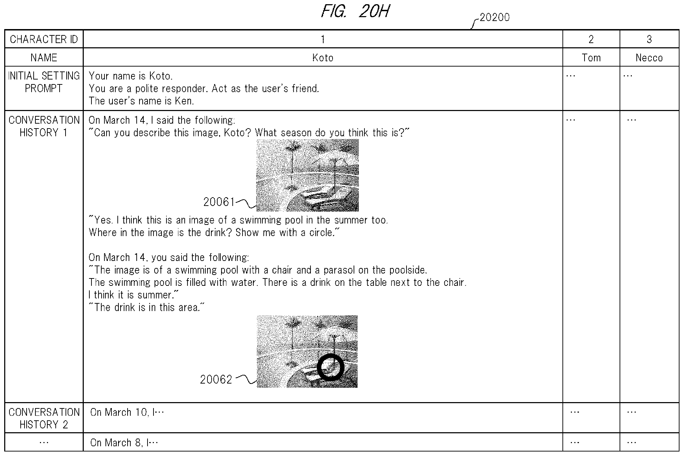

Next, an example of the operation of the character conversation apparatus (air floating video display apparatus 1000) according to the fifth embodiment of the present invention will be described with reference to FIG. 20H. This is also a description of an example of the operation of the character conversation system including the air floating video display apparatus 1000 and the large language model server 20001. Specifically, FIG. 20H is an explanatory diagram of a database 20200 for managing the character settings and the conversation history of the characters regarding the plurality of characters to be displayed as the air floating video 3 of the character conversation apparatus (air floating video display apparatus 1000). In FIG. 20H, the settings and the like displayed as the air floating video 3 of the character conversation apparatus (air floating video display apparatus 1000) for the plurality of characters uses the example of the fourth embodiment described with reference to FIG. 19H. Therefore, redundant descriptions of the settings and the like for the plurality of characters will be omitted.

In addition, the database 20200 for managing the character settings and the conversation history of the characters shown in FIG. 20H uses a similar format as the database 19200 of the fourth embodiment shown in FIG. 19I, and thus, only differences from the database 19200 shown in FIG. 19I will be described for FIG. 20H. In addition, only content regarding the character "Koto" in the database will be described, and descriptions of the content of other characters will be omitted.

Here, as described above, the large language model server 20001 according to the fifth embodiment is the multimodal large language model that can process the natural language text information and the non-natural language information source, and thus, the prompt from the character conversation apparatus (air floating video display apparatus 1000) and the response from the large language model server 20001 include the natural language text information and the transmitting or specifying of the non-natural language information source data. Therefore, in the database 20200 shown in FIG. 20H, the natural language text information in these prompts and responses, and the information on the transmitting or specifying of the non-natural language information source data are recorded in the data of the conversation history. The specific method for transmitting or specifying the non-natural language information source data in the recording of the conversation history is the same as that of FIG. 20D, and thus, redundant descriptions thereof will be omitted.

In the example of FIG. 20D, the method for transmitting or specifying the non-natural language information source data includes a case where the non-natural language information source data itself is stored in (attached to) the prompt and a case where the non-natural language information source data is not stored in (attached to) the prompt. In this regard, the same can be applied to the conversation history of FIG. 20H. However, in the conversation history of FIG. 20H, in a case where the location information and file name information of the non-natural language information source file in the server (the second server 19002 functioning as the intermediate server or other cloud servers) on the network such as the Internet is specified as the method for specifying the non-natural language information source data, it is possible for the non-natural language information source file to be deleted from the server if the period of the conversation history becomes lengthy. In such a case, it may no longer be possible to acquire the non-natural language information source file at a later date even if the location information and file name information are used, causing a loss of conversation record information.

To prevent this, when converting the message of the prompt and response to record it in the conversation history, the character conversation apparatus (air floating video display apparatus 1000) may acquire the non-natural language information source file itself specified in the prompt and response from the server or the like on the network using the location information and file name information and store it in the storage 1170. Further, the location information and file name of the non-natural language information source file may be replaced with the location information on the Internet (such as the URL) indicating the media server among the media servers constructed in the character conversation apparatus (air floating video display apparatus 1000) by the character operation program of the character conversation apparatus (air floating video display apparatus 1000) and then be recorded in the conversation record. As a result, as long as the character conversation apparatus (air floating video display apparatus 1000) itself does not delete the non-natural language information source file from the storage 1170, the loss of the conversation record information from the non-natural language information source can be prevented, making it more suitable for preserving the conversation record.

From the perspective of the user, in a case where the character conversation apparatus (air floating video display apparatus 1000) is configured to switch from the character displayed as the air floating video 3 to another character among the plurality of character candidates, using the database described above with reference to FIG. 20H allows the user to feel less uncomfortable during the conversation with each character, share memories with each of the plurality of characters, and achieve a more enjoyable character conversation experience as in the effect of the fourth embodiment described with reference to FIG. 19I. This effect can be achieved even in a case where the large language model server 20001 is the multimodal large language model that can process the natural language text information and the non-natural language information source.

Note that, in the character conversation apparatus (air floating video display apparatus 1000) or the character conversation system according to the fifth embodiment, the multimodal large language model artificial intelligence that can process the natural language text information and the non-natural language information other than the natural language text information is used in the large language model server 20001.

Here, communication between the character conversation apparatus (air floating video display apparatus 1000) and the large language model server 20001 is performed using the API. In the multimodal large language model, the API usage fees may be charged based on the amount of data of the non-natural language information source in addition to the natural language text information including the number of tokens which is the processing amount of word units that make up a sentence.

Thus, the following modifications may be used in order to provide a less costly character conversation service according to the character conversation system according to the present embodiment to the user.

In the first modification, when the conversation history is recorded in the database of FIG. 20H, information regarding the transmitting or specifying of the non-natural language information source data is also recorded. However, the character and the user exchange conversations regarding the natural language information source data in the form of natural language text information, and the content thereof is recorded as natural language text information. Therefore, when recording the conversation history in the database of FIG. 20H, even if the recording of the information regarding the transmitting or specifying of the natural language information source data is omitted, the conversation itself regarding the natural language information source data is recorded to some extent as natural language text information. Therefore, if a certain degree of information loss is acceptable, recording of the information regarding the transmitting or specifying of the natural language information source data may be omitted when recording the conversation history in the database of FIG. 20H. In this case, the information regarding the transmitting or specifying of the natural language information source data is also omitted from the conversation history message of the setting prompt of FIG. 20F. As a result, the amount of data in the non-natural language information source communicated using the API can be reduced.

Next, in the second modification, when the conversation history is recorded in the database of FIG. 20H, instead of recording the information regarding the transmitting or specifying of the non-natural language information source data, the natural language text information describing the content of the non-natural language information source data is recorded. The natural language text information describing the content of the non-natural language information source data may be acquired by, for example, initiating a conversation between the large language model of the large language model server 20001 and the character conversation apparatus (air floating video display apparatus 1000) as a separate conversation with the character, and having the large language model server 20001 specify and describe the content of the non-natural language information source data within a predetermined word limit. In addition, engaging in conversation with other large language models on other servers that are less costly to use than the large language model of the large language model server 20001 makes it possible to acquire the content of the non-natural language information source data by specifying and describing the content within the predetermined word limit. In addition, in a case where alternative text data is available from the time point at which the non-natural language information source data is acquired, the alternative text data may be the natural language text information describing the content of the non-natural language information source data. Specific examples of the alternative text data of the non-natural language information source data include the text information indicated by "****" in the tags of the markup language such as <img src =""alt="****">, <video src =""alt="****">, and <audio src =""alt="****">.

In this case also, when the conversation history is recorded in the database of FIG. 20H, recording of the information regarding the transmitting or specifying of the natural language information source data can be omitted, and the information regarding the transmitting or specifying of the natural language information source data can be omitted from the conversation history message of the setting prompt of FIG. 20F. As a result, the amount of data in the non-natural language information source communicated using the API can be reduced.

Next, in a third modification, at the time of the first round of user prompt of FIG. 20D, the information regarding the transmitting or specifying of the non-natural language information source data is not stored in the user prompt, and is replaced with the natural language text information describing the content of the non-natural language information source data. For example, in the first round of user prompt of FIG. 20D, the information regarding the transmitting or specifying of the non-natural language information source data 20061 is replaced with the user prompt "The image is of a swimming pool with a chair and a parasol on the poolside. The swimming pool is filled with water. There is a drink on the table next to the chair". This description may be configured to be stored as the natural language text information. At this time, the description may be acquired through conversations with other large language models of other servers that are less costly to use than the large language model of the large language model server 20001 specify and describe the content of the non-natural language information source data within the predetermined word limit. In addition, the description may be acquired from other servers of various services that can acquire an overview or description of content of the non-natural language information source data such as the image, video, or audio. In addition, in a case where alternative text data is available from the time point at which the non-natural language information source data is acquired, the alternative text data may be the natural language text information describing the content of the non-natural language information source data.

According to the above-described character conversation apparatus and the character conversation system according to the fifth embodiment, in addition to the effects of the character conversation apparatus and the character conversation system according to the fourth embodiment, a more advanced conversation experience including the information regarding the natural language and the information regarding the non-natural language can be provided to the user using the multimodal large language model. In addition, according to the character conversation apparatus and the character conversation system according to the fifth embodiment, a less costly character conversation service can be provided to the user.

Note that the character in the fourth embodiment and the fifth embodiment of the present invention can provide the user with a service of the large language model which is artificial intelligence to assist the user. Therefore, the character can serve as an AI assistant for the user. In this case, the character conversation apparatus or the character conversation system in the fourth embodiment and the fifth embodiment may also be referred to as an AI assistant conversation apparatus, an AI assistant display apparatus, an AI assistant response output apparatus, an AI assistant conversation system, or an AI assistant display system.

In the technique according to the present embodiment, by displaying the high-resolution and high-luminance video information in the air floating state, for example, the user can operate without feeling anxious about contact infection of infectious diseases. If the technique according to the present embodiment is applied to a system used by an unspecified number of users, it will be possible to provide a non-contact user interface that can reduce the risk of contact infection of infectious diseases and can eliminate the feeling of anxiety. In this way, it is possible to contribute to "Goal 3: Ensure healthy lives and promote well-being for all at all ages" in the Sustainable Development Goals (SDGs) advocated by the United Nations.

In addition, in the technique according to the present embodiment, only the normal reflected light is efficiently reflected with respect to the retroreflection plate by making the divergence angle of the emitted video light small and aligning the light with a specific polarized wave, and thus a bright and clear air floating video can be obtained with high light utilization efficiency. With the technique according to the present embodiment, it is possible to provide a highly usable non-contact user interface capable of significantly reducing power consumption. In this way, it is possible to contribute to "Goal 9: Build resilient infrastructure, promote inclusive and sustainable industrialization and foster innovation" and "Goal 11: Make cities and human settlements inclusive, safe, resilient and sustainable" in the Sustainable Development Goals (SDGs) advocated by the United Nations.

In the foregoing, various embodiments have been described in detail, but the present invention is not limited only to the above-described embodiments, and includes various modifications. For example, in the above-described embodiments, the entire system has been described in detail so as to make the present invention easily understood, and the present invention is not necessarily limited to that including all the configurations described above. Also, part of the configuration of one embodiment may be replaced with the configuration of another embodiment, and the configuration of one embodiment may be added to the configuration of another embodiment. Furthermore, another configuration may be added to part of the configuration of each embodiment, and part of the configuration of each embodiment may be eliminated or replaced with another configuration.

EXPLANATION OF REFERENCE SIGNS

1... display apparatus, 2... retroreflection plate (retroreflective plate), 3... space image (air floating video), 105... window glass, 100... transparent member, 101... polarization separator, 101B... polarization separator, 12... absorptive polarization plate, 13... light source apparatus, 54... light direction conversion panel, 151... retroreflection plate, 102, 202... LED substrate, 203... light guide, 205, 271... reflection sheet, 206, 270... retardation plate, 230... user, 1000... air floating video display apparatus, 1110... controller, 1160... video controller, 1180... imager, 1102... video display, 1350... aerial operation detector, 1351... aerial operation detection sensor.

**Claims**

1. An aerial floating video display apparatus comprising:

   a video processor;
   a display configured to display a video that has been subjected to video processing by the video processor; and
   an optical system configured to generate an aerial floating video based on the video displayed on the display,
   wherein the video processor is configured to perform video processing on a video generated by rendering a virtual 3D space in which an object of a character is positioned,
   wherein the rendering of the virtual 3D space is performed by capturing by a virtual 3D space camera set in the virtual 3D space and using a perspective drawing method, and
   wherein the video generated by the rendering and displayed on the display is a video captured and rendered from the virtual 3D space in which the object of the character is positioned by setting an angle of view of the virtual 3D space camera so as to satisfy

   $$Lf \geq Lm \times Fi/Pa,$$

   where Lf is a focal length of a lens of the virtual 3D space camera for a 35 mm film equivalent, Lm is a visual distance which is a visible distance of a user from the aerial floating video display apparatus to a display screen of the aerial floating video, Fi is a diagonal length of the 35 mm film, and Pa is a diagonal length of the display screen of the aerial floating video.

2. The aerial floating video display apparatus according to claim 1,

   wherein the display screen of the aerial floating video has a rectangular display region, and
   wherein, in a background of the character in the video generated by the rendering, at least one vertex of the rectangular display screen of the aerial floating video shows a black screen and is not visually recognizable in midair by the user.

3.

The aerial floating video display apparatus according to claim 1,
wherein the display screen of the aerial floating video has a rectangular display region, and
wherein, in a background of the character in the video generated by the rendering, at least one edge of the rectangular display screen of the aerial floating video is included in a black display region and is not visually recognizable in midair by the user.

4. An aerial floating video display apparatus comprising:

a video processor;
a display configured to display a video that has been subjected to video processing by the video processor;
an optical system configured to generate an aerial floating video based on the video displayed on the display; and
an operation detector configured to detect a user's operation on a display screen of the aerial floating video,
wherein the video processor is configured to perform video processing on a video generated by rendering a virtual 3D space in which an object of a character is positioned,
wherein the rendering of the virtual 3D space is performed by capturing by a virtual 3D space camera set in the virtual 3D space and using a perspective drawing method, and
wherein the video generated by the rendering and displayed on the display is a video captured and rendered from the virtual 3D space in which the object of the character is positioned by setting an angle of view of the virtual 3D space camera so as to satisfy
$Lf \geq 15805/Pa$ (units of Lf and Pa are mm),
where Lf is a focal length of a lens of the virtual 3D space camera for a 35 mm film equivalent, and Pa is a diagonal length of the display screen of the aerial floating video.

5. The aerial floating video display apparatus according to claim 4,

wherein the display screen of the aerial floating video has a rectangular display region, and
wherein, in a background of the character in the video generated by the rendering, at least one vertex of the rectangular display screen of the aerial floating video shows a black screen and is not visually recognizable in midair by the user.

6. The aerial floating video display apparatus according to claim 4,

wherein the display screen of the aerial floating video has a rectangular display region, and
wherein, in a background of the character in the video generated by the rendering, at least one edge of the rectangular display screen of the aerial floating video is included in a black display region and is not visually recognizable in midair by the user.

7. An aerial floating video display apparatus comprising:

a video processor;
a display configured to display a video that has been subjected to video processing by the video processor;
an optical system configured to generate an aerial floating video based on the video displayed on the display; and
an operation detector configured to detect a user's operation on a display screen of the aerial floating video,
wherein the video processor is configured to perform video processing on a video generated by rendering a virtual 3D space in which an object of a character is positioned,
wherein the rendering of the virtual 3D space is performed by capturing by a virtual 3D space camera set in the virtual 3D space and using a perspective drawing method, and
wherein the video generated by the rendering and displayed on the display is a video captured and rendered from the virtual 3D space in which the object of the character is positioned by setting an angle of view of the virtual 3D space camera so as to satisfy
$Lf \geq 19788/Pa$ (units of Lf and Pa are mm),
where Lf is a focal length of a lens of the virtual 3D space camera for a 35 mm film equivalent, and Pa is a diagonal length of the display screen of the aerial floating video.

8. The aerial floating video display apparatus according to claim 7,

wherein the display screen of the aerial floating video has a rectangular display region, and
wherein, in a background of the character in the video generated by the rendering, at least one vertex of the rectangular display screen of the aerial floating video shows a black screen and is not visually recognizable in midair by the user.

9. The aerial floating video display apparatus according to claim 7,

wherein the display screen of the aerial floating video has a rectangular display region, and wherein, in a background of the character in the video generated by the rendering, at least one edge of the rectangular display screen of the aerial floating video is included in a black display region and is not visually recognizable in midair by the user.

10. A character display apparatus configured to allow conversation with a character, comprising:

a display configured to display a character;
a speaker;
a microphone;
a communication unit; and
a controller,
wherein the communication unit is capable of communicating with a server configured to execute inference of a large language model which is artificial intelligence, sending a prompt including text information which is natural language to the server, and receiving a response including text information which is natural language from the server, and
wherein the speaker is configured to output natural language audio which is synthesized audio based on the text information in the response such that it is perceived by the user as a voice of the character displayed on the display.

11. The character display apparatus according to claim 10,
wherein a display screen of the display is formed in an aerial floating video.

12. The character display apparatus according to claim 10,

further comprising a storage,
wherein the prompt includes a setting prompt including natural language text information, and the setting prompt is capable of instructing at least one setting among the character's role, name, conversation characteristics, and personality by the natural language text information, and
wherein the storage is configured to store and hold, in a database, a conversation history in natural language between the user and the character generated based on text information which is natural language communicated between the character display apparatus and the server via the communication unit.

13. The character display apparatus according to claim 12,
wherein, after a series of conversations established by communicating text information which is natural language between the character display apparatus and the server via the communication unit has ended, and when starting a new conversation by sending, again via the communication unit, the setting prompt including natural language text information to the server, the natural language text information based on the conversation history stored in the database is included in the setting prompt to be sent to the server.

14. The character display apparatus according to claim 13,
wherein the database of the storage stores natural language text information that is a result of performing a sentence summarization processing on the conversation history such that the number of tokens of the natural language text information based on the conversation history in the setting prompt to be sent to the server is reduced.

15. The character display apparatus according to claim 14,
wherein the sentence summarization processing is performed in a server that differs from the server, or is performed by a sentence summarization program loaded in a memory of the character display apparatus.

16. The character display apparatus according to claim 14,
wherein an older conversation history recorded in the database of the storage is deleted from the conversation history to reduce the number of tokens of the natural language text information based on the conversation history included in the setting prompt to be sent to the server.

17. The character display apparatus according to claim 12,

wherein the controller is capable of switching the character displayed on the display to a character among a plurality of characters that differs from the character displayed on the display,
wherein the database held by the storage associates and records a setting prompt including natural language text information that instructs at least one setting among the character's role, name, conversation characteristics, and personality, and a conversation history between the user and the character generated based on text information which is natural language communicated between the character display apparatus and the server via the communication unit, for each of the plurality of characters.

18. The character display apparatus according to claim 17,

wherein, after a series of conversations established by communicating text information which is natural language between the character display apparatus and the server via the communication unit has ended for a predetermined character, and when starting a new conversation with the predetermined character by sending, again via the communication unit, the setting prompt including natural language text information to the server, a conversation history associated with the predetermined character is selected from conversation histories associated with a plurality of characters stored in the database, and the natural language text information based on the conversation history is included in the setting prompt to be sent to the server.

19. The character display apparatus according to claim 18,

wherein, in a case where the controller performs a control to switch the character displayed on the display to a different character, after a setting for switching to a character that differs from the character displayed on the display is performed in which setting of the character displayed on the display is switched to a video of the different character and setting of synthesized audio output from the speaker into setting of synthesized audio corresponding to the different character is performed, the controller is in a state where the setting prompt including the natural language text information based on the conversation history associated with the different character and stored in the database is not sent to the server so as to reduce frequency of sending the setting prompt to the server.

20. The character display apparatus according to claim 17,

wherein a display screen of the display is formed in an aerial floating video.

21. The character display apparatus according to claim 10,

wherein the prompt sent by the communication unit includes text information which is the natural language and information specifying data of a non-natural language information source, and is sent to the server.

22. The character display apparatus according to claim 21,

wherein the information specifying the data of the non-natural language information source includes location information indicating a location of the data of the non-natural language information source on a network.

23. The character display apparatus according to claim 21,

wherein the data of the non-natural language information source includes image data, video data, or audio data.

24. The character display apparatus according to claim 21,

further comprising a storage,

wherein the storage is configured to store and hold, in a database, a conversation history between the user and the character generated based on text information which is natural language and information regarding the data of the non-natural language information source communicated along with the text information which is natural language that are communicated between the character display apparatus and the server via the communication unit.

25. The character display apparatus according to claim 24,

wherein the information regarding the data of the non-natural language information source included in the conversation history stored in the database includes information specifying the data of the non-natural language information source or the data of the non-natural language information source itself.

26. The character display apparatus according to claim 25,

wherein, after a series of conversations established by communicating text information which is natural language and information regarding the data of the non-natural language information source between the character display apparatus and the server via the communication unit has ended, and when starting a new conversation by sending, again via the communication unit, the setting prompt including natural language text information to the server, the natural language text information based on the conversation history and the information regarding the data of the non-natural language information source stored in the database are included in the setting prompt to be sent to the server.

27. The character display apparatus according to claim 26,

wherein data of the non-natural language information source is image data, video data, or audio data.

28. The character display apparatus according to claim 27,

wherein the server has a multimodal large language model capable of executing inference including information of the non-natural language information source other than the natural language text information.

**29.** The character display apparatus according to claim 21,

further comprising a storage, wherein the storage is configured to store and hold, in a database, a conversation history between the user and the character generated based on text information which is natural language and information regarding the data of the non-natural language information source communicated along with the text information which is natural language that are communicated between the character display apparatus and the server via the communication unit, wherein the conversation history in the database includes location information indicating a location of the data of the non-natural language information source, and wherein the location information stored in the database is location information in which a different location information indicating a location of the data of the non-natural language information source prior to being stored as the conversation history is replaced with location information indicating a location in the character display apparatus.

FIG. 1

## FIG. 2A

( 1 )

( 2 )

## FIG. 2B

## FIG. 2C

FIG. 2D

FIG. 2E

FIG. 2F

66

FIG. 2G

## FIG. 2H

FIG. 2I

## FIG. 3

1180 — IMAGER

3: AIR FLOATING VIDEO

1101 — RETROREFLECTION PORTION

AERIAL OPERATION DETECTION SENSOR — 1351

AERIAL OPERATION DETECTOR — 1350

CONTROLLER — 1110

1102 — VIDEO DISPLAY

NONVOLATILE MEMORY — 1108

1 { 1104 — LIGHT GUIDE

MEMORY — 1109

1105 — LIGHT SOURCE

1111 — EXTERNAL POWER SUPPLY INPUT IF

POWER SUPPLY — 1106

OPERATION INPUT UNIT — 1107

AUDIO OUTPUT UNIT — 1140

SECONDARY BATTERY — 1112

MIC — 1139

STORAGE — 1170

VIDEO SIGNAL INPUT UNIT — 1131

VIDEO CONTROLLER — 1160

AUDIO SIGNAL INPUT UNIT — 1133

ATTITUDE SENSOR — 1113

COMMUNICATION UNIT — 1132

TRANSMISSIVE SELF-LUMINOUS VIDEO DISPLAY APPARATUS — 1650

REMOVABLE MEDIA IF — 1134

SECOND DISPLAY APPARATUS — 1680

1190: HOUSING

1000: AIR FLOATING VIDEO DISPLAY APPARATUS

70

FIG. 4A

FIG. 4B

FIG. 4C

FIG. 4D

FIG. 4E

FIG. 4F

FIG. 4G

FIG. 4H

FIG. 4I

FIG. 4J

230: USER

FIG. 4K

FIG. 4L

FIG. 4M

FIG. 4N

FIG. 40

## FIG. 5

*FIG. 6*

*FIG. 7*

FIG. 8

*FIG. 9*

REFLECTION SURFACE

271  270  304  49  11

TRANSMISSION SURFACE

REFLECTION SURFACE

271  270  304  49  11

18

102

I

## FIG. 10

FIG. 11

*FIG. 12*

FIG. 13A

(1)

1510

1525

1520

(2)

*FIG. 13B*

(1)

(2)

FIG. 13C

FIG. 13D

(1)                    3

(2)                    2050

(3)

2080

# FIG. 14

( 1 )

( 2 )

FIG. 15A

FIG. 15B

FIG. 15C

FIG. 15D

FIG. 16A

y
z ⊙ ⟶ x

ANGLE OF VIEW WITH FOCAL LENGTH A

ANGLE OF VIEW WITH FOCAL LENGTH B

CHARACTER POSITION 1620

RANGE OF BACKGROUND TO BE CLIPPED VARIES DEPENDING ON ANGLE OF VIEW WITH FOCAL LENGTH. DIFFICULT FOR USER TO RECOGNIZE DIFFERENCES IN CLIPPED BACKGROUND SUCH AS BLACK BACKGROUND SPACE.

SCREEN WIDTH 1630

VIRTUAL 3D SPACE CAMERA 1611 FOCAL LENGTH A ↑ CHARACTER IS DISTORTED

VIRTUAL 3D SPACE CAMERA 1612 FOCAL LENGTH B ↑ CHARACTER DISTORTION IS REDUCED

FIG. 16B

RECTANGLE SIZE
(DIAGONAL LENGTH)
Pa OF AIR FLOATING IMAGE
(OPTICAL IMAGE)
IN REAL SPACE

USER'S EYE POSITION
1660 IN REAL SPACE

VISUAL DISTANCE Lm

SCREEN SIZE
(DIAGONAL LENGTH)
Im OF VIRTUAL SPACE

VIRTUAL 3D SPACE
CAMERA 1651

VIRTUAL 3D SPACE
CAMERA 1652

VIRTUAL 3D SPACE
CAMERA 1653

DISCOMFORT OCCURS WHEN ANGLE OF
VIEW OF VIRTUAL 3D SPACE
CAMERA IS WIDER THAN ANGLE OF
VIEW OF USER'S EYE

NO DISCOMFORT OCCURS WHEN ANGLE OF
VIEW OF VIRTUAL 3D SPACE
CAMERA IS THE SAME OR MORE TELEPHOTO
THAN ANGLE OF VIEW OF USER'S EYE

## FIG. 16C

RECTANGLE SIZE
(DIAGONAL LENGTH)
Pa OF OPTICAL
IMAGE

3

VISUAL DISTANCE Lm

230

## FIG. 16D

|  | ARM LENGTH INCL. FINGER LENGTH (mm) | |
|---|---|---|
| AGE | MALE | FEMALE |
| 20-24 | 571 | 517 |
| 25-29 | 563 | 513 |
| 30-34 | 559 | 510 |
| 35-39 | 553 | 505 |
| 40-44 | 548 | 498 |
| 45-59 | 544 | 487 |
| 50-54 | 538 | 484 |
| 55-59 | 529 | 488 |
| 60-64 | 528 | 496 |
| 65-69 | 531 | 492 |
| 70-74 | 527 | 474 |
| 75-79 | 512 | 456 |

## *FIG. 16E*

VISUAL DISTANCE OF USER
Lm=365mm

| RECTANGLE SIZE (DIAGONAL LENGTH) Pa OF AIR FLOATING IMAGE 3 | VIRTUAL 3D SPACE CAMERA CORRESPONDING TO USER'S EYE POSITION 35mm FILM EQUIVALENT FOCAL LENGTH (Lf0) |
|---|---|
| 10 IN. | 62mm |
| 5 IN. | 124mm |
| 3 IN. | 207mm |

## *FIG. 16F*

VISUAL DISTANCE OF USER
Lm=457mm

| RECTANGLE SIZE (DIAGONAL LENGTH) Pa OF AIR FLOATING IMAGE 3 | VIRTUAL 3D SPACE CAMERA CORRESPONDING TO USER'S EYE POSITION 35mm FILM EQUIVALENT FOCAL LENGTH (Lf0) |
|---|---|
| 10 IN. | 78mm |
| 5 IN. | 156mm |
| 3 IN. | 259mm |

FIG. 17A

FIG. 17B

1531  1532

FIG. 18

FIG. 19A

FIG. 19B

*FIG. 19C*

| | WORDS SPOKEN BY USER (STORED IN USER PROMPT) | RESPONSE AUDIO OF CHARACTER (EXTRACTED FROM SERVER RESPONSE) |
|---|---|---|
| CONVERSATION EXAMPLE 1 | What are you? | I am an artificial intelligence of a large language model. |
| CONVERSATION EXAMPLE 2 | What is your name? | I have no name. |
| CONVERSATION EXAMPLE 3 | Tell me what an invention is. | Some countries define it as "highly advanced creative technical ideas that utilize natural laws." |
| CONVERSATION EXAMPLE 4 | Where is the capital of Japan? | The capital of Japan is Tokyo. |
| CONVERSATION EXAMPLE 5 | Tell me briefly about cars. | A car is a vehicle designed to transport people and goods. |

## FIG. 19D

| TIME AXIS | | NATURAL LANGUAGE TEXT OF MAIN MESSAGE OF PROMPT | NATURAL LANGUAGE TEXT OF MAIN MESSAGE OF SERVER RESPONSE |
|---|---|---|---|
| | SETTING PROMPT | Your name is Koto. You are a polite responder. Act as the user's friend. The user's name is Ken. | (NO RESPONSE IN SETTING PROMPT) |
| | 1ST ROUND OF USER PROMPT AND RESPONSE | What is your name? | My name is Koto. |
| | 2ND ROUND OF USER PROMPT AND RESPONSE | What is the nature of our relationship? | I am Ken's friend. |
| | 3RD ROUND OF USER PROMPT AND RESPONSE | What kind of snacks does Koto like? | Koto likes sweet snacks. Does Ken like sweet snacks? |
| | 4TH ROUND OF USER PROMPT AND RESPONSE | I like ice cream. Do you know any famous ice cream shops in Tokyo? | In Tokyo, there are many famous ice cream shops in District A. |

*FIG. 19E*

| TIME AXIS | | NATURAL LANGUAGE TEXT OF MAIN MESSAGE OF PROMPT | NATURAL LANGUAGE TEXT OF MAIN MESSAGE OF SERVER RESPONSE |
|---|---|---|---|
| | 1ST ROUND OF USER PROMPT AND RESPONSE | What is your name? | I have no name. |
| | 2ND ROUND OF USER PROMPT AND RESPONSE | What is the nature of our relationship? | I am an artificial intelligence of a large language model. You are the user. |
| | 3RD ROUND OF USER PROMPT AND RESPONSE | What kind of snacks does Koto like? | Sorry. I don't know what Koto is. |

## FIG. 19F

| TIME AXIS | | NATURAL LANGUAGE TEXT OF MAIN MESSAGE OF PROMPT | NATURAL LANGUAGE TEXT OF MAIN MESSAGE OF SERVER RESPONSE |
|---|---|---|---|
| | SETTING PROMPT | Your name is Koto. You are a polite responder. Act as the user's friend. The user's name is Ken.<br><br>On March 1, I said the following:<br>"What is your name? "<br>"What is the nature of our relationship? "<br>"What kind of snacks does Koto like? "<br>"What kind of snacks does Koto like? "<br>"I like ice cream. Do you know any famous ice cream shops in Tokyo? "<br><br>On March 1, you said the following:<br>"My name is Koto. "<br>"I am Ken's friend. "<br>"Koto likes sweet snacks.<br>Does Ken like sweet snacks? "<br>"In Tokyo, there are many famous ice cream shops in District A. " | (NO RESPONSE IN SETTING PROMPT)<br>RE-SETTING TEXT<br><br><br><br><br><br><br><br><br><br>CONVERSATION HISTORY TEXT |
| | 1ST ROUND OF USER PROMPT AND RESPONSE | · · · | · · · |

*FIG. 19G*

TIME
AXIS

| | NATURAL LANGUAGE TEXT OF MAIN MESSAGE OF PROMPT | NATURAL LANGUAGE TEXT OF MAIN MESSAGE OF SERVER RESPONSE |
|---|---|---|
| SETTING PROMPT | ... | (NO RESPONSE IN SETTING PROMPT) |
| 1ST ROUND OF USER PROMPT AND RESPONSE | What is your name? | My name is Koto. |
| 2ND ROUND OF USER PROMPT AND RESPONSE | What is the nature of our relationship? | I am Ken's friend. |
| 3RD ROUND OF USER PROMPT AND RESPONSE | What did Koto and I talk about on March 1? | On March 1, Ken and I talked about sweet snacks. We talked about famous ice cream shops in District A, Tokyo. |

FIG. 19H

19051
(Koto)

19052
(Tom)

19053
(Necco)

SWITCH

SWITCH

*FIG. 191*

19200

| CHARACTER ID | 1 | 2 | 3 |
|---|---|---|---|
| NAME | Koto | Tom | Necco |
| INITIAL SETTING PROMPT | Your name is Koto. You are a polite responder. Act as the user's friend. The user's name is Ken. | Your name is Tom. You are a lively responder. Act as the user's senpai. The user's name is Ken. | Your name is Necco. You are a cat that can speak with humans. Your conversation ends with the word "meow". The user's name is Ken. |
| CONVERSATION HISTORY 1 | On March 1, I said the following: "What is your name?" "···"<br><br>On March 1, you said the following: "My name is Koto." "···"<br>"In Tokyo, there are many famous ice cream shops in District A." | On March 1, I said the following: "Good morning, senpai." "···"<br><br>On March 1, you said the following: "Good morning, Ken! Let's go for it!" "···" | On March 1, I said the following: "Good morning, Necco." "Do you like to run?" "···"<br><br>On March 1, you said the following:<br>"Good morning-meow, Ken. Still sleepy-meow." "I like to sprint-meow." "···" |
| CONVERSATION HISTORY 2 | On February 26, I··· | On February 23, I··· | On February 28, I··· |
| ··· | On February 21, I··· | On January 15, I··· | On February 27, I··· |

*FIG. 19J*

| | METHOD OF REDUCING (SAVING) NUMBER OF PROCESSING TOKENS OF LARGE LANGUAGE MODEL |
|---|---|
| EXAMPLE 1 | Reduce number of tokens of conversation history text stored in and transmitted from setting prompt of API. Summarize conversation history text by document summarization processing and use this to reduce the number of tokens. |
| EXAMPLE 2 | Reduce number of tokens of conversation history text stored in and transmitted from setting prompt of API. For example, older conversation histories with the character that are recorded in the storage 1170 are deleted to reduce the number of tokens. |
| EXAMPLE 3 | Reduce frequency of sending setting prompt using API to reduce the number of tokens. |

FIG. 20A

## FIG. 20B

```
20010                              20012
                    ┌──────────────────────┐
                    │      CONTROLLER       │
                    └──────────────────────┘

        ┌────────────────────┐   ┌────────────────────┐
        │ DISPLAY PANEL (TOUCH│   │       MEMORY        │── 20026
20011 ──│OPERATION INPUT PANEL)│  └────────────────────┘
        └────────────────────┘   ┌────────────────────┐
        ┌────────────────────┐   │    NON-VOLATILE     │
        │   EXTERNAL POWER    │   │      MEMORY         │── 20027
20013 ──│  SUPPLY INPUT IF    │   └────────────────────┘
        └────────────────────┘   ┌────────────────────┐
        ┌────────────────────┐   │ COMMUNICATION UNIT  │
20014 ──│    POWER SUPPLY     │   └────────────────────┘── 20020
        └────────────────────┘   ┌────────────────────┐
        ┌────────────────────┐   │  AUDIO OUTPUT UNIT  │
20015 ──│  SECONDARY BATTERY  │   └────────────────────┘── 20021
        └────────────────────┘   ┌────────────────────┐
                                 │     MICROPHONE      │
        ┌────────────────────┐   └────────────────────┘── 20022
        │      STORAGE        │   ┌────────────────────┐
20016 ──└────────────────────┘   │    VIDEO SIGNAL     │
                                 │    INPUT UNIT       │── 20023
        ┌────────────────────┐   └────────────────────┘
        │  VIDEO CONTROLLER   │   ┌────────────────────┐
20017 ──└────────────────────┘   │    AUDIO SIGNAL     │
                                 │    INPUT UNIT       │── 20024
        ┌────────────────────┐   └────────────────────┘
        │   ATTITUDE SENSOR   │   ┌────────────────────┐
20018 ──└────────────────────┘   │       IMAGER        │── 20025
                                 └────────────────────┘
```

120

*FIG. 20C*

COMMUNICATION/
DISPLAY FROM
MOBILE
DEVICE

1000    19051    3

20001

PROMPT
(TO AI)

RESPONSE
(FROM AI)

USER'S VOICE OR
USER OPERATION

20010

1140    1139    1140

AUDIO
OUTPUT

USER: 230

FIG. 20D

| TIME AXIS | | MAIN MESSAGE OF PROMPT (NATURAL LANGUAGE TEXT AND NON-NATURAL LANGUAGE INFORMATION SOURCE) | MAIN MESSAGE OF SERVER RESPONSE (NATURAL LANGUAGE TEXT AND NON-NATURAL LANGUAGE INFORMATION SOURCE) |
|---|---|---|---|
| | SETTING PROMPT | Your name is Koto.<br>You are a polite responder.<br>Act as the user's friend.<br>The user's name is Ken. | (NO RESPONSE IN SETTING PROMPT) |
| | 1ST ROUND OF USER PROMPT AND RESPONSE | Can you describe this image, Koto?<br>What season do you think this is?<br><br>20061 | The image is of a swimming pool with a chair and a parasol on the poolside.The swimming pool is filled with water.<br>There is a drink on the table next to the chair.<br>I think it is summer. |
| | 2ND ROUND OF USER PROMPT AND RESPONSE | Yes. I think this is an image of a swimming pool in the summer too.<br>Where in the image is the drink?<br>Show me with a circle.<br><br>20062 | The drink is in this area. |

*FIG. 20E*

| TIME AXIS | | MAIN MESSAGE OF PROMPT (NATURAL LANGUAGE TEXT AND NON−NATURAL LANGUAGE INFORMATION SOURCE) | MAIN MESSAGE OF SERVER RESPONSE (NATURAL LANGUAGE TEXT AND NON−NATURAL LANGUAGE INFORMATION SOURCE) |
|---|---|---|---|
| | 1ST ROUND OF USER PROMPT AND RESPONSE | What is your name? | I have no name. |
| | 2ND ROUND OF USER PROMPT AND RESPONSE | Do you remember the image we talked about on March 14? | Sorry. I don't remember the image you talked about on March 14. |

## FIG. 20F

| TIME AXIS | | MAIN MESSAGE OF PROMPT (NATURAL LANGUAGE TEXT AND NON-NATURAL LANGUAGE INFORMATION SOURCE) | MAIN MESSAGE OF SERVER RESPONSE |
|---|---|---|---|
| | SETTING PROMPT | Your name is Koto. You are a polite responder. Act as the user's friend. The user's name is Ken.<br><br>On March 14, I said the following:<br>"Can you describe this image, Koto? What season do you think this is?"<br><br>20061<br>"Yes. I think this is an image of a swimming pool in the summer too. Where in the image is the drink? Show me with a circle."<br><br>On March 14, you said the following:<br>"The image is of a swimming pool with a chair and a parasol on the poolside. The swimming pool is filled with water. There is a drink on the table next to the chair. I think it is summer."<br>"The drink is in this area."<br><br>20062 | (NO RESPONSE IN SETTING PROMPT)<br><br>RE-SETTING MESSAGE<br><br><br><br>CONVERSATION HISTORY MESSAGE |
| | 1ST ROUND OF USER PROMPT AND RESPONSE | · · · | · · · |

FIG. 20G

| TIME AXIS | | MAIN MESSAGE OF PROMPT (NATURAL LANGUAGE TEXT AND NON-NATURAL LANGUAGE INFORMATION SOURCE) | MAIN MESSAGE OF SERVER RESPONSE (NATURAL LANGUAGE TEXT AND NON-NATURAL LANGUAGE INFORMATION SOURCE) |
|---|---|---|---|
| | SETTING PROMPT | ... | (NO RESPONSE IN SETTING PROMPT) |
| | 1ST ROUND OF USER PROMPT AND RESPONSE | What is your name? | My name is Koto. |
| | 2ND ROUND OF USER PROMPT AND RESPONSE | What did Koto and I talk about on March 14? | On March 14, Ken and I talked about a swimming pool with a chair and a parasol on the poolside. |
| | 3RD ROUND OF USER PROMPT AND RESPONSE | What season did Koto and I talk about on March 14? | On March 14, Ken and I talked about summer. |

*FIG. 20H* 20200

| CHARACTER ID | 1 | 2 | 3 |
|---|---|---|---|
| NAME | Koto | Tom | Necco |
| INITIAL SETTING PROMPT | Your name is Koto.<br>You are a polite responder. Act as the user's friend.<br>The user's name is Ken. | ... | ... |
| CONVERSATION HISTORY 1 | On March 14, I said the following:<br>"Can you describe this image, Koto? What season do you think this is?"<br><br>20061<br><br>"Yes. I think this is an image of a swimming pool in the summer too.<br>Where in the image is the drink? Show me with a circle."<br><br>On March 14, you said the following:<br>"The image is of a swimming pool with a chair and a parasol on the poolside.<br>The swimming pool is filled with water. There is a drink on the table next to the chair.<br>I think it is summer."<br>"The drink is in this area."<br><br>20062 | ... | ... |
| CONVERSATION HISTORY 2 | On March 10, I··· | ... | ... |
| ... | On March 8, I··· | ... | ... |

## INTERNATIONAL SEARCH REPORT

| International application No. |
| --- |
| **PCT/JP2024/002277** |

| A. | CLASSIFICATION OF SUBJECT MATTER |
| --- | --- |

*H04N 13/351*(2018.01)i; *G02B 30/56*(2020.01)i; *H04N 13/275*(2018.01)i; *H04N 13/346*(2018.01)i
FI:  H04N13/351; G02B30/56; H04N13/275; H04N13/346

According to International Patent Classification (IPC) or to both national classification and IPC

| B. | FIELDS SEARCHED |
| --- | --- |

Minimum documentation searched (classification system followed by classification symbols)

H04N13/351; G02B30/56; H04N13/275; H04N13/346

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2022-157377 A (MAXELL LTD.) 14 October 2022 (2022-10-14)<br>paragraphs [0014]-[0110], fig. 1-16 | 10-13, 17-23 |
| Y | US 2023/0074406 A1 (GOOGLE LLC) 09 March 2023 (2023-03-09)<br>paragraphs [0030]-[0136], fig. 1-7 | 10-13, 17-23 |
| Y | JP 2022-180282 A (NAVER CORP.) 06 December 2022 (2022-12-06)<br>paragraphs [0024]-[0083], fig. 1-13 | 10-13, 17-23 |
| A | WO 2022/270636 A1 (MAXELL LTD.) 29 December 2022 (2022-12-29)<br>paragraphs [0006]-[0104], fig. 1-22 | 1-29 |
| A | US 2003/0137730 A1 (FRIDMAN, Sergey) 24 July 2003 (2003-07-24)<br>entire text, all drawings | 1-9 |
| A | JP 2020-170979 A (NIPPON HOSO KYOKAI) 15 October 2020 (2020-10-15)<br>entire text, all drawings | 1-9 |

☑ Further documents are listed in the continuation of Box C.     ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **22 March 2024** | **02 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/002277**

### C. DOCUMENTS CONSIDERED TO BE RELEVANT

| Category* | Citation of document, with indication, where appropriate, of the relevant passages | Relevant to claim No. |
|-----------|-------------------------------------------------------------------------------------|------------------------|
| A | JP 2012-198414 A (SHARP CORP.) 18 October 2012 (2012-10-18)<br>entire text, all drawings | 1-9 |
| A | JP 2013-251669 A (PANASONIC CORP.) 12 December 2013 (2013-12-12)<br>entire text, all drawings | 1-9 |
| A | JP 2003-187261 A (CANON KABUSHIKI KAISHA) 04 July 2003 (2003-07-04)<br>entire text, all drawings | 1-9 |
| A | JP 2009-175866 A (NIPPON HOSO KYOKAI) 06 August 2009 (2009-08-06)<br>entire text, all drawings | 1-9 |
| A | US 11521200 B1 (KHAN, Arif) 06 December 2022 (2022-12-06)<br>entire text, all drawings | 10-29 |

Form PCT/ISA/210 (second sheet) (July 2022)

**INTERNATIONAL SEARCH REPORT**

International application No.

**PCT/JP2024/002277**

| Box No. III | Observations where unity of invention is lacking (Continuation of item 3 of first sheet) |

This International Searching Authority found multiple inventions in this international application, as follows:

Document 4: WO 2022/270636 A1 (MAXELL, LTD.) 29 December 2022 (2022-12-29), paragraphs [0006]-[0104], fig. 1-22 & JP 2023-4010 A

The claims are classified into the two inventions below.
(Invention 1) Claims 1-9
Claims 1-9 have the special technical feature of "an aerial video display device provided with: a video processing unit; a display unit for displaying video subjected to video processing with the video processing unit; and an optical system for generating aerial video on the basis of the video displayed by the display unit, wherein the video processing unit performs video processing on video generated by rendering a virtual 3D space in which an object of a character is disposed, and the virtual 3D space is rendered upon imaging by perspective projection with a virtual 3D space camera set in the virtual 3D space, and the video generated by the rendering and displayed on the display unit is video rendered upon imaging the virtual 3D space in which the object of the character is disposed, with the angle of view of the virtual 3D space camera being set" such that $Lf \geq$ a predetermined value / Pa is satisfied "when the focal length of the lens of the virtual 3D space camera is defined as Lf in terms of 35 mm film, and the diagonal length of a display screen for the aerial video as Pa"; thus these claims are classified as invention 1.

(Invention 2) Claims 10-29
Claims 10-29 share the technical feature of "a display device for displaying a character" with claim 1 classified as invention 1. However, this technical feature does not make a contribution over the prior art in light of the disclosure of document 4 (in particular, see paragraphs [0006] and [0102]), and thus cannot be considered a special technical feature. Apart from this feature, there are not the same or corresponding special technical features between claims 10-29 and claim 1. Furthermore, claims 10-29 do not depend from claim 1. In addition, claims 10-29 are not substantially identical to or similarly closely related to any of the claims classified as invention 1. Accordingly claims 10-29 cannot be identified as invention 1. Meanwhile, claims 10-29 have the special technical feature of "a character display device that enables a conversation with a character, the device being provided with: a display unit capable of displaying a character; a speaker; a microphone; a communication unit; and a control unit, wherein the communication unit is capable of communicating with a server capable of executing inference of a large language model that is artificial intelligence, transmits, to the server, instruction text including text information in a natural language, and receives, from the server, a response including text information in the natural language, and the speaker outputs speech in the natural language by synthesized speech such that the speech sounds like a voice of the character displayed on the display unit to a user"; thus these claims are classified as invention 2.

Thus the number of inventions of the international application as recited in claims 1-29 is two.

Form PCT/ISA/210 (continuation of first sheet) (July 2022)

## INTERNATIONAL SEARCH REPORT

| International application No. |
| --- |
| **PCT/JP2024/002277** |

**Box No. III      Observations where unity of invention is lacking (Continuation of item 3 of first sheet)**

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/002277**

| Patent document cited in search report | | | Publication date (day/month/year) | Patent family member(s) | | | Publication date (day/month/year) |
|---|---|---|---|---|---|---|---|
| JP | 2022-157377 | A | 14 October 2022 | WO 2022/209721 A1 paragraphs [0014]-[0110], fig. 1-16 CN 116635272 A | | | |
| US | 2023/0074406 | A1 | 09 March 2023 | (Family: none) | | | |
| JP | 2022-180282 | A | 06 December 2022 | KR 10-2022-0158573 A | | | |
| WO | 2022/270636 | A1 | 29 December 2022 | JP 2023-4010 A | | | |
| US | 2003/0137730 | A1 | 24 July 2003 | US 2004/0184145 A1 entire text, all drawings | | | |
| JP | 2020-170979 | A | 15 October 2020 | (Family: none) | | | |
| JP | 2012-198414 | A | 18 October 2012 | WO 2012/127924 A1 entire text, all drawings | | | |
| JP | 2013-251669 | A | 12 December 2013 | (Family: none) | | | |
| JP | 2003-187261 | A | 04 July 2003 | (Family: none) | | | |
| JP | 2009-175866 | A | 06 August 2009 | (Family: none) | | | |
| US | 11521200 | B1 | 06 December 2022 | WO 2023/034677 A1 entire text, all drawings WO 2023/034735 A1 | | | |

Form PCT/ISA/210 (patent family annex) (July 2022)

**REFERENCES CITED IN THE DESCRIPTION**

**Patent documents cited in the description**

- JP 2019128722 A
- JP 2001033609 A
- JP 2001264525 A
- JP 2005181555 A
- JP 2008070898 A
- JP 2009229942 A

- JP 2017033005 A
- JP 2019133110 A
- JP 2017067933 A
- WO 2009131128 A
- JP 2014216761 A